# EUROPEAN PATENT APPLICATION

(11) **EP 4 563 668 A1**
(43) Date of publication of application: **04.06.2025**
(21) Application number: 23846693.2
(22) Date of filing: 28.07.2023
(51) Int. Cl.: C09D 175/04, B32B 15/095, C08G 18/10, C08G 18/28, C08G 18/38, C08G 18/62, C08G 18/77, C09D 7/40, C09D 7/63, C09D 133/14, C09D 201/00

(54) **MODIFIED POLYISOCYANATE, COATING AND COATED METAL MATERIAL**

(30) Priority: 28.07.2022 JP 2022120816; 30.09.2022 JP 2022158903; 29.03.2023 JP 2023052779
(71) Applicant: Kansai Paint Co., Ltd., Amagasaki-shi, Hyogo 661-8555 (JP)
(72) Inventor: KOBATA, Masami, Hiratsuka-shi, Kanagawa 254-8562 (JP)
(74) Representative: Müller-Boré & Partner Patentanwälte PartG mbB
(86) International application number: PCT/JP2023/027830
(87) International publication number: WO 2024/024963

(57) **Abstract**

The problem to be solved by the present invention is to provide a modified polyisocyanate that has high adhesion even to non-ferrous metal and that is applicable even to single-coat paints. The present invention provides a modified polyisocyanate, a method for producing the modified polyisocyanate, and a coating comprising the modified polyisocyanate. The modified polyisocyanate is a reaction product formed from components comprising, as starting materials, a primary amino group-containing alkoxysilane (a1), an unsaturated carboxylic acid alkyl ester (a2) or a saturated carboxylic acid alkyl ester (a3), and a polyisocyanate (a4), wherein the unsaturated carboxylic acid alkyl ester (a2) is at least one member selected from the group consisting of a branched alkyl ester of an unsaturated dicarboxylic acid (a2-1), and a branched alkyl ester or alkyl ester with a cyclic structure, each optionally containing a heteroatom, of an unsaturated monocarboxylic acid (a2-2).

## Description

### Technical Field

The present invention relates to a modified polyisocyanate, a coating, and a coated metal material.

### Background Art

Polyisocyanate compounds are highly reactive and are widely used as starting materials for chemical products, such as polyurethane foams, sealing materials, binders, and paints. In recent years, modified polyisocyanates obtained by various modifications have been developed according to the functions required of such chemical products.

As an example of modified polyisocyanates, PTL 1 discloses a silyl-isocyanate obtained by reacting a polyisocyanate with a silane starting material, and discloses that the silyl-isocyanate has excellent adhesion to glass and is useful as a fixing agent for use in combination with a polyurethane resin.

PTL 2 discloses a reaction product of an amino-alkylalkoxysilane and a maleic acid ester or a fumaric acid ester, and discloses that the reaction product is useful as a modifier for polyisocyanates.

PTL 3 discloses a crosslinkable-silyl-group-containing urethane resin mixture obtained by reacting a compound containing one or more active hydrogens and one or more crosslinkable silyl groups per molecule obtained by reacting a compound containing two or more active hydrogens and one or more crosslinkable silyl groups per molecule with an acrylic compound and/or a methacrylic compound, with an isocyanate group-containing urethane prepolymer obtained by reacting an organic polyisocyanate with a polymer polyol under conditions in which the isocyanate groups are in excess relative to the active hydrogens.

### Citation List

### Patent Literature

PTL 1: JPH06-212141A
PTL 2: JPH06-211879A
PTL 3: JP2001-323040A

### Summary of Invention

### Technical Problem

In recent years, there have been expectations for the development of direct-to-metal coatings. Direct-to-metal coatings refer to coatings that form a protective coating film having both corrosion resistance and weather resistance by simply applying one type of a paint directly to a metal surface. Painting metal is usually performed by a multi-layer finish by first applying an undercoat paint to inhibit rust, and then applying thereto a topcoat paint that achieves excellent weather resistance and appearance. In contrast, direct-to-metal coatings achieve the desired performance with a single-layer finish and are thus advantageous in terms of reducing the number of processes and shortening the production time. However, typically, corrosion resistance and weather resistance of a coating film are in a contradictory relationship, and achieving both at the same time is difficult. Furthermore, coating films adhere less easily to non-ferrous metal than to iron, and coating films on non-ferrous metal easily peel off. Accordingly, it is extremely difficult to develop a paint that has excellent adhesion to non-ferrous metal, in addition to having corrosion resistance and weather resistance.

Although various modified polyisocyanates are disclosed in PTL 1 to PTL 3 above, there is no disclosure about a modified polyisocyanate that has excellent adhesion even to non-ferrous metal and that is applicable even to a single-coat paint.

### Solution to Problem

The present inventors have conducted extensive research into the above problems and come to the use of a modified polyisocyanate modified with an alkoxysilane having a primary amino group and a specific unsaturated carboxylic acid alkyl ester or a saturated carboxylic acid alkyl ester. The inventors then found that this modified polyisocyanate is excellent as a material for adhesion to metal, and that a coating comprising this modified polyisocyanate has excellent adhesion not only to iron, but also to non-ferrous metal.

Specifically, the present invention relates to the following.

### Item 1.

A modified polyisocyanate for use with an active-hydrogen-containing compound as a curing agent for coatings,
the modified polyisocyanate being a reaction product formed from components comprising, as starting materials, a primary amino group-containing alkoxysilane (a1), an unsaturated carboxylic acid alkyl ester (a2) or a saturated carboxylic acid alkyl ester (a3), and a polyisocyanate (a4),
wherein the unsaturated carboxylic acid alkyl ester (a2) is at least one member selected from the group consisting of a branched alkyl ester of an unsaturated dicarboxylic acid (a2-1), and
a branched alkyl ester or alkyl ester with a cyclic structure, each optionally containing a heteroatom, of an unsaturated monocarboxylic acid (a2-2).

### Item 2.

The modified polyisocyanate according to Item 1, wherein the primary amino group-containing alkoxysilane (a1) is a compound represented by the following formula (1): 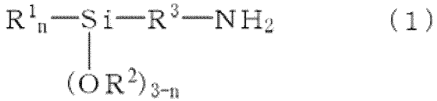
wherein in formula (1),
R¹ and R² are the same or different, and each represents a C₁-C₁₈ optionally substituted linear or branched alkyl group, cycloalkyl group, alkenyl group, cycloalkenyl group, alkynyl group,
cycloalkynyl group, aryl group, or heteroaryl group, R³ is a C₁-C₈, preferably C₁-C₅ linear or branched alkylene group, and n is an integer of 0 to 2.

### Item 3.

The modified polyisocyanate according to Item 1 or 2, wherein the branched alkyl ester of an unsaturated dicarboxylic acid (a2-1) is a compound represented by the following formula (2).

R⁴O-C(=O)-HC=CH-C(=O) -OR⁵ (2)

In formula (2), R⁴ and R⁵ are the same or different, and each represents a C₁-C₈ branched alkyl group.

### Item 4.

The modified polyisocyanate according to Item 1 or 2, wherein the branched alkyl ester or alkyl ester with a cyclic structure, each optionally containing a heteroatom, of an unsaturated monocarboxylic acid (a2-2) is a compound represented by the following formula (3).

H₂C=CH-C(=O)-OR⁶ (3)

In formula (3), R⁶ is a C₃-C₁₈ branched alkyl group or alkyl group with a cyclic structure, or a C₁-C₁₈ group obtained by incorporating a heteroatom (e.g., an oxygen atom, nitrogen atom, or sulfur atom) into the molecule of an alkyl group or arylalkyl group with a branched or cyclic structure.

### Item 5.

The modified polyisocyanate according to Item 1 or 2, wherein the saturated carboxylic acid alkyl ester (a3) is a compound represented by the following formula (4).

R⁷-C(=O)-OR⁸ (4)

In formula (4), R⁷ and R⁸ are the same or different, and each represents a C₁-C₁₈ alkyl group having no unsaturated group, or a C₁-C₁₈ group that is obtained by incorporating a heteroatom, such as an oxygen atom, nitrogen atom, or sulfur atom, into the molecule of an alkyl group or arylalkyl group and that has no unsaturated group.

### Item 6.

The modified polyisocyanate according to any one of Items 1 to 4, having a structure in which a secondary amino group of an N-modified alkoxysilane obtained by adducting a primary amino group of the alkoxysilane (a1) to an unsaturated carbon-carbon bond of the unsaturated carboxylic acid alkyl ester (a2) is adducted to at least one isocyanate group of the polyisocyanate (a4).

### Item 7.

The modified polyisocyanate according to any one of Items 1, 2, and 5, having a structure in which a secondary amide group of an N-modified alkoxysilane obtained by reacting a primary amino group of the alkoxysilane (a1) with an ester group of the saturated carboxylic acid alkyl ester (a3) is adducted to at least one isocyanate group of the polyisocyanate (a4).

### Item 8.

The modified polyisocyanate according to Item 6, wherein the unsaturated carboxylic acid alkyl ester (a2) is the branched alkyl ester of an unsaturated dicarboxylic acid (a2-1), and the N-modified alkoxysilane is a compound represented by the following formula (5).

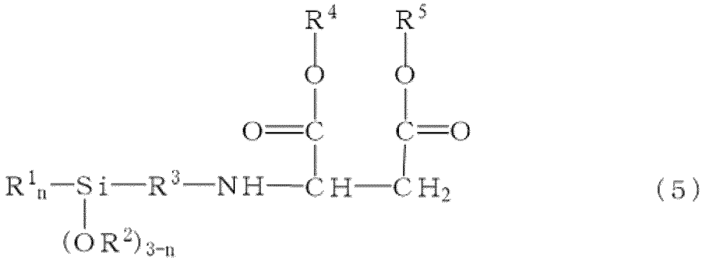

In formula (5), R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group, R³ is a C₁-C₈, preferably C₁-C₅ linear or branched alkylene group, R⁴ and R⁵ are the same or different, and each represents a C₁-C₈ branched alkyl group, and n is an integer of 0 to 2.

### Item 9.

The modified polyisocyanate according to any one of Items 6 to 8, wherein the reaction ratio of the N-modified alkoxysilane having a secondary amino group to the polyisocyanate (a4) is such that the amount of the secondary amino group is 40 mol or less relative to 100 mol of the isocyanate groups.

### Item 10.

The modified polyisocyanate according to Item 6, wherein the unsaturated carboxylic acid alkyl ester (a2) is the branched alkyl ester or alkyl ester with a cyclic structure, each optionally containing a heteroatom, of an unsaturated monocarboxylic acid (a2-2), and the N-modified alkoxysilane is a compound represented by the following formula (6).

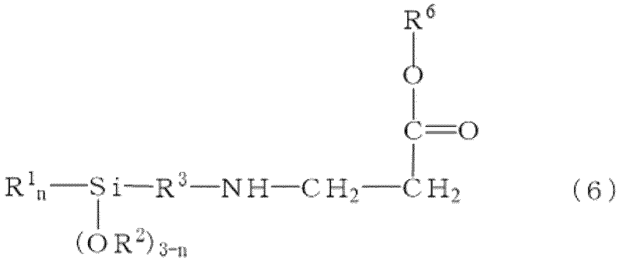

In formula (6), R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group, R³ is a C₁-C₈, preferably C₁-C₅ linear or branched alkylene group, R⁶ is a C₃-C₁₈ alkyl group with a branched or cyclic structure optionally containing a heteroatom, or a C₁-C₁₈ group obtained by incorporating a heteroatom, such as an oxygen atom, nitrogen atom, or sulfur atom, into the molecule of an alkyl group or arylalkyl group with a branched or cyclic structure, and n is an integer of 0 to 2.

### Item 11.

The modified polyisocyanate according to any one of Items 6 to 10, wherein the reaction ratio of a mixture containing the N-modified alkoxysilane having a secondary amino group to the polyisocyanate (a4) is such that the total mole number of the primary amino group and the secondary amino group is 40 mol or less relative to 100 mol of the isocyanate groups.

### Item 12.

The modified polyisocyanate according to Item 7, wherein the N-modified alkoxysilane obtained by reacting the alkoxysilane (a1) with the saturated carboxylic acid alkyl ester (a3) is an N-acylated product having a secondary amide group represented by the following formula (7).

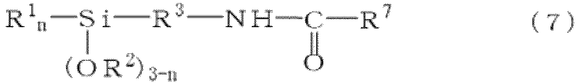

In formula (7), R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group, n is an integer of 0 to 2, R³ is a C₁-C₈, preferably C₁-C₅ linear or branched alkylene group, and R⁷ is a C₁-C₁₈ alkyl group having no unsaturated group, or a C₁-C₁₈ group that is obtained by incorporating a heteroatom, such as an oxygen atom, nitrogen atom, or sulfur atom, into the molecule of an alkyl group and that has no unsaturated group.

### Item 13.

The modified polyisocyanate according to Item 1 or 12, which is produced by
step (1) of reacting the primary amino group-containing alkoxysilane (a1) with the saturated carboxylic acid alkyl ester (a3) in the presence of a basic catalyst;
step (2) of adding an acidic compound;
step (3) of removing part or all of an alcohol formed as a by-product to prepare an intermediate containing the N-acylated product represented by the following formula (7); and
step (4) of reacting the intermediate with the polyisocyanate (a4).

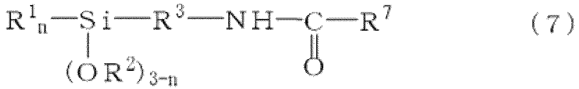

In formula (7), R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group, R³ is a C₁-C₈, preferably C₁-C₅ linear or branched alkylene group, n is an integer of 0 to 2, and R⁷ is a C₁-C₁₈ alkyl group having no unsaturated group, or a C₁-C₁₈ group that is obtained by incorporating a heteroatom, such as an oxygen atom, nitrogen atom, or sulfur atom, into the molecule of an alkyl group and that has no unsaturated group.

### Item 14.

The modified polyisocyanate according to Item 12 or 13, wherein the reaction ratio of the N-acylated product to the polyisocyanate (a4) is such that the total mole number of the secondary amide group and the primary amino group is 40 mol or less relative to 100 mol of the isocyanate groups.

### Item 15.

A method for producing the modified polyisocyanate of Item 1, comprising:
step (1) of reacting a primary amino group-containing alkoxysilane (a1) with a saturated carboxylic acid alkyl ester (a3) in the presence of a basic catalyst;
step (2) of adding an acidic compound;
step (3) of removing part or all of an alcohol formed as a by-product to prepare an intermediate containing an N-acylated product represented by the following formula (7); and
step (4) of reacting the intermediate with a polyisocyanate (a4).

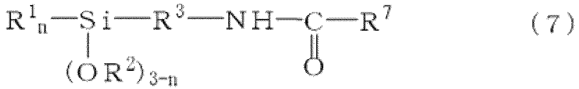

In formula (7), R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group, R³ is a C₁-C₈, preferably C₁-C₅ linear or branched alkylene group, n is an integer of 0 to 2, and R⁷ is a C₁-C₁₈ alkyl group having no unsaturated group, or a C₁-C₁₈ group that is obtained by incorporating a heteroatom, such as an oxygen atom, nitrogen atom, or sulfur atom, into the molecule of an alkyl group and that has no unsaturated group.

### Item 16.

The modified polyisocyanate according to Item 6, wherein the unsaturated carboxylic acid alkyl ester (a2) is the branched alkyl ester or alkyl ester with a cyclic structure, each optionally containing a heteroatom, of an unsaturated monocarboxylic acid (a2-2), and the reaction of the N-modified alkoxysilane having a secondary amino group with the polyisocyanate (a4) is carried out in the presence of the primary amino group-containing alkoxysilane (a1) and a tertiary amino group-containing compound represented by the following formula (8), which is a by-product.

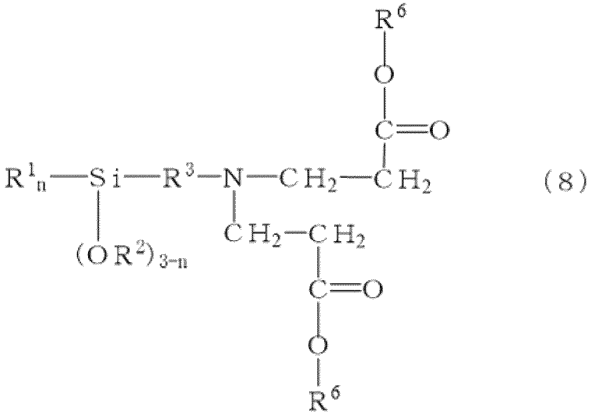

In formula (8), R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group, R³ is a C₁-C₈, preferably C₁-C₅ linear or branched alkylene group, R⁶ is a C₃-C₁₈ alkyl group with a branched or cyclic structure optionally containing a heteroatom, or a C₁-C₁₈ group obtained by incorporating a heteroatom, such as an oxygen atom, nitrogen atom, or sulfur atom, into the molecule of an alkyl group or arylalkyl group with a branched or cyclic structure, and n is an integer of 0 to 2.

### Item 17.

The modified polyisocyanate according to any one of Items 1, 2, 5, 7, 12, 13, and 14, wherein the saturated carboxylic acid alkyl ester (a3) is an alkyl ester of a linear carboxylic acid having a structure in which two or more hydrogen atoms are present at the α-position, or an alkyl ester of a branched carboxylic acid having a structure in which two hydrogen atoms are present at the α-position.

### Item 18.

The method for producing the modified polyisocyanate according to Item 15, wherein the saturated carboxylic acid alkyl ester (a3) is an alkyl ester of a linear carboxylic acid having two or more hydrogen atoms at the α-position.

### Item 19.

A coating comprising an active-hydrogen-containing compound and the modified polyisocyanate of any one of Items 1 to 14 and 16 to 17.

### Item 20.

The coating according to Item 19, wherein the active-hydrogen-containing compound comprises an acrylic polyol and/or a bisaspartic acid ester derivative.

### Item 21.

The coating according to Item 19 or 20, further comprising at least one member selected from the group consisting of a rust inhibitor, a catalyst, a color pigment, and an extender pigment.

### Item 22.

The coating according to any one of Items 19 to 21, which is a single-coat paint.

### Item 23.

A protective coating film obtained by curing the coating of any one of Items 19 to 22.

### Item 24.

A coated metal material, comprising the protective coating film of Item 23 on a metal substrate.

### Advantageous Effects of Invention

In the present specification, the singular forms (e.g., a, an, and the) shall include both the singular and plural forms, unless otherwise indicated herein or clearly contradicted by context. The modified polyisocyanate of the present invention has excellent storage stability and can be used as a metal adhesion improver for coatings. By using the modified polyisocyanate, a coating that forms a protective coating film having excellent adhesion not only to iron but also to a non-ferrous metal is obtained.

### Description of Embodiments

The modified polyisocyanate of the present invention is a reaction product formed from components comprising, as starting materials, a primary amino group-containing alkoxysilane (a1), an unsaturated carboxylic acid alkyl ester (a2) or a saturated carboxylic acid alkyl ester (a3), and a polyisocyanate (a4).

The starting materials of the modified polyisocyanate of the present invention comprise, as a carboxylic acid alkyl ester, the unsaturated carboxylic acid alkyl ester (a2) or the saturated carboxylic acid alkyl ester (a3). In a first embodiment, the present invention provides a modified polyisocyanate formed from the unsaturated carboxylic acid alkyl ester (a2) as a starting material (referred to as "the modified polyisocyanate (X)"). In a second embodiment, the present invention provides a modified polyisocyanate formed from the saturated carboxylic acid alkyl ester (a3) as a starting material (referred to as "the modified polyisocyanate (Y)").

When the unsaturated carboxylic acid alkyl ester (a2) is used as a carboxylic acid alkyl ester, the unsaturated carboxylic acid alkyl ester (a2) is at least one member selected from the group consisting of
a branched alkyl ester of an unsaturated dicarboxylic acid (a2-1) and
a branched alkyl ester or alkyl ester with a cyclic structure, each optionally containing a heteroatom, of an unsaturated monocarboxylic acid (a2-2).

In the present invention, the unsaturated carboxylic acid alkyl ester (a2) or the saturated carboxylic acid alkyl ester (a3) is used as a modifying agent, whereby a modified polyisocyanate that can be stably diluted with an organic solvent and has excellent storage stability can be obtained, and a combined use with the active-hydrogen-group-containing compound described below enables the formation of a protective coating film having excellent adhesion to various metal substrates.

In the present invention, when a group in general formulas, such as Formula (1) and Formula (5), is substituted, the substituent may be, for example, an alkyl group, an alkenyl group, an alkynyl group, an alkoxy group, an amino group, a monoalkylamino group, a dialkylamino group, a carboxyl group, a hydroxy group, a hydroxyalkyl group, a hydroxyalkoxy group, an aryl group, an aryloxy group, and a heteroaryl group, unless otherwise specified.

In the present invention, each substituent may be as follows, unless otherwise specified.

An alkyl group refers to a linear, branched, or cyclic saturated hydrocarbon group, unless otherwise specified. The number of carbon atoms in the alkyl group is not particularly limited and may be, for example, 1 to 18, 1 to 10, 1 to 8, 1 to 6, 1 to 4, and 1 to 3. Examples of such alkyl groups include a methyl group, an ethyl group, an n-propyl group, an i-propyl group, an n-butyl group, an i-butyl group, a t-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, a cyclopropyl group, a cyclobutyl group, a cyclopentyl group, a cyclohexyl group, a cycloheptyl group, and a cyclooctyl group.

A cycloalkyl group can refer to a cyclic hydrocarbon group in which all carbon-carbon bonds are single bonds. The carbon number is, for example, 3 to 8. More specific examples of cycloalkyl groups include a cyclopropyl group, a cyclobutyl group, a cyclopentyl group, a cyclohexyl group, a cycloheptyl group, and a cyclooctyl group.

A hydroxyalkyl group may be, for example, a group in which an alkyl group mentioned above is substituted with one or more (e.g., one to three, one to two, or one) hydroxy groups.

An alkoxy group may be, for example, an alkoxy group whose alkyl moiety is an alkyl group mentioned above.

A hydroxyalkoxy group may be, for example, a group in which an alkoxy group mentioned above is substituted with one or more (e.g., one to three, one to two, or one) hydroxy groups.

An alkenyl group refers to a linear or branched hydrocarbon group having a carbon-carbon double bond. The number of carbon atoms in the alkenyl group is not particularly limited and may be, for example, 2 to 18, 2 to 10, 2 to 8, 2 to 6, 2 to 4, and 2 to 3. The number of carbon-carbon double bonds in the alkenyl group is not limited and may be, for example, 1 to 2, and preferably 1. Examples of such alkenyl groups include a vinyl group, a 1-propenyl group, a 2-propenyl group, a 1-butenyl group, a 1-pentenyl group, a 1,4-pentadienyl group, a 1-hexenyl group, a 1-heptenyl group, a 1-octenyl group, a 1-nonenyl group, a 1-decenyl group, a 2-undecenyl group, a 3-dodecenyl group, a 1-tridecenyl group, a 2-tetradecenyl group, a 3-pentadecenyl group, a 1-hexadecenyl group, a 2-heptadecenyl group, and a 3-octadecenyl group.

An alkynyl group refers to a linear or branched hydrocarbon group having a carbon-carbon triple bond. The number of carbon atoms in the alkynyl group is not particularly limited and may be, for example, 2 to 18, 2 to 10, 2 to 8, 2 to 6, 2 to 4, and 2 to 3. The number of carbon-carbon triple bonds in the alkynyl group is not limited and may be, for example, 1 or 2, and preferably 1. Examples of such alkynyl groups include an ethynyl group, a 1-propynyl group, a 2-propynyl group, a 1-butynyl group, a 1-pentynyl group, a 1,4-pentadiynyl group, a 1-hexynyl group, a 1-heptynyl group, a 1-octynyl group, a 1-nonynyl group, a 1-decynyl group, a 2-undecynyl group, a 3-dodecynyl group, a 1-tridecynyl group, a 2-tetradecynyl group, a 3-pentadecynyl group, a 1-hexadecynyl group, a 2-heptadecynyl group, and a 3-octadecynyl group.

A cycloalkenyl group may be a cyclic hydrocarbon group having a carbon-carbon double bond and in which all other carbon-carbon bonds are single bonds. The carbon number is, for example, 3 to 8. The number of carbon-carbon double bonds in the cycloalkenyl group is not limited and may be, for example, 1 to 2, and preferably 1. More specific examples of such cycloalkyl groups include a cyclopropenyl group, a cyclobutenyl group, a cyclopentenyl group, a cyclohexenyl group, a cyclohexedienyl group, a cycloheptenyl group, and a cyclooctenyl group.

An aryl group refers to a monovalent group formed by removing one hydrogen atom from a monocyclic or polycyclic aromatic hydrocarbon compound, and may be, for example, those having 6 to 18 carbon atoms. In the present invention, the monocyclic or polycyclic aromatic hydrocarbon compound may be any hydrocarbon containing an aromatic ring, and may be a group with a cyclic structure substituted with one or more (e.g., one to three, one to two, or one) acyclic hydrocarbons (e.g., linear or branched alkyl groups, alkenyl groups, and alkynyl groups (preferably linear or branched alkyl groups etc.)). Similarly, in the present invention, the aryl group also includes not only a group with a cyclic structure, but also a group with a cyclic structure substituted with one or more acyclic hydrocarbons. Examples of the aryl groups include a phenyl group, a naphthyl group, an anthracenyl group, a diphenyl group, a methylphenyl group, a dimethylphenyl group, and a dodecylphenyl group.

An arylalkyl group refers to, for example, an alkyl group mentioned above having one or more (typically one) aryl groups.

A heteroaryl group refers to, for example, a 5- to 14-membered saturated or unsaturated group with a cyclic structure having at least one (e.g., one to three, one to two, or one) member selected from the group consisting of an oxygen atom, a nitrogen atom, and a sulfur atom. Examples include a tetrahydrofuryl group, a dihydrobenzofuranyl group, a pyridinyl group, a pyrimidinyl group, a thiophenyl group, an oxathiolanyl group, a quinolinyl group, and a benzoquinolinyl group. The heteroaryl group may be a monocyclic or bicyclic group.

An alkyl group with a cyclic structure refers to a hydrocarbon group that has a cyclic structure in at least a part of its structure. It is preferable that the group does not have a carbon-carbon double bond. The alkyl group with a cyclic structure may be a group formed of a hydrocarbon with a cyclic structure (e.g., a cycloalkyl group or a bicycloalkyl group), or may be a group in which the group formed of a hydrocarbon with a cyclic structure is substituted with (e.g., one to five, preferably one to four) hydrocarbon groups (e.g., alkyl groups (preferably C₁-C₃ alkyl groups)). The number of carbon atoms in the alkyl group with a cyclic structure is not limited, and may be, for example, 6 to 23, and preferably 6 to 11.

A bicycloalkyl group can refer to a monovalent group obtained by removing one hydrogen atom from a C₅-C₈ fused ring. Examples include a bicyclo[1.1.1]pentanyl group, a bicyclo[2.1.1]hexanyl group, a bicyclo[2.2.1]heptanyl group, and a bicyclo[2.2.2]octanyl group.

### Primary amino group-containing alkoxysilane (a1)

In the present invention, the primary amino group-containing alkoxysilane (a1) is a compound represented by the following formula (1).

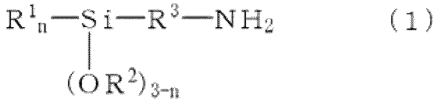

In formula (1), R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group; R³ is a C₁-C₈, preferably C₁-C₅ linear or branched alkylene group; and n is an integer of 0 to 2.

Specific examples of the compound (a1) include 3-aminopropyltrimethoxysilane, 3-aminopropyltriethoxysilane, 3-aminopropyl-methyldiethoxysilane, 3-aminopropylmethyldimethoxysilane, 4-amino-3,3-dimethylbutyltrimethoxysilane, 4-amino-3,3-dimethylbutyltriethoxysilane, and combinations thereof. Particularly preferred are 3-aminopropyltrimethoxysilane and 3-aminopropyltriethoxysilane.

### Unsaturated carboxylic acid alkyl ester (a2)

In the present invention, the unsaturated carboxylic acid alkyl ester (a2) is at least one member selected from the group consisting of
a branched alkyl ester of an unsaturated dicarboxylic acid (a2-1) and
a branched alkyl ester or alkyl ester with a cyclic structure, each optionally containing a heteroatom, of an unsaturated monocarboxylic acid (a2-2).

### Branched alkyl ester of an unsaturated dicarboxylic acid (a2-1)

The branched alkyl ester of an unsaturated dicarboxylic acid (a2-1) is a branched alkyl esterified product of fumaric acid or maleic acid, and may be, for example, a compound represented by the following formula (2).

R⁴O-C(=O)-HC=CH-C(=O)-OR⁵ (2)

In formula (2), R⁴ and R⁵ are the same or different, and each represents a C₁-C₈ branched alkyl group.

In the present specification, the term "branched alkyl group" refers to an alkyl group in which the carbon skeleton constituting the alkyl group is branched. Examples of the branched alkyl groups can include an i-propyl group, a 1-methylpropyl group, an i-butyl group, a t-butyl group, an i-pentyl group, a t-pentyl group, and a 2-ethylhexyl group.

### Branched alkyl ester or alkyl ester with a cyclic structure, each optionally containing a heteroatom, of an unsaturated monocarboxylic acid (a2-2)

In the present invention, the branched alkyl ester or alkyl ester with a cyclic structure, each optionally containing a heteroatom, of an unsaturated monocarboxylic acid (a2-2) is specifically a compound represented by the following formula (3). H₂C=CH-C(=O)-OR⁶ (3)

In formula (3), R⁶ is a C₃-C₁₈ branched alkyl group or alkyl group with a cyclic structure, or a C₁-C₁₈ group obtained by incorporating a heteroatom, such as an oxygen atom, nitrogen atom, or sulfur atom, into the molecule of an alkyl group with a branched or cyclic structure.

Examples of the branched alkyl groups include an i-propyl group, a 1-methylpropyl group, an i-butyl group, a t-butyl group, an i-pentyl group, a t-pentyl group, a 2-ethylhexyl group, an i-nonyl group, an i-decyl group, an i-tridecyl group, and an i-stearyl group. Examples of the alkyl group with a cyclic structure include a cyclopropyl group, a cyclobutyl group, a cyclopentyl group, a cyclohexyl group, a phenyl group, a benzyl group, a trimethylcyclohexyl group, an isobornyl group, a dicyclopentanyl group, and an adamantyl group.

A group obtained by incorporating a heteroatom, such as an oxygen atom, nitrogen atom, or sulfur atom, into the molecule of an alkyl group or arylalkyl group refers to a group equivalent to a group in which the carbon atoms in an alkyl group or arylalkyl group (typically carbon atoms other than those at the terminal ends) (for the arylalkyl group, typically carbon atoms in the alkyl group moiety) are partially substituted with a heteroatom or with a group consisting of a heteroatom and hydrogen (for example, -O-, -N=, -NH-, or -S-). For example, a dimethylaminoethyl group is equivalent to a group in which the carbon atom at the 3-position of an isopentyl group is substituted with -N=. The substitution of the carbon atom with a heteroatom (for example, an oxygen atom, nitrogen atom, or sulfur atom) or with a group consisting of a heteroatom and hydrogen can be present at one or more positions (for example, one to three positions, one to two positions, or one position). The number of carbon atoms in the "group obtained by incorporating a heteroatom into the molecule of an alkyl group or arylalkyl group" refers to the number of carbon atoms in a structure in which some of the carbon atoms in an alkyl group or arylalkyl group are substituted with a heteroatom or a group consisting of a heteroatom and hydrogen (for example, the number of carbon atoms in a dimethylaminoethyl group is four). Examples of the group obtained by incorporating a heteroatom into the molecule of an alkyl group include a tetrahydrofurfuryl group, a phenoxyethyl group, and a dimethylaminoethyl group.

### Saturated carboxylic acid alkyl ester (a3)

In the present invention, the saturated carboxylic acid alkyl ester (a3) may be, for example, a compound represented by the following formula (4).

R⁷-C(=O)-OR⁸ (4)

In formula (4), R⁷ and R⁸ are the same or different, and each represents a C₁-C₁₈ alkyl group or a C₁-C₁₈ group obtained by incorporating a heteroatom, such as an oxygen atom, nitrogen atom, or sulfur atom, into the molecule of an alkyl group. The alkyl group or the group obtained by incorporating a heteroatom, such as an oxygen atom, nitrogen atom, or sulfur atom, into the molecule of an alkyl group, represented by R⁷ or R⁸, has no unsaturated group.

Examples of the alkyl group include a methyl group, an ethyl group, an n-propyl group, an i-propyl group, a 1-methylpropyl group, an n-butyl group, an i-butyl group, a t-butyl group, an n-pentyl group, an i-pentyl group, a t-pentyl group, an n-hexyl group, an n-heptyl group, an n-octyl group, a 2-ethylhexyl group, an n-nonyl group, an i-nonyl group, an n-decyl group, an i-decyl group, an n-undecyl group, an n-dodecyl group, an i-tridecyl group, an i-stearyl group, a cyclopropyl group, a cyclobutyl group, a cyclopentyl group, a cyclohexyl group, a trimethylcyclohexyl group, an isobornyl group, an adamantyl group, and a 2,2,4-trimethylpentyl group. Examples of the group obtained by incorporating a heteroatom into the molecule of an alkyl group or arylalkyl group include a tetrahydrofurfuryl group, a phenoxyethyl group, and a dimethylaminoethyl group.

Specific examples of the saturated carboxylic acid alkyl ester (a3) include methyl acetate, ethyl acetate, n-propyl acetate, i-propyl acetate, n-butyl acetate, i-butyl acetate, n-pentyl acetate, i-pentyl acetate, cyclohexyl acetate, 2-ethylbutyl acetate, 2-ethylhexyl acetate, 1-methylpentyl acetate (alternate name: sec-hexyl acetate), 2-methoxyethyl acetate, 2-ethoxyethyl acetate, 3-methoxybutyl acetate, 3-ethoxybutyl acetate, methyl propionate, ethyl propionate, n-propyl propionate, i-propyl propionate, n-butyl propionate, i-butyl propionate, n-pentyl propionate, i-pentyl propionate, methyl butyrate, ethyl butyrate, n-propyl butyrate, i-propyl butyrate, n-butyl butyrate, i-butyl butyrate, t-butyl butyrate, methyl valerate, ethyl valerate, methyl octanoate, methyl laurate, methoxypropyl acetate, ethyl 3-ethoxypropionate, butyl glycol acetate, butyl diglycol acetate, methyl i-valerate, ethyl i-valerate, methyl 3,3,5-trimethylhexanoate, methyl i-butyrate, ethyl i-butyrate, i-butyl i-butyrate, n-butyl i-butyrate, t-butyl i-butyrate, methyl 2-ethylhexanoate, methyl pivalate, ethyl 2-hydroxy-2-methylpropionate, methyl neodecanoate, and combinations thereof.

The saturated carboxylic acid alkyl ester (a3) is preferably an alkyl ester of a linear carboxylic acid having a structure in which two or more hydrogen atoms are present at the α-position, or an alkyl ester of a branched carboxylic acid having a structure in which two hydrogen atoms are present at the α-position. The carboxylic acid alkyl esters having such structures are less affected by steric hindrance at the α-position compared to an alkyl ester with a branched structure in which only one hydrogen atom is present at the α-position, and is therefore preferable because the reaction with the alkoxysilane (a1) can proceed at an appropriate rate.

Specific examples of the alkyl ester of a linear carboxylic acid having a structure in which two or more hydrogen atoms are present at the α-position include methyl acetate, ethyl acetate, n-propyl acetate, i-propyl acetate, n-butyl acetate, i-butyl acetate, n-pentyl acetate, i-pentyl acetate, cyclohexyl acetate, 2-ethylbutyl acetate, 2-ethylhexyl acetate, 1-methylpentyl acetate (alternate name: sec-hexyl acetate), 2-methoxyethyl acetate, 2-ethoxyethyl acetate, 3-methoxybutyl acetate, 3-ethoxybutyl acetate, methyl propionate, ethyl propionate, n-propyl propionate, i-propyl propionate, n-butyl propionate, i-butyl propionate, n-pentyl propionate, i-pentyl propionate, methyl butyrate, ethyl butyrate, n-propyl butyrate, i-propyl butyrate, n-butyl butyrate, i-butyl butyrate, t-butyl butyrate, methyl valerate, ethyl valerate, methyl octanoate, methyl laurate, methoxypropyl acetate, ethyl 3-ethoxypropionate, butyl glycol acetate, butyl diglycol acetate, and combinations thereof.

Specific examples of the alkyl ester of a branched carboxylic acid having a structure in which two hydrogen atoms are present at the α-position include methyl i-valerate, ethyl i-valerate, methyl 3,3,5-trimethylhexanoate, and combinations thereof.

### Polyisocyanate (a4)

In the present invention, the polyisocyanate (a4) is a compound having at least two isocyanate groups per molecule. Examples of the polyisocyanate (a4) include aliphatic polyisocyanates, alicyclic polyisocyanates, aromatic aliphatic polyisocyanates, aromatic polyisocyanates, and derivatives thereof, as well as combinations thereof.

Examples of aliphatic polyisocyanates include aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); and aliphatic triisocyanates, such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of alicyclic polyisocyanates include alicyclic diisocyanates, such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or mixtures thereof, and methylenebis(4,1-cyclohexanediyl)diisocyanate (common name: hydrogenated MDI), and norbornane diisocyanate; and alicyclic triisocyanates, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethy-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)heptane, and 6-(2-isocyanatoethyl)-2-isocyanatomethyl-2-(3-isocyanatopropyl)-bicyclo(2.2.1)heptane.

Examples of aromatic-aliphatic polyisocyanates include aromatic-aliphatic diisocyanates, such as methylenebis(4,1-phenylene)diisocyanate (common name: MDI), 1,3- or 1,4-xylylene diisocyanate or mixtures thereof, ω,ω'-diisocyanato-1,4-diethylbenzene, and 1,3- or 1,4-bis(1-isocyanato-1-methylethyl)benzene (common name: tetramethylxylylene diisocyanate) or mixtures thereof; and aromatic-aliphatic triisocyanates, such as 1,3,5-triisocyanatomethylbenzene.

Examples of aromatic polyisocyanates include aromatic diisocyanates, such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI) or 2,6-tolylene diisocyanate (common name: 2,6-TDI) or mixtures thereof, 4,4'-toluidine diisocyanate, and 4,4'-diphenylether diisocyanate; aromatic triisocyanates, such as triphenylmethane-4,4',4"-triisocyanate, 1,3,5-triisocyanatobenzene, and 2,4,6-triisocyanatotoluene; and aromatic tetraisocyanates, such as 4,4'-diphenylmethane-2,2',5,5'-tetraisocyanate.

Examples of derivatives of polyisocyanates include dimers, trimers, biurets, allophanates, urethodiones, urethoimines, isocyanurates, oxadiazinetriones, polymethylene polyphenyl polyisocyanates (crude MDI, polymeric MDI), or crude TDI of the polyisocyanates described above. Further, the polyisocyanate derivatives may be modified with a known polyol compound, including a diol or triol, and/or a known monol compound in order to adjust the number of functional groups of the isocyanate groups or adjust the compatibility or physical properties.

The polyisocyanate (a4) is preferably a polyisocyanate derivative having an isocyanate group content of 10 mass% or more, or 12 mass% or more, and 30 mass% or less, or 25 mass% or less.

As used here, the isocyanate group content of the polyisocyanate (a4) is the amount of the isocyanate groups in the polyisocyanate (a4) expressed as a mass fraction. The isocyanate group content can be measured according to a catalog value or in accordance with the method of determination of isocyanate content as specified in JIS K 1603-1.

### Modified polyisocyanate and its production method

In the present invention, the modified polyisocyanate according to a first embodiment is a reaction product formed from components comprising, as starting materials, a primary amino group-containing alkoxysilane (a1), an unsaturated carboxylic acid alkyl ester (a2), and a polyisocyanate (a4) (referred to as "the modified polyisocyanate (X)"), and is preferably a modified polyisocyanate in which a secondary amino group of an N-modified alkoxysilane represented by formula (5) or (6) obtained by adding the primary amino group of the alkoxysilane (a1) to the unsaturated carbon-carbon bond of the unsaturated carboxylic acid alkyl ester (a2) is adducted to at least one isocyanate group of the polyisocyanate (a4):

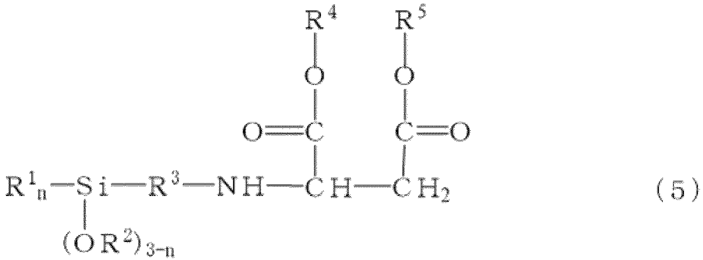

In formula (5), R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group; R³ is a C₁-C₈, preferably C₁-C₅ linear or branched alkylene group; R⁴ and R⁵ are the same or different, and each represents a C₁-C₈ branched alkyl group; and n is an integer of 0 to 2.

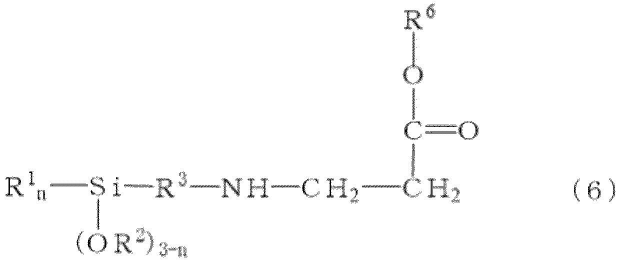

In formula (6), R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group; R³ is a C₁-C₈, preferably C₁-C₅ linear or branched alkylene group; R⁶ is a C₁-C₁₈ alkyl group with a branched or cyclic structure, or a C₁-C₁₈ group obtained by incorporating a heteroatom into the molecule of an alkyl group or arylalkyl group with a branched or cyclic structure; and n is an integer of 0 to 2.

Alternatively, in a second embodiment, the modified polyisocyanate is a reaction product formed from components comprising, as starting materials, a primary amino group-containing alkoxysilane (a1), a saturated carboxylic acid alkyl ester (a3), and a polyisocyanate (a4) (referred to as "the modified polyisocyanate (Y)"). Preferably, the modified polyisocyanate is obtained by adducting a secondary amide group of an N-modified alkoxysilane to at least one isocyanate group of the polyisocyanate (a4), wherein the N-modified alkoxysilane is obtained by reacting the alkoxysilane (a1) with the saturated carboxylic acid alkyl ester (a3) and wherein the N-modified alkoxysilane is a secondary amide group-containing N-acylated product represented by the following formula (7).

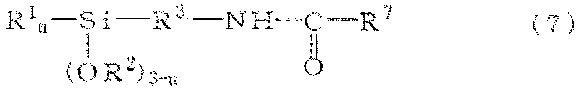

In formula (7), R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group; n is an integer of 0 to 2; R³ is a C₁-C₈, preferably C₁-C₅ linear or branched alkylene group; and R⁷ is a C₁-C₁₈ alkyl group having no unsaturated group, or a C₁-C₁₈ group that is obtained by incorporating a heteroatom into the molecule of an alkyl group and that has no unsaturated group.

The method for producing the modified polyisocyanate (X) or (Y) may be a method comprising simultaneously reacting the primary amino group-containing alkoxysilane (a1), the unsaturated carboxylic acid alkyl ester (a2) or the saturated carboxylic acid alkyl ester (a3), and the polyisocyanate (a4). The method is preferably a method comprising reacting in advance the alkoxysilane (a1) with the unsaturated carboxylic acid alkyl ester (a2) or a saturated carboxylic acid alkyl ester (a3) to obtain an N-modified alkoxysilane having a secondary amino group or a secondary amide group, and further reacting the N-modified alkoxysilane with the polyisocyanate (a4).

### Production method for modified polyisocyanate (X)

For the modified polyisocyanate (X), the blending ratio of the primary amino group-containing alkoxysilane (a1) and the unsaturated carboxylic acid alkyl ester (a2) is preferably within the range of, for example, 0.7 mol or more, or 0.85 mol or more, and 1.5 mol or less, or 1.25 mol or less of the unsaturated carboxylic acid alkyl ester (a2) per mol of the primary amino group-containing alkoxysilane (a1).

For the modified polyisocyanate (X), when the unsaturated carboxylic acid alkyl ester (a2) is the branched alkyl ester of an unsaturated dicarboxylic acid (a2-1), the reaction ratio of the N-modified alkoxysilane having a secondary amino group to the polyisocyanate (a4) is preferably adjusted so that the amount of the secondary amino groups is 40 mol or less, and preferably 3 mol or more and 35 mol or less, per 100 mol of the isocyanate groups, in terms of adhesion of the coating to iron and non-ferrous metal, and curing properties, as well as storage stability of the modified polyisocyanate.

For the modified polyisocyanate (X), when the unsaturated carboxylic acid alkyl ester (a2) is a branched alkyl ester or alkyl ester with a cyclic structure, each optionally containing a heteroatom, of an unsaturated monocarboxylic acid (a2-2), the reaction between the primary amino group-containing alkoxysilane (a1) and the unsaturated carboxylic acid alkyl ester (a2) may produce, as a by-product, a compound represented by the following formula (8) in addition to the N-modified alkoxysilane represented by formula (6), and accordingly, a mixture containing the N-modified alkoxysilane mixed with an unreacted primary amino group-containing alkoxysilane (a1) may be obtained.

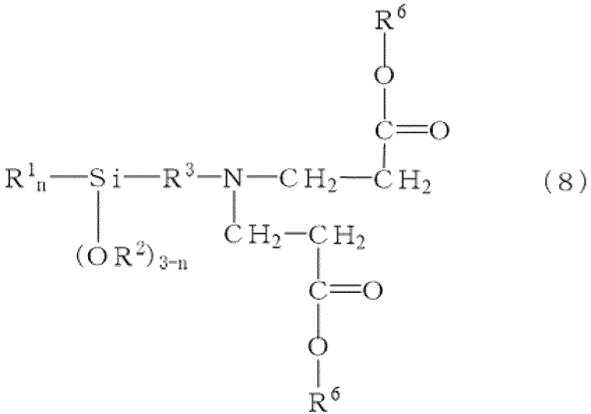

In formula (8), R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group; R³ is a C₁-C₈, preferably C₁-C₅ linear or branched alkylene group; R⁶ is a C₁-C₁₈ alkyl group with a branched or cyclic structure, or a C₁-C₁₈ group obtained by incorporating a heteroatom into the molecule of an alkyl group or arylalkyl group with a branched or cyclic structure; and n is an integer of 0 to 2.

Therefore, in this case, the reaction of the N-modified alkoxysilane having a secondary amino group with the polyisocyanate (a4) is carried out in the presence of the unreacted primary amino group-containing alkoxysilane (a1) and a tertiary amino group-containing compound represented by formula (8) produced as a by-product.

For the modified polyisocyanate (X), when the unsaturated carboxylic acid alkyl ester (a2) is a branched alkyl ester or alkyl ester with a cyclic structure, each optionally containing a heteroatom, of an unsaturated monocarboxylic acid (a2-2), the reaction ratio of the mixture containing the N-modified alkoxysilane to the polyisocyanate (a4) is preferably adjusted so that the total mole number of the primary amino group and the secondary amino group is 40 mol or less, and preferably 3 mol or more and 35 mol or less, per 100 mol of the isocyanate groups, in terms of adhesion of the coating to iron and non-ferrous metal, and curing properties, as well as storage stability of the modified polyisocyanate (X).

The reaction of the primary amino group-containing alkoxysilane (a1) with the unsaturated carboxylic acid alkyl ester (a2) to obtain an N-modified alkoxysilane can be carried out at 0 to 110°C while blowing air as necessary. The reaction time is 1 hour to 2 weeks, although it varies depending on the temperature. For the reaction, mixing may be performed by adding the unsaturated carboxylic acid alkyl ester (a2) to the primary amino group-containing alkoxysilane (a1), or by adding the primary amino group-containing alkoxysilane (a1) to the unsaturated carboxylic acid alkyl ester (a2). In order to avoid polymerization of the unsaturated carboxylic acid alkyl ester (a2), a small amount of a known aromatic polymerization inhibitor, such as methoquinone, or a nitroso compound, such as N-oxyl, may be used together, if necessary.

The reaction of the N-modified alkoxysilane obtained from the primary amino group-containing alkoxysilane (a1) and the unsaturated carboxylic acid alkyl ester (a2) with the polyisocyanate (a4) is not particularly limited and can be carried out under known and conventional reaction conditions. Specifically, the reaction may be carried out, for example, by mixing the N-modified alkylalkoxysilane and the polyisocyanate (a4) with stirring either all at once or by dropwise addition at 0 to 80°C for 0.1 to 5 hours. In this case, depending on the desired performance, mixing may be performed by adding the N-modified alkoxysilane to the polyisocyanate (a4), or by adding the polyisocyanate (a4) to the N-modified alkoxysilane. In this reaction, a Lewis acid catalyst, a basic catalyst, and an organic solvent can also be used, if necessary. The mixture containing the obtained reaction product may be aged at 0 to 80°C for one day to one month, if necessary.

### Production method for modified polyisocyanate (Y)

In the reaction for obtaining an N-modified alkoxysilane from the primary amino group-containing alkoxysilane (a1) and the saturated carboxylic acid alkyl ester (a3), the blending ratio of the primary amino group-containing alkoxysilane (a1) and the saturated carboxylic acid alkyl ester (a3) is preferably within the range of, for example, 0.7 mol or more, or 0.85 mol or more, and 1.5 mol or less, or 1.25 mol or less of the saturated carboxylic acid alkyl ester (a3), per mol of the primary amino group-containing alkoxysilane (a1).

The reaction of the primary amino group-containing alkoxysilane (a1) with the saturated carboxylic acid alkyl ester (a3) may be carried out by heating to 100 to 250°C, or may be carried out at 0 to 160°C with the addition of a basic catalyst or a Lewis acid catalyst. When a catalyst is added, a basic catalyst, which is likely to produce an effect in a small amount, is preferably used. In either case, the reaction may be carried out under pressure, as necessary. In order to suppress coloration etc., this reaction may also be carried out in the presence of a known antioxidant, such as methoquinone. The reaction time is usually about 1 hour to 3 days, although it varies depending on the temperature etc. It is preferable to mix the components all at once or by dropwise addition, and further combine aging as necessary.

A basic catalyst or Lewis acid catalyst, when added, may be added after mixing the primary amino group-containing alkoxysilane (a1) and the saturated carboxylic acid alkyl ester (a3), may be added in advance to the primary amino group-containing alkoxysilane (a1) and then mixed with the saturated carboxylic acid alkyl ester (a3), or may be added in advance to the saturated carboxylic acid alkyl ester (a3) and then mixed with the primary amino group-containing alkoxysilane (a1).

In the present invention, the modified polyisocyanate (Y) is preferably produced by
step (1) of reacting the primary amino group-containing alkoxysilane (a1) with the saturated carboxylic acid alkyl ester (a3) in the presence of a basic catalyst;
step (2) of adding an acidic compound to a mixture containing the reaction product obtained in step (1), as necessary;
step (3) of removing part or all of an alcohol formed as a by-product to prepare an intermediate containing an N-acylated product represented by the following formula (7); and
step (4) of reacting the intermediate with the polyisocyanate (a4).

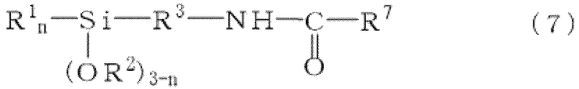

In formula (7), R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group; R³ is a C₁-C₈, preferably C₁-C₅ linear or branched alkylene group; n is an integer of 0 to 2; and R⁷ is C₁-C₁₈ alkyl group having no unsaturated group, or a C₁-C₁₈ group that is obtained by incorporating a heteroatom, such as an oxygen atom, nitrogen atom, or sulfur atom, into the molecule of an alkyl group and that has no unsaturated group.

These production methods make it possible to easily obtain a modified polyisocyanate having excellent adhesion to non-ferrous metal.

Examples of the basic catalyst added in step (1) include metal hydroxides, such as lithium hydroxide, sodium hydroxide, potassium hydroxide, and calcium hydroxide; carbonates, such as sodium carbonate, and potassium carbonate; hydrogen carbonates, such as sodium hydrogen carbonate and potassium hydrogen carbonate; metal alkoxides, such as sodium methoxide and potassium t-butoxide; organic metals, such as butyllithium; potassium silanolate; and nitrogen compounds, such as ammonia gas, aqueous ammonia, methylamine, trimethylamine, triethylamine, 1,8-diazabicyclo[5.4.0]-7-undecene (DBU), and 1,5-diazabicyclo[4.3.0]-5-nonene (DBN). These basic catalysts may be used without dissolving in an organic solvent or may be added after dissolving in advance in a solvent (e.g., water; alcohols, such as methanol and ethanol; esters, such as methyl acetate and ethyl acetate; and ethers, such as tetrahydrofuran, cyclopentyl methyl ether, and trimethyl orthoacetate).

Examples of the acidic compound added in step (2) include inorganic Brønsted acids, such as hydrogen chloride, hydrochloric acid, sulfuric acid, nitric acid, and phosphoric acid; organic Brønsted acids, such as carboxylic acid, alkylsulfonic acid, arylsulfonic acid, monoalkylphosphoric acid, dialkylphosphoric acid, and arylphosphonic acid; and acyl chlorides, such as acetyl chloride and benzoyl chloride. These acidic compounds may be used without dissolving in an organic solvent or may be added after dissolving in advance in a solvent (e.g., water; alcohols, such as methanol and ethanol; esters, such as methyl acetate and ethyl acetate; and ethers, such as tetrahydrofuran, cyclopentyl methyl ether, and trimethyl orthoacetate). The addition of the acidic compound is preferably performed before step (3). However, it is also possible to perform the addition during step (3).

In step (3), part or all of the alcohol formed as a by-product in step (1), and optionally the primary amino group-containing alkoxysilane (a1) and/or the saturated carboxylic acid alkyl ester (a3) remaining as unreacted starting materials, are removed by heating and optionally by reducing the pressure. In the present invention, the removal may be carried out by either of two methods, i.e., concentration or distillation. Concentration is a method of removing a compound desired to be removed from a system and leaving a required compound in the system, whereas distillation is a method of collecting a required compound outside the system. The N-acylated product obtained by distillation is a purified N-acylated product with high purity; however, the process and equipment required for distillation are complex, and distillation requires a large amount of energy, placing a heavy burden on the environment. On the other hand, the N-acylated product obtained by concentration is a crude N-acylated product with low purity containing not only impurities such as catalyst residues but also, in some cases, the primary amino group-containing alkoxysilane (a1) and/or the saturated carboxylic acid alkyl ester (a3) remaining unreacted. However, the process and equipment required for concentration are simple, and additionally, concentration requires a small amount of energy, placing a small burden on the environment. From the viewpoint of ease of production, it is more advantageous to perform removal by concentration.

In the present invention, even when step (3) is carried out by concentration instead of distillation, it is possible to provide a modified polyisocyanate as a curing agent for paints having sufficient performance by a reaction with the polyisocyanate (a4). However, in order to further improve corrosion resistance of the coating film, the crude N-acylated product obtained by using a saturated carboxylic acid alkyl ester having a branched structure in which two hydrogen atoms are present at the α-position as the saturated carboxylic acid alkyl ester (a3) may be purified by distillation as necessary before use. On the other hand, the crude N-acylated product obtained by using a carboxylic acid ester having a linear structure in which two or more hydrogen atoms are present at the α-position as the saturated carboxylic acid alkyl ester (a3) is likely to give a coating film with extremely high corrosion resistance and weather resistance even when used without purification by distillation, and is thus more preferable from the viewpoint of ease of production.

Step (4) may be carried out at 40 to 200°C without adding a catalyst, or may be carried out at 20 to 140°C with the addition of a basic catalyst or Lewis acid catalyst. When a catalyst is added in step (4), a Lewis acid catalyst, which is likely to produce an effective effect in a small amount, is preferably used. The Lewis acid catalyst for use may be one that is known. Examples include tin compounds, such as dialkyltin dicarboxylate, monoalkyltin tricarboxylate, dialkyltin oxide, and tin dicarboxylate; zinc compounds, such as zinc dicarboxylate and zinc di(acetylacetonate); zirconium compounds, such as zirconium tetraalkoxide, dialkoxyzirconium di(acetylacetonate), and zirconium tetra(acetylacetonate); titanium compounds, such as titanium tetraalkoxide, dialkoxytitanium di(acetylacetonate), and titanium tetra(acetylacetonate); aluminum compounds, such as aluminum tri(acetylacetonate); and bismuth compounds, such as bismuth tricarboxylate.

In each of steps (1), (2), (3), and (4), a filtration operation may also be carried out as necessary, using a known filtration material.

In the production of the modified polyisocyanate (Y), the reaction ratio of the purified N-modified alkoxysilane or the crude N-modified alkoxysilane obtained from the primary amino group-containing alkoxysilane (a1) and the saturated carboxylic acid alkyl ester (a3) to the polyisocyanate (a4) is preferably adjusted so that the total mole number of the secondary amide group and the primary amino group is 40 mol or less, and preferably 3 mol or more and 35 mol or less, per 100 mol of the isocyanate groups.

As described above, the modified polyisocyanate of the present invention is preferably produced through an N-modified alkoxysilane having a secondary amino group or a secondary amide group, like the modified polyisocyanate (X) or the modified polyisocyanate (Y), to produce an effect of improving compatibility with the active-hydrogen-group-containing compound and organic solvent described below.

In order to improve stability etc., the modified polyisocyanate of the present invention may also be produced by reacting the N-modified alkoxysilane having a secondary amino group or a secondary amide group with a polyisocyanate, and then adding the acidic compound mentioned above as necessary.

For obtaining the N-modified alkoxysilane, in order to adjust the performance of the coating film obtained by using the modified polyisocyanate as a curing agent, the primary amino group-containing alkoxysilane (a1) may be reacted with the unsaturated carboxylic acid alkyl ester (a2) or the saturated carboxylic acid alkyl ester (a3) with a combined use of an alkoxysilane having both a primary amino group and a secondary amino group, such as 3-(2-aminoethylamino)propyltrialkoxysilane.

The amount of the isocyanate groups in the modified polyisocyanate of the present invention is preferably within the range of, for example, 1.0 mmol or more, or 2.0 mmol or more, per gram of the nonvolatile content in the modified polyisocyanate, in terms of curability, adhesion to non-ferrous metal, weather resistance, and corrosion resistance, of the coating film. The upper limit of the amount of the isocyanate groups in the modified polyisocyanate is not limited and can be designed to be within the range of, for example, 5.5 mmol or less, or 5.0 mmol or less, per gram of the nonvolatile content in the modified polyisocyanate.

The amount of the isocyanate groups in the modified polyisocyanate can be determined, for example, by adding 10 ml of a 0.1 mol/L dibutylamine solution to 0.1 g of a sample to allow the NCO groups to react, and then titrating the remaining dibutylamine with an aqueous hydrochloric acid solution using bromophenol blue as a titration indicator.

In the present specification, the nonvolatile content refers to a residue after removing volatile components, such as organic solvents, and can be measured in accordance with the standard of JIS K 5601 1-2 (heating temperature: 125°C, heating time: 60 minutes).

In the present invention, an organic solvent can be used as a reaction solvent for producing the modified polyisocyanate or as a dilution solvent for diluting the modified polyisocyanate to a viscosity suitable for use as a curing agent for paints. The organic solvent for use may be those commonly used in the field of paints. Specific examples include aliphatic solvents, such as n-butane, n-hexane, n-heptane, n-octane, cyclopentane, cyclohexane, and cyclobutane; aromatic solvents, such as toluene and xylene; ketone solvents, such as methyl i-butyl ketone; ether solvents, such as n-butyl ether, dioxane, and cyclopentyl methyl ether; ester solvents, such as ethyl acetate, n-propyl acetate, i-propyl acetate, n-butyl acetate, i-butyl acetate, ethylene glycol monomethyl ether acetate, propylene glycol monomethyl ether acetate, and butyl carbitol acetate; ketone solvents, such as methyl ethyl ketone, methyl i-butyl ketone, and di i-butyl ketone; and combinations thereof. In addition, organic solvents with weak dissolving power, which are commonly called weak solvents in the field of paints, such as gasoline, kerosene, coal tar naphtha (including solvent naphtha), petroleum ether, petroleum naphtha, petroleum benzine, turpentine oil, and mineral spirits (including mineral thinner, petroleum spirits, white spirits, and mineral turpentine), can also be used sufficiently.

In the present invention, the organic solvent can be contained in any of the main agent and the curing agent. The amount of the organic solvent contained in the curing agent is preferably 200 parts by mass or less, and more preferably within the range of 10 parts by mass or more and 100 parts by mass or less, per 100 parts by mass of the nonvolatile content in the modified polyisocyanate. In a typical embodiment, the modified polyisocyanate of the present invention is used as a curing agent for coatings. Thus, in one embodiment, the present invention provides a curing agent containing the modified polyisocyanate. In such an embodiment, the curing agent of the present invention is preferably used in combination with an active-hydrogen-containing compound. Further, in the present invention, the modified polyisocyanate may be used alone as the curing agent. Alternatively, the modified polyisocyanate may be used as a curing agent composition that further comprises, in addition to the modified polyisocyanate, the solvents mentioned above, catalysts, ultraviolet absorbers, light stabilizers, rheology control agents, surface-adjusting agents, dehydrating agents, and the like. These components other than the modified polyisocyanate may be used singly or in a combination of two or more. In the embodiment of the curing agent composition, the content of the modified polyisocyanate in the composition is not limited and may be set within the range of, for example, 30 mass% or more, 40 mass% or more, 50 mass% or more, 60 mass% or more, 70 mass% or more, 80 mass% or more, 90 mass% or more, 95 mass% or more, or 99 mass% or more.

### Active-hydrogen-group-containing compound

In the present invention, an active-hydrogen-group-containing compound is a compound used as a binder component together with the modified polyisocyanate. The active-hydrogen-group-containing compound is not particularly limited as long as it is a compound having an active hydrogen group, and may be any compound known and commonly used in the field of paints. The active hydrogen group used here refers to a group capable of reacting with the isocyanate groups of the modified polyisocyanate and may be, for example, a hydroxy group, a primary or secondary amino group, or a thiol group. Specific examples of the active-hydrogen-group-containing compound include polyol compounds, such as acrylic polyol, polyester polyol, polyether polyol, polycarbonate polyol, epoxy polyol, dihydroxyalkane, trihydroxyalkane, and dihydroxycycloalkane; and polyamino compounds, such as acrylic resins having pendant amino groups, polyallylamine, polyether polyamine, polylysine and polyvinylamine, polymers having a plurality of secondary amino groups with an aspartic acid ester structure, diaminoalkane, diaminocycloalkane, dialkylenetriamine, trialkylenetetramine, and bisaspartic acid ester derivatives. These compounds may be used singly or in combination.

Of these, the active-hydrogen-group-containing compound preferably comprises an acrylic polyol and/or a bisaspartic acid ester derivative from the viewpoint of, for example, improving weather resistance of the coating film to be formed, improving compatibility of the paint, increasing the nonvolatile concentration of the paint, and controlling the reaction rate with isocyanate groups. In order to adjust the flexibility etc. of the coating film, polyester polyol and polyether polyol may also be used in combination, if necessary.

The acrylic polyol for use may be produced by copolymerizing, for example, a hydroxy-containing polymerizable unsaturated monomer and another polymerizable unsaturated monomer (a polymerizable unsaturated monomer other than the hydroxy-containing polymerizable unsaturated monomer), or may be a commercially available product etc.

The hydroxy-containing polymerizable unsaturated monomer is a compound having one or more hydroxy groups and one or more polymerizable unsaturated groups per molecule. Examples of the hydroxy-containing polymerizable unsaturated monomer include monoesterified products of (meth)acrylic acid with a dihydric alcohol having 2 to 8 carbon atoms (e.g., 2-hydroxyethyl (meth)acrylate, 2-hydroxypropyl (meth)acrylate, 3-hydroxypropyl (meth)acrylate, and 4-hydroxybutyl (meth)acrylate); ε-caprolactone-modified products of such monoesterified products of (meth)acrylic acid with a dihydric alcohol having 2 to 8 carbon atoms; adducts of (meth)acrylic acid with an epoxy-containing compound (e.g., Cardura E10P, trade name, produced by Hexion, neodecanoic acid glycidyl ester); N-hydroxymethyl (meth)acrylamide; allyl alcohol; and (meth)acrylates that include a hydroxy-terminated polyoxyethylene chain.

As another polymerizable unsaturated monomer copolymerizable with the hydroxy-containing polymerizable unsaturated monomer, for example, the monomers listed in (1) to (7) below can be used. These polymerizable unsaturated monomers may be used singly or in a combination of two or more.

### (1) Acid group-containing polymerizable unsaturated monomers

An acid group-containing polymerizable unsaturated monomer is a compound having one or more acid groups and one or more polymerizable unsaturated groups per molecule. Examples of the monomer include carboxy-containing monomers, such as (meth)acrylic acid, crotonic acid, itaconic acid, maleic acid, and maleic anhydride; sulfonic acid-containing monomers, such as vinyl sulfonic acid and 2-sulfoethyl (meth)acrylate; acidic phosphate monomers, such as 2-(meth)acryloyloxyethyl acid phosphate, 2-(meth)acryloyloxypropyl acid phosphate, 2-(meth)acryloyloxy-3-chloropropyl acid phosphate, and 2-methacryloyloxyethylphenyl phosphoric acid. These monomers may be used singly or in a combination of two or more.

### (2) Esterified products of acrylic acid or methacrylic acid with a monohydric alcohol having 1 to 20 carbon atoms

Specific examples include methyl (meth)acrylate, ethyl (meth)acrylate, propyl (meth)acrylate, n-butyl (meth)acrylate, i-butyl (meth)acrylate, t-butyl (meth)acrylate, 2-ethylhexyl (meth)acrylate, i-octyl (meth)acrylate, i-myristyl (meth)acrylate, stearyl (meth)acrylate, Isostearyl Acrylate (trade name, produced by Osaka Organic Chemical Industry, Ltd.), lauryl (meth)acrylate, tridecyl (meth)acrylate, tetrahydrofurfuryl (meth)acrylate, cyclohexyl (meth)acrylate, and isobornyl (meth)acrylate.

### (3) Alkoxysilyl group-containing polymerizable unsaturated monomers

An alkoxysilyl group-containing polymerizable unsaturated monomer is a compound having one or more alkoxysilyl groups and one or more polymerizable unsaturated groups per molecule. Examples of the alkoxysilyl group-containing polymerizable unsaturated monomer include vinyltrimethoxysilane, vinyltriethoxysilane, acryloxyethyl trimethoxysilane, methacryloxyethyl trimethoxysilane, acryloxypropyl trimethoxysilane, methacryloxypropyl trimethoxysilane, acryloxypropyl triethoxysilane, methacryloxypropyl triethoxysilane, and vinyltris(β-methoxyethoxy)silane.

### (4) Aromatic-based vinyl monomers

Specific examples include styrene, α-methylstyrene, and vinyltoluene.

When an aromatic-based vinyl monomer is used as a constituent component, its proportion is preferably within the range of 3 mass% or more, or 5 mass% or more, and 50 mass% or less, or 40 mass% or less, based on the total amount of the monomer components.

### (5) Glycidyl group-containing polymerizable unsaturated monomers

A glycidyl group-containing polymerizable unsaturated monomer is a compound having one or more glycidyl groups and one or more polymerizable unsaturated groups per molecule. Specific examples include glycidyl acrylate and glycidyl methacrylate.

### (6) Compounds containing nitrogen and a polymerizable unsaturated group

Examples include (meth)acrylamide, N,N-dimethyl(meth)acrylamide, N-[3-(dimethylamino)propyl](meth)acrylamide, N-butoxymethyl(meth)acrylamide, diacetone(meth)acrylamide, N,N-dimethylaminoethyl(meth)acrylate, vinylpyridine, vinylimidazole, acrylonitrile, and methacrylonitrile.

### (7) Other vinyl compounds

Examples include vinyl acetate, vinyl propionate, vinyl chloride, and vinyl versatates.

The term "polymerizable unsaturated monomer" as used herein refers to a monomer having one or more (e.g., one to four) polymerizable unsaturated groups. The polymerizable unsaturated group refers to an unsaturated group that can undergo radical polymerization. Examples of the polymerizable unsaturated group include a vinyl group, a (meth)acryloyl group, a (meth)acrylamide group, a vinyl ether group, an allyl group, a propenyl group, an i-propenyl group, and a maleimide group.

The term "(meth)acrylate" as used herein means acrylate or methacrylate. The term "(meth)acrylic acid" means acrylic acid or methacrylic acid. The term "(meth)acryloyl" means acryloyl or methacryloyl. The term "(meth)acrylamide" means acrylamide or methacrylamide.

In terms of weather resistance and corrosion resistance of the coating film to be formed, the acrylic polyol preferably has a hydroxy value within the range of 5 mgKOH/g or more, or 10 mgKOH/g or more, and 160 mgKOH/g or less, or 100 mgKOH/g or less, and a weight average molecular weight within the range of 3000 or more, or 10000 or more, and 100000 or less, or 50000 or less.

In the present specification, the weight average molecular weight refers to a value calculated from a chromatogram measured by gel permeation chromatography based on the weight average molecular weight of standard polystyrene. For the gel permeation chromatography, HLC₈₁20GPC (produced by Tosoh Corporation) is used. The measurement is conducted using the four columns TSKgel G-4000HXL, TSKgel G-3000HXL, TSKgel G-2500HXL, and TSKgel G-2000HXL (trade names, all produced by Tosoh Corporation) under the conditions of mobile phase: tetrahydrofuran, measuring temperature: 40°C, flow rate: 1 mL/min, and detector: RI.

The bisaspartic acid ester derivative is not limited as long as it is one in which a maleic acid diester or a fumaric acid diester is added to an aspartic acid compound having two amino groups. Examples include tetraethyl N,N'-(methylenedi-4,1-cyclohexanediyl)-bisaspartate, tetraethyl N,N'-(methylenebis(2-methyl-di-4,1-cyclohexanediyl))-bisaspartate, and tetraethyl N,N'-(2-methyl-1,5-pentanediyl)-bisaspartate. More specific examples include Desmophen NH 1420, Desmophen NH 1520, Desmophen NH 1220, Desmophen NH 1422, Desmophen NH 1423LF, Desmophen NH 1720, Desmophen NH 1723LF, Desmophen NH 1523LF, and Desmophen NH 1521, which are produced by Covestro; and Amicure IC-133, Amicure IC-166, and Amicure IC-186, which are produced by Evonik (all of which are trade names).

### Coating

The present invention provides a coating comprising an active-hydrogen-containing compound and the modified polyisocyanate. The coating of the present invention also includes a two-component composition comprising a curing agent containing the modified polyisocyanate and a main agent containing an active-hydrogen-group-containing compound, which are stored separately. In a typical embodiment, the coating of the present invention is obtained by mixing, before application of the coating, the curing agent containing the modified polyisocyanate with the main agent containing an active-hydrogen-group-containing compound, which are stored separately. The coating of the present invention can also be referred to as a paint composition.

For the ratio for use, the equivalent ratio of the modified polyisocyanate per equivalent of the active hydrogen groups contained in the active-hydrogen-group-containing compound is preferably 0.5 or more, or 0.7 or more. The equivalent ratio of the modified polyisocyanate per equivalent of the active hydrogen groups contained in the active-hydrogen-group-containing compound is not limited and can be designed to be, for example, 2.5 or less, or 1.5 or less.

The coating of the present invention may further appropriately comprise, as necessary, rust inhibitors, catalysts, color pigments, extender pigments, effect pigments, dispersants, ultraviolet absorbers, light stabilizers, antifoaming agents, rheology control agents, surface-adjusting agents, dehydrating agents, organic solvents, crosslinking agents, binder components other than active-hydrogen-group-containing compounds, and the like.

Of these, the rust inhibitor may be a rust inhibitor that is known in the field of paints and is commercially available. The rust inhibitor may be an inorganic compound or an organic compound, and may be in any form, such as a single compound, a composite compound, a composition obtained by using these compounds in combination, and a composition obtained by baking these compounds. Specific examples include:
phosphoric acid-based metallic compounds, such as zinc phosphate, magnesium phosphate, magnesium phosphate-ammonium eutectic mixture, magnesium monohydrogen phosphate, magnesium dihydrogen phosphate, magnesium phosphate-calcium eutectic mixture, magnesium phosphate-cobalt eutectic mixture, magnesium phosphate-nickel eutectic mixture, calcium phosphate, ammonium calcium phosphate, calcium monohydrogen phosphate, calcium dihydrogen phosphate, calcium phosphate chloride fluoride, aluminum phosphate, and aluminum hydrogen phosphate;
phosphorous acid-based metallic compounds, such as magnesium phosphite, calcium phosphite, magnesium phosphite-calcium eutectic mixture, basic zinc phosphite, barium phosphite, manganese phosphite, and calcium hypophosphite;
silicate metal salts, such as calcium silicate, zinc silicate, aluminum silicate, aluminum orthosilicate, hydrated aluminum silicate, aluminosilicate, borosilicate, beryllosilicate, calcium aluminum silicate, sodium aluminum silicate, beryllium aluminum silicate, sodium silicate, calcium orthosilicate, calcium metasilicate, calcium sodium silicate, zirconium silicate, magnesium orthosilicate, magnesium metasilicate, manganese silicate, and barium silicate;
metal ion-exchanged silica-based compounds, such as magnesium ion-exchanged silica and calcium ion-exchanged silica;
condensed phosphoric acid-based metallic compounds, such as aluminum dihydrogen tripolyphosphate, aluminum dihydrogen tripolyphosphate-magnesium oxide composite, aluminum tripolyphosphate, and aluminum dihydrogen tripolyphosphate-zinc oxide composite;
vanadium-based metallic compounds, such as vanadium pentoxide, calcium vanadate, magnesium vanadate, and ammonium metavanadate, as well as baked product of manganese oxide and vanadium oxide, and baked product of calcium phosphate and vanadium oxide;
molybdic acid-based metallic compounds, such as aluminum molybdate, calcium molybdate, and aluminum molybdophosphate;
zinc-based compounds, such as zinc and zinc oxide;
silica-based compounds, such as silica and colloidal silica;
composite metal iron oxides, such as composite iron oxide of iron oxide and magnesium oxide, composite iron oxide of iron oxide and calcium oxide, and composite iron oxide of iron oxide and zinc oxide; and
sulfur-containing organic compounds, such as triazole compounds, thiol compounds, thiadiazole compounds, and thiazole compounds.

When the coating of the present invention comprises the rust inhibitor, the amount of the rust inhibitor is preferably within the range of 1 part by mass or more, or 3 parts by mass or more, and 70 parts by mass or less, or 60 parts by mass or less, per 100 parts by mass of the nonvolatile content in the active-hydrogen-containing compound.

The catalyst may be a compound conventionally known for use for coatings. Specific examples include organometallic compounds and amine compounds.

Examples of the organometallic compound include diacetyltin diacetate, diacetyltin dioctoate, dioctyltin diacetate, dioctyltin di(2-ethylhexanoate), dioctyltin dilaurate, dioctyltin dineodecanoate, dioctyltin oxide, dibutyltin diacetate, dibutyltin di(2-ethylhexanoate), dibutyltin dioctoate, dibutyltin dilaurate, dibutyltin oxide, dibutyltin sulfide, dibutyltin fatty acid salts, tin octoate, zinc octoate, zinc naphthenate, zinc fatty acids, bismuth octanoate, bismuth 2-ethylhexanoate, bismuth oleate, bismuth neodecanoate, bismuth versatate, bismuth naphthenate, cobalt naphthenate, calcium octoate, copper naphthenate, and tetra(2-ethylhexyl)titanate.

Examples of the amine compound include aliphatic amines, such as trimethylamine, triethylamine, 2-(dimethylamino)ethyl methacrylate, 1,4-diazabicyclo[2.2.2]octane, 1,8-diazabicyclo[5.4.0]-7-undecene, 1,5-diazabicyclo[4.3.0]-5-nonene, 1-methylpiperidine, and 1-methylpyrrolidine; and pyridine, 4-dimethylaminopyridine, 4-(1-piperidyl)pyridine, N-methylimidazole, and N,N-dimethylaniline.

When the coating of the present invention comprises the catalyst, the content of the catalyst is preferably within the range of 0.005 mass% or more, or 0.01 mass% or more, and 2 mass% or less, or 1 mass% or less, based on the mass of the nonvolatile content in the active-hydrogen-group-containing compound.

Examples of the color pigment include titanium oxide, zinc oxide, carbon black, red iron oxide, cadmium red, molybdenum red, chrome yellow, chromium oxide, Prussian blue, cobalt blue, azo pigments, phthalocyanine pigments, quinacridone pigments, isoindoline pigments, threne pigments, and perylene pigments.

Examples of the extender pigment include talc, clay, kaolin, baryta, barium sulfate, barium carbonate, calcium carbonate, and alumina white.

Examples of the effect pigment include aluminum pigments, mica pigments, mica pigments coated with titanium oxide, and aluminum oxide pigments coated with titanium oxide.

The dehydrating agent includes a compound that consumes water by chemically reacting with water, or a compound that physically adsorbs water. Examples of the former include trimethyl orthoformate, triethyl orthoformate, trimethyl orthoacetate, triethyl orthoacetate, toluenesulfonyl isocyanate, vinyltrimethoxysilane, and vinyltriethoxysilane. Examples of the latter include zeolite and molecular sieves.

### Application

Since the modified polyisocyanate of the present invention has excellent adhesion to metal substrates, a coating comprising the modified polyisocyanate of the present invention is used for application to metal substrates. Metal substrates include both ferrous substrates and non-ferrous metals. Specific examples include steel, galvanized steel, stainless steel, magnesium alloys, aluminum, and aluminum alloys. These may be surface-treated with phosphate, chromate, or the like. The metal substrates also include metal components etc. that constitute existing structures and that have old coating films or rust remaining on their surfaces.

The coating of the present invention can be diluted with an organic solvent or the like as necessary to a viscosity suitable for application, and may be applied by air spray coating, airless spray coating, electrostatic coating, brush coating, roller coating, architectural spray gun, multi-purpose gun, or the like. Drying may be performed at an ordinary temperature. Drying by heating is also possible. The ordinary temperature varies depending on the atmospheric temperature of the environment in which the application is performed, and refers to a temperature at which no temperature control, such as forced heating or cooling, is performed, while drying by heating refers to a temperature at which forced heating operations using an equipment, such as a drying oven, are performed.

Since the coating of the present invention has excellent adhesion, omitting the application of a primer paint before the application of the coating is possible. Furthermore, since the coating of the present invention also has excellent weather resistance, omitting the application of a topcoat paint on the coating of the present invention applied is also possible. The coating of the present invention can, by itself, form a protective coating film having excellent corrosion resistance and weather resistance on a metal substrate, making it possible to achieve a single-layer finish and also making it possible to be applied as a single-coat paint. Therefore, the present invention provides a cured product of the coating described above. The cured product can be used as a protective coating film. The present invention also provides a coated article in which the cured product of the coating is formed on a substrate (a coated article including a substrate and the cured product of the coating on the substrate). The coated article is preferably, for example, a coated metal material in which the cured product of the coating is formed on a metal substrate.

### Examples

The following Examples serve to illustrate the present invention in more detail. However, the present invention is not limited to these examples. Here, "parts" and "%" mean "parts by mass" and "% by mass," respectively.

### Preparation of Modified Polyisocyanate Curing Agent Solutions Using Alkyl Ester of Unsaturated Dicarboxylic Acid

### Example 1

179 parts of 3-aminopropyltrimethoxysilane and 0.07 parts of methoquinone were placed in a flask and heated to 80°C. Air was introduced into the liquid and bubbled to stir the mixture. After 220 parts of di-i-propyl fumarate was added dropwise thereto over a period of 2 hours, the resulting mixture was maintained at 80°C for 1 hour and further aged at 50°C for 1 week to obtain 399 parts of a mixture containing 95% of 3-(N-(1,2-bis(i-propoxycarbonyl)ethyl)amino)propyltrimethoxysilane (an N-modified alkoxysilane compound represented by formula (5) wherein R² is methyl, R³ is propylene, R⁴ and R⁵ are both i-propyl, and n is 0). 400 parts of mineral spirits, 320 parts of "Swasol 1000" (product name, produced by Maruzen Petrochemical Co., Ltd., a naphtha-based solvent), and 550 parts of "Duranate TSA-100" (product name, produced by Asahi Kasei Corporation, a hexamethylene diisocyanate-based, modified isocyanurate-type polyisocyanate, isocyanate group content: 20.6 wt%) were placed into another flask and stirred at room temperature. After 359 parts of a mixture containing 95% of 3-(N-(1,2-bis(i-propoxycarbonyl)ethyl)amino)propyltrimethoxysilane was added dropwise thereto over a period of 2 hours, the resulting mixture was maintained at 60°C for 1 hour and cooled to room temperature to obtain a polyisocyanate curing agent solution (HE-1) with a nonvolatile concentration of 55%. The concentration of isocyanate groups contained in 1 g of the curing agent solution (HE-1) was 1.10 mmol/g (2.02 mmol/g in terms of nonvolatile content).

### Example 2

179 parts of 3-aminopropyltrimethoxysilane and 0.07 parts of methoquinone were placed in a flask and heated to 80°C. Air was introduced into the liquid and bubbled to stir the mixture. After 251 parts of di(1-methylpropyl) fumarate was added dropwise thereto over a period of 2 hours, the resulting mixture was maintained at 80°C for 1 hour and further aged at 50°C for 1 week to obtain 430 parts of a mixture containing 95% of 3-(N-(1,2-bis(1-methylpropoxycarbonyl)ethyl)amino)propyltrimethoxysilane (an N-modified alkoxysilane represented by formula (5), wherein R² is methyl, R³ is propylene, R⁴ and R⁵ are both 1-methylpropyl, and n is 0). 400 parts of mineral spirits, 320 parts of "Swasol 1000" (product name, produced by Maruzen Petrochemical Co., Ltd., a naphtha-based solvent), and 550 parts of "Duranate TSA-100" (product name, produced by Asahi Kasei Corporation, a hexamethylene diisocyanate-based, modified isocyanurate-type polyisocyanate, isocyanate group content: 20.6 wt%) were placed into another flask and stirred at room temperature. After 387 parts of a mixture containing 95% of 3-(N-(1,2-bis(1-methylpropoxycarbonyl)ethyl)amino)propyltrimethoxysilane was added dropwise thereto over a period of 2 hours, the resulting mixture was maintained at 60°C for 1 hour and then cooled to room temperature to obtain a polyisocyanate curing agent solution (HE-2) with a nonvolatile concentration of 55%. The concentration of isocyanate groups in 1 g of the curing solution (HE-2) was 1.08 mmol/g (1.96 mmol/g in terms of nonvolatile content).

### Example 3

89.5 parts of 3-aminopropyltrimethoxysilane and 0.04 parts of methoquinone were placed in a flask and heated to 80°C. Air was introduced into the liquid and bubbled to stir the mixture. After 110 parts of di-i-propyl fumarate was added dropwise thereto over a period of 2 hours, the resulting mixture was maintained at 80°C for 1 hour and further aged at 50°C for 1 week to obtain 199 parts of a mixture containing 95% of 3-(N-(1,2-bis(i-propoxycarbonyl)ethyl)amino)propyltrimethoxysilane (an N-modified alkoxysilane compound represented by formula (5) wherein R² is methyl, R³ is propylene, R⁴ and R⁵ are both i-propyl, and n is 0). 320 parts of mineral spirits, 256 parts of "Swasol 1000" (a naphtha-based solvent, product name, produced by Maruzen Petrochemical Co., Ltd.), and 550 parts of "Duranate TSA-100" (a hexamethylene diisocyanate-based, modified isocyanurate-type polyisocyanate, product name, produced by Asahi Kasei Corporation, isocyanate group content: 20.6 wt.%) were placed into another flask and stirred at room temperature. After 162 parts of a mixture containing 95% of 3-(N-(1,2-bis(i-propoxycarbonyl)ethyl)amino)propyltrimethoxysilane was added dropwise thereto over a period of 2 hours, the resulting mixture was maintained at 60°C for 1 hour and cooled to room temperature to obtain a polyisocyanate curing agent solution (HE-3) with a nonvolatile concentration of 55%. The concentration of isocyanate groups in 1 g of the curing agent solution (HE-3) was 1.78 mmol/g (3.26 mmol/g in terms of nonvolatile content).

### Example 4

89.5 parts of 3-aminopropyltrimethoxysilane and 0.04 parts of methoquinone were placed in a flask and heated to 80°C. Air was introduced into the liquid and bubbled to stir the mixture. After 110 parts of di-i-propyl fumarate was added dropwise thereto over a period of 2 hours, the resulting mixture was maintained at 80°C for 1 hour and further aged at 50°C for 1 week to obtain 199 parts of a mixture containing 95% of 3-(N-(1,2-bis(i-propoxycarbonyl)ethyl)amino)propyltrimethoxysilane (an N-modified alkoxysilane compound represented by formula (5) wherein R² is methyl, R³ is propylene, R⁴ and R⁵ are both i-propyl, and n is 0). 280 parts of mineral spirits, 224 parts of "Swasol 1000" (product name, produced by Maruzen Petrochemical Co., Ltd., a naphtha-based solvent), and 550 parts of "Duranate TSA-100" (product name, produced by Asahi Kasei Corporation, a hexamethylene diisocyanate-based, modified isocyanurate-type polyisocyanate, isocyanate group content: 20.6 wt%) were placed into another flask and stirred at room temperature. After 108 parts of a mixture containing 95% of 3-(N-(1,2-bis(i-propoxycarbonyl)ethyl)amino)propyltrimethoxysilane was added dropwise thereto over a period of 2 hours, the resulting mixture was maintained at 60°C for 1 hour and cooled to room temperature to obtain a polyisocyanate curing agent solution (HE-4) with a nonvolatile concentration of 56%. The concentration of isocyanate groups in 1 g of the curing agent solution (HE-4) was 2.09 mmol/g (3.72 mmol/g in terms of nonvolatile content).

### Example 5

221 parts of 3-aminopropyltriethoxysilane and 0.07 parts of methoquinone were placed in a flask and heated to 80°C. Air was introduced into the liquid and bubbled to stir the mixture. After 220 parts of di-i-propyl fumarate was added dropwise thereto over a period of 2 hours, the resulting mixture was maintained at 80°C for 1 hour and further aged at 50°C for 1 week to obtain 441 parts of a mixture containing 95% of a 3-(N-(1,2-bis(i-propoxycarbonyl)ethyl)amino)propyltriethoxysilane (an N-modified alkoxysilane compound represented by formula (5) wherein R² is ethyl, R³ is propylene, R⁴ and R⁵ are both i-propyl, and n is 0). 400 parts of mineral spirits, 320 parts of "Swasol 1000" (product name, produced by Maruzen Petrochemical Co., Ltd., a naphtha-based solvent), and 550 parts of "Duranate TSA-100" (a hexamethylene diisocyanate-based, modified isocyanurate-type polyisocyanate, product name, produced by Asahi Kasei Corporation, isocyanate group content: 20.6 wt.%) were placed into another flask and stirred at room temperature. After 397 parts of a mixture containing 95% of 3-(N-(1,2-bis(i-propoxycarbonyl)ethyl)amino)propyltriethoxysilane was added dropwise thereto over a period of 2 hours, the resulting mixture was maintained at 60°C for 1 hour and cooled to room temperature to obtain a polyisocyanate curing agent solution (HE-5) with a nonvolatile concentration of 56%. The concentration of isocyanate groups in 1 g of the curing agent solution (HE-5) was 1.08 mmol/g (1.94 mmol/g in terms of nonvolatile content).

### Example 6

179 parts of 3-aminopropyltrimethoxysilane and 0.07 parts of methoquinone were placed in a flask and heated to 80°C. Air was introduced into the liquid and bubbled to stir the mixture. After 260 parts of di-i-propyl fumarate was added dropwise thereto over a period of 2 hours, the resulting mixture was maintained at 80°C for 1 hour and further aged at 50°C for 1 week to obtain 439 parts of a mixture containing 86% of 3-(N-(1,2-bis(i-propoxycarbonyl)ethyl)amino)propyltrimethoxysilane (an N-modified alkoxysilane compound represented by formula (5) wherein R² is methyl, R³ is propylene, R⁴ and R⁵ are both i-propyl, and n is 0).

400 parts of mineral spirits, 280 parts of "Swasol 1000" (product name, produced by Maruzen Petrochemical Co., Ltd., a naphtha-based solvent), and 550 parts of "Duranate TSA-100" (product name, produced by Asahi Kasei Corporation, a hexamethylene diisocyanate-based, modified isocyanurate-type polyisocyanate, isocyanate group content: 20.6 wt%) were placed into another flask, and the resulting mixture was stirred at room temperature. After 394 parts of a mixture containing 86% of 3-(N-(1,2-bis(i-propoxycarbonyl)ethyl)amino)propyltrimethoxysilane was added dropwise thereto over a period of 2 hours, the resulting mixture was maintained at 60°C for 1 hour and cooled to room temperature to obtain a polyisocyanate curing agent solution (HE-6) with a nonvolatile concentration of 55%. The concentration of isocyanate groups in 1 g of the curing agent solution (HE-6) was 1.11 mmol/g (2.03 mmol/g in terms of nonvolatile content).

### Example 7

179 parts of 3-aminopropyltrimethoxysilane and 0.07 parts of methoquinone were placed in a flask and heated to 80°C, and air was introduced into the liquid and bubbled to stir the mixture. After 180 parts of di-i-propyl fumarate was added dropwise thereto over a period of 2 hours, the resulting mixture was maintained at 80°C for 1 hour and further aged at 50°C for 1 week to obtain 359 parts of a mixture containing 99% of 3-(N-(1,2-bis(i-propoxycarbonyl)ethyl)amino)propyltrimethoxysilane (an N-modified alkoxysilane represented by formula (5) wherein R² is methyl, R³ is propylene, R⁴ and R⁵ are both i-propyl, and n is 0).

400 parts of mineral spirits, 320 parts of "Swasol 1000" (product name, produced by Maruzen Petrochemical Co., Ltd., a naphtha-based solvent), and 550 parts of "Duranate TSA-100" (product name, produced by Asahi Kasei Corporation, a hexamethylene diisocyanate-based, modified isocyanurate-type polyisocyanate, isocyanate group content: 20.6 wt%) were placed into another flask and stirred at room temperature. After 323 parts of a mixture containing 99% of 3-(N-(1,2-bis(i-propoxycarbonyl)ethyl)amino)propyltrimethoxysilane was added dropwise thereto over a period of 2 hours, the resulting mixture was maintained at 60°C for 1 hour and cooled to room temperature to obtain a polyisocyanate curing agent solution (HE-7) with a nonvolatile concentration of 55%. The concentration of isocyanate groups in 1 g of the curing solution (HE-7) was 1.13 mmol/g (2.06 mmol/g in terms of nonvolatile content).

### Comparative Example 1

179 parts of 3-aminopropyltrimethoxysilane and 0.07 parts of methoquinone were placed in a flask and heated to 80°C. Air was introduced into the liquid and bubbled to stir the mixture. After 189 parts of diethyl fumarate was added dropwise thereto over a period of 2 hours, the resulting mixture was maintained at 80°C for 1 hour and further aged at 50°C for 1 week to obtain 368 parts of a mixture containing 95% of 3-(N-(1,2-bis(ethoxycarbonyl)ethyl)amino)propyltrimethoxysilane (in the case of an N-modified alkoxysilane represented by formula (5), R² corresponds to methyl, R³ corresponds to propylene, R⁴ and R⁵ both correspond to ethyl, and n is 0).

400 parts of mineral spirits, 320 parts of "Swasol 1000" (product name, produced by Maruzen Petrochemical Co., Ltd., a naphtha-based solvent), and 550 parts of "Duranate TSA-100" (product name, produced by Asahi Kasei Corporation, a hexamethylene diisocyanate-based, modified isocyanurate-type polyisocyanate, isocyanate group content: 20.6 wt%) were placed into another flask and stirred at room temperature. After 331 parts of a mixture containing 95% of 3-(N-(1,2-bis(ethoxycarbonyl)ethyl)amino)propyltrimethoxysilane was added dropwise thereto over a period of 2 hours, the resulting mixture was maintained at 60°C for 1 hour and cooled to room temperature to obtain a polyisocyanate curing agent solution (HR-1) (nonvolatile concentration: 54%) modified with a linear alkyl ester of an unsaturated dicarboxylic acid. The concentration of isocyanate groups in 1 g of the curing agent solution (HR-1) was 1.12 mmol/g (2.08 mmol/g in terms of nonvolatile content).

### Comparative Example 2

179 parts of 3-aminopropyltrimethoxysilane and 0.07 parts of methoquinone were placed in a flask and heated to 80°C, and air was introduced into the liquid and bubbled to stir the mixture. After 251 parts of dibutyl maleate was added dropwise thereto over a period of 2 hours, the resulting mixture was maintained at 80°C for 1 hour and further aged at 50°C for 1 week to obtain 430 parts of a mixture containing 95% of 3-(N-(1,2-bis(butoxycarbonyl)ethyl)amino)propyltrimethoxysilane (in the case of an N-modified alkoxysilane represented by formula (5), R² is methyl, R³ is propylene, R⁴ and R⁵ are both n-butyl, and n is 0).

400 parts of mineral spirits, 320 parts of "Swasol 1000" (product name, produced by Maruzen Petrochemical Co., Ltd., a naphtha-based solvent), and 550 parts of "Duranate TSA-100" (product name, produced by Asahi Kasei Corporation, a hexamethylene diisocyanate-based, modified isocyanurate-type polyisocyanate, isocyanate group content: 20.6 wt.%) were placed into another flask and stirred at room temperature. After 387 parts of a mixture containing 95% of 3-(N-(1,2-bis(butoxycarbonyl)ethyl)amino)propyltrimethoxysilane was added dropwise thereto over a period of 2 hours, the resulting mixture was maintained at 60°C for 2 hours and then cooled to room temperature to obtain a polyisocyanate curing agent solution (HR-2) modified with a linear alkyl ester of an unsaturated dicarboxylic acid (nonvolatile concentration: 55%). The concentration of isocyanate groups in 1 g of the curing agent solution (HR-2) was 1.08 mmol/g (1.96 mmol/g in terms of nonvolatile content).

### Comparative Example 3

400 parts of mineral spirits, 320 parts of "Swasol 1000" (product name, produced by Maruzen Petrochemical Co., Ltd., a naphtha-based solvent), and 880 parts of "Duranate TSA-100" (product name, produced by Asahi Kasei Corporation, a hexamethylene diisocyanate-based, modified isocyanurate-type polyisocyanate, isocyanate group content: 20.6 wt%) were placed into a container and stirred at room temperature to obtain a polyisocyanate curing agent solution (HR-3) (nonvolatile concentration: 55%) that was not modified with aminoalkoxysilane or an unsaturated carboxylic acid dialkyl ester. The concentration of isocyanate groups in 1 g of the curing agent solution (HR-3) was 2.70 mmol/g (4.90 mmol/g in terms of nonvolatile content).

### Comparative Example 4

179 parts of 3-aminopropyltrimethoxysilane and 0.07 parts of methoquinone were placed in a flask and heated to 80°C. Air was introduced into the liquid and bubbled to stir the mixture, thus obtaining 179 parts of a mixture.

400 parts of mineral spirits, 180 parts of "Swasol 1000" (product name, produced by Maruzen Petrochemical Co., Ltd., a naphtha-based solvent), and 550 parts of "Duranate TSA-100" (product name, produced by Asahi Kasei Corporation, a hexamethylene diisocyanate-based, modified isocyanurate-type polyisocyanate, isocyanate group content: 20.6 wt%) were placed into another flask, and the resulting mixture was stirred at room temperature. After 161 parts of the mixture containing 3-(N-(1,2-bis(1-methylpropoxycarbonyl)ethyl)amino)propyltrimethoxysilane was added dropwise thereto over a period of 2 hours, the resulting mixture was maintained at 60°C for 1 hour and then cooled to room temperature in an attempt to obtain a polyisocyanate curing agent solution modified with aminoalkoxysilane but unmodified with an unsaturated carboxylic acid dialkyl ester (HR-4) (nonvolatile concentration: 54%). However, the curing agent was precipitated and the obtained liquid entered a non-uniform state. Since the obtained liquid was found to be unusable as a curing agent solution, the evaluation thereafter was discontinued. The concentration of isocyanate groups in 1 g of the curing agent solution (HR-4) was 1.39 mmol/g (2.56 mmol/g in terms of nonvolatile content).

Table 1 below shows the composition, the blending molar ratio or reaction molar ratio, the state, and the residual NCO (%) of each of the curing agent solutions obtained in the Examples and Comparative Examples.

**Table 1**

| Polyisocyanate curing agent solutions | | Examples | | | | | | | Comparative Examples | | | |
|---|---|---|---|---|---|---|---|---|---|---|---|---|
| | | 1 | 2 | 3 | 4 | 5 | 6 | 7 | 1 | 2 | 3 | 4 |
| | | HE-1 | HE-2 | HE-3 | HE-4 | HE-5 | HE-6 | HE-7 | HR-1 | HR-2 | HR-3 | HR-4 |
| Aminoalkylalkoxysilane | 3-Aminopropyltrimethoxysilane | 179 | 179 | 89.5 | 89.5 | | 179 | 179 | 179 | 179 | | 179 |
| | 3-Aminopropyltriethoxysilane | | | | | 221 | | | | | | |
| Methoquinone | | 0.07 | 0.07 | 0.04 | 0.04 | 0.07 | 0.07 | 0.07 | 0.07 | 0.07 | | 0.07 |
| Unsaturated dicarboxylic acid dialkyl ester | Diethyl fumarate | | | | | | | | 189 | | | |
| | Dibutyl maleate | | | | | | | | | 251 | | |
| | Diisopropyl fumarate | 220 | | 110 | 110 | 220 | 260 | 180 | | | | |
| | Di(1-methylpropyl) fumarate | | 251 | | | | | | | | | |
| Total | | 399 | 430 | 200 | 200 | 441 | 439 | 359 | 368 | 430 | | 179 |
| Primary amino group / unsaturated carbon-carbon bond | Molar ratio | 1/1.1 | 1/1.1 | 1/1.1 | 1/1.1 | 1/1.1 | 1/1.3 | 1/0.9 | 1/1.1 | 1/1.1 | - | 1/0 |
| | Actual reaction molar ratio (Note 1) | 1/1 | 1/1 | 1/1 | 1/1 | 1/1 | 1/1 | 1/0.9 | 1/1 | 1/1 | - | 1/0 |
| Organic solvents | Mineral spirits | 400 | 400 | 320 | 280 | 400 | 400 | 400 | 400 | 400 | 400 | 400 |
| | Swasol 1000 | 320 | 320 | 256 | 224 | 320 | 280 | 320 | 320 | 320 | 320 | 180 |
| Polyisocyanate | Duranate TSA-100 | 550 | 550 | 550 | 550 | 550 | 550 | 550 | 550 | 550 | 880 | 550 |
| Mixture | | 359 | 387 | 162 | 108 | 397 | 394 | 323 | 331 | 387 | | 161 |
| Reaction molar ratio of amino group to isocyanate group (Note 2) | | 33/100 | 33/100 | 15/100 | 10/100 | 33/100 | 33/100 | 33/100 | 33/100 | 33/100 | 0/100 | 33/100 |
| Amount of isocyanate groups in 1 g of curing agent solution (mmol) | | 1.10 | 1.08 | 1.78 | 2.09 | 1.08 | 1.11 | 1.13 | 1.12 | 1.08 | 2.70 | 1.39 |
| State of curing agent solution | Initial | A | A | A | A | A | A | A | A | A | A | C Precipitation |
| | After 1 year | A | A | A | A | A | A | A | B Two-phase separation | B Two-phase separation | A | Evaluation discontinued |
| Residual NCO (%) in curing agent solution | | 99% | 99% | 99% | 99% | 99% | 99% | 99% | 85% | 88% | 100% | |

| | | | | | | | | | | | | |
|---|---|---|---|---|---|---|---|---|---|---|---|---|
| Note 1: Actual reaction molar ratio of primary amino group to unsaturated carbon-carbon bond: The actual reaction molar ratio refers to the molar ratio at which aminoalkoxysilane is added to the unsaturated carboxylic acid dialkyl ester. When an excess of unsaturated carboxylic acid dialkyl ester is blended, the excess of unsaturated carboxylic acid dialkyl ester does not undergo an addition reaction and remains unreacted. Accordingly, the numerical value of the reaction ratio is different from that of the blending ratio. Note 2: Reaction molar ratio of amino group to isocyanate group: The amino group in the reaction molar ratio refers to the total amino group amount, that is, the total amount of primary amino groups derived from alkoxysilane having an unreacted amino group and 1,2-bis(alkoxycarbonyl)ethylamino groups. | | | | | | | | | | | | |

### Evaluation Items

### (*) State of curing agent solution

Each curing solution was sealed in a 250 ml glass bottle and evaluated according to the following criteria. In the table, rank A was judged as "passed", and ranks B and C were judged as "failed."

The initial state (immediately after production) and the state after 1 year of storage in a sealed thermostatic chamber in an atmosphere at 25°C and a humidity of 60% were visually observed.
A: No abnormality; none of two-phase separation, cloudiness, and precipitates, was observed in the curing agent solution.
B: Either the two-phase separation or cloudiness was observed in the curing agent solution.
C: The curing agent was precipitated from the curing agent solution.
(*) The residual NCO (%) in the curing agent solution

The polyisocyanate curing agent solutions obtained in Examples 1 to 7 and Comparative Examples 1 to 4 were calculated according to the following formula. The higher the value, the better. [(Total mole number of NCO groups contained in a curing agent solution 12 months after production of the curing agent solution)/(Total mole number of NCO groups contained in the curing agent solution immediately after production of the curing agent solution)] × 100(%)

The storage conditions were a temperature of 25°C and a humidity of 60%. The total mole number of NCO groups was calculated by adding 10 ml of a 0.1 mol/L dibutylamine solution to 0.1 g of a sample to allow NCO groups to react, and then titrating the remaining dibutylamine with an aqueous hydrochloric acid solution by using bromophenol blue as a titration indicator.

### Preparation of Modified Polyisocyanate Curing Agent Solutions Using Alkyl Ester of Unsaturated Monocarboxylic Acid

### Example 8

179 parts of 3-aminopropyltrimethoxysilane, 0.07 parts of methoquinone, and 60 parts of "Swasol 1000" (product name, produced by Maruzen Petrochemical Co., Ltd., a naphtha-based solvent) were placed in a flask. Air was introduced into the liquid and bubbled to stir the mixture. After 128 parts of i-butyl acrylate was added dropwise thereto over a period of 2 hours, the resulting mixture was maintained at 50°C for 1 hour and further aged at 50°C for 1 week to obtain 313 parts of a mixture containing 3-(N-(2-(i-butyloxycarbonyl)ethyl)amino)propyltrimethoxysilane (an N-modified alkoxysilane represented by formula (6) wherein R² is methyl, R³ is propylene, R⁶ is i-butyl, and n is 0), 3-aminopropyltrimethoxysilane, and 3-(N,N-di(2-(i-butyloxycarbonyl) ethyl) amino) propyltrimethoxysilane (a compound represented by formula (8) wherein R² is methyl, R³ is propylene, R⁶ is i-butyl, and n is 0) in a molar ratio of 74/13/13. The total amount of primary amino groups and secondary amino groups in 1 g of the mixture was 2.78 mmol.

282 parts of mineral spirits, 231 parts of "Swasol 1000" (product name, produced by Maruzen Petrochemical Co., Ltd., a naphtha-based solvent), and 500 parts of "Duranate TSA-100" (product name, produced by Asahi Kasei Corporation, a hexamethylene diisocyanate-based, modified isocyanurate-type polyisocyanate, isocyanate group content: 20.6 wt%) were placed into another flask, and the resulting mixture was stirred at room temperature. After 132 parts of a mixture containing 3-(N-(2-(i-butyloxycarbonyl)ethyl)amino)propyltrimethoxysilane, 3-aminopropyltrimethoxysilane, and 3-(N,N-di(2-(i-butyloxycarbonyl) ethyl) amino) propyltrimethoxysilane in a molar ratio of 74/13/13 over a period of 2 hours, the resulting mixture was maintained at 60°C for 2 hours and cooled to room temperature to obtain a polyisocyanate curing agent solution (HE-8) with a nonvolatile concentration of 55%. The concentration of isocyanate groups in the curing agent solution (HE-8) was 1.82 mmol/g (3.31 mmol/g in terms of nonvolatile content).

### Example 9

179 parts of 3-aminopropyltrimethoxysilane, 0.07 parts of methoquinone, and 6 parts of "Swasol 1000" (product name, produced by Maruzen Petrochemical Co., Ltd., a naphtha-based solvent) were placed in a flask. Air was introduced into the liquid and bubbled to stir the mixture. After 128 parts of t-butyl acrylate was added dropwise thereto over a period of 2 hours, the resulting mixture was maintained at 50°C for 1 hour and further aged at 50°C for 1 week to obtain 313 parts of a mixture containing 3-(N-(2-(t-butyloxycarbonyl) ethyl) amino) propyltrimethoxysilane (an N-modified alkoxysilane represented by formula (6) wherein R² is methyl, R³ is propylene, R⁶ is t-butyl, and n is 0), 3-aminopropyltrimethoxysilane, and 3-(N,N-di(2-(t-butyloxycarbonyl) ethyl) amino) propyltrimethoxysilane (a compound represented by formula (8) wherein R² is methyl, R³ is propylene, R⁶ is t-butyl, and n is 0) in a molar ratio of 78/11/11. The total amount of primary amino groups and secondary amino groups in 1 g of the mixture was 2.84 mmol.

281 parts of mineral spirits, 230 parts of "Swasol 1000" (product name, produced by Maruzen Petrochemical Co., Ltd., a naphtha-based solvent), and 500 parts of "Duranate TSA-100" were placed into another flask, and the resulting mixture was stirred at room temperature. After 130 parts of a mixture containing 3-(N-(2-(t-butyloxycarbonyl)ethyl)amino)propyltrimethoxysilane, 3-aminopropyltrimethoxysilane, and 3-(N,N-di(2-(t-butyloxycarbonyl) ethyl) amino) propyltrimethoxysilane in a molar ratio of 78/11/11 was added dropwise thereto over a period of 2 hours, the resulting mixture was maintained at 60°C for 2 hours and cooled to room temperature to obtain a polyisocyanate curing agent solution (HE-9) with a nonvolatile concentration of 55%. The concentration of isocyanate groups in the curing agent solution (HE-9) was 1.83 mmol/g (3.32 mmol/g in terms of nonvolatile content).

### Example 10

89.5 parts of 3-aminopropyltrimethoxysilane, 0.04 parts of methoquinone, and 4 parts of "Swasol 1000" (product name, produced by Maruzen Petrochemical Co., Ltd., a naphtha-based solvent) were placed in a flask. Air was introduced into the liquid and bubbled to stir the mixture. After 92 parts of 2-ethylhexyl acrylate was added dropwise thereto over a period of 2 hours, the resulting mixture was maintained at 50°C for 1 hour and further aged at 50°C for 1 week to obtain 186 parts of a mixture containing 3-(N-(2-(2-ethylhexyloxycarbonyl)ethyl)amino)propyltrimethoxysilane (an N-modified alkoxysilane represented by formula (6) wherein R² is methyl, R³ is propylene, R⁶ is 2-ethylhexyl, and n is 0), 3-aminopropyltrimethoxysilane, and 3-(N,N-di(2-(2-ethylhexyloxycarbonyl)ethyl)amino)propyltrimethoxysilane (a compound represented by formula (8) wherein R² is methyl, R³ is propylene, R⁶ is 2-ethylhexyl, and n is 0) in a molar ratio of 66/17/17. The total amount of primary amino groups and secondary amino groups in 1 g of the mixture was 2.24 mmol.

296 parts of mineral spirits, 242 parts of "Swasol 1000" (product name, produced by Maruzen Petrochemical Co., Ltd., a naphtha-based solvent), and 500 parts of "Duranate TSA-100" were placed into another flask, and the resulting mixture was stirred at room temperature. After 164 parts of a mixture containing 3-(N-(2-(2-ethylhexyloxycarbonyl)ethyl)amino)propyltrimethoxysilane, 3-aminopropyltrimethoxysilane, and 3-(N,N-di(2-(2-ethylhexyloxycarbonyl)ethyl)amino)propyltrimethoxysilane in a molar ratio of 66/17/17 was added dropwise thereto over a period of 2 hours, the resulting mixture was maintained at 60°C for 2 hours and cooled to room temperature to obtain a polyisocyanate curing agent solution (HE-10) with a nonvolatile concentration of 55%. The concentration of isocyanate groups in the curing agent solution (HE-10) was 1.73 mmol/g (3.15 mmol/g in terms of nonvolatile content).

### Example 11

89.5 parts of 3-aminopropyltrimethoxysilane, 0.04 parts of methoquinone, and 4 parts of "Swasol 1000" (product name, produced by Maruzen Petrochemical Co., Ltd., a naphtha-based solvent) were placed in a flask. Air was introduced into the liquid and bubbled to stir the mixture. After 104 parts of isobornyl acrylate was added dropwise thereto over a period of 2 hours, the resulting mixture was maintained at 50°C for 1 hour and further aged at 50°C for 1 week to obtain 198 parts of a mixture containing 3-(N-(2-(isobornyloxycarbonyl)ethyl)amino)propyltrimethoxysilane (an N-modified alkoxysilane represented by formula (6) wherein R² is methyl, R³ is propylene, R⁶ is isobornyl, and n is 0), 3-aminopropyltrimethoxysilane, and 3-(N,N-di(2-(isobornyloxycarbonyl) ethyl) amino) propyltrimethoxysilane (a compound represented by formula (8) wherein R² is methyl, R³ is propylene, R⁶ is isobornyl, and n is 0) in a molar ratio of 74/13/13. The total amount of primary amino groups and secondary amino groups in 1 g of the mixture was 2.20 mmol.

297 parts of mineral spirits, 243 parts of "Swasol 1000" (product name, produced by Maruzen Petrochemical Co., Ltd., a naphtha-based solvent), and 500 parts of "Duranate TSA-100" were placed into another flask, and the resulting mixture was stirred at room temperature. After 167 parts of a mixture containing 3-(N-(2-(isobornyloxycarbonyl) ethyl) amino) propyltrimethoxysilane, 3-aminopropyltrimethoxysilane, and 3-(N,N-di(2-(isobornyloxycarbonyl) ethyl) amino) propyltrimethoxysilane in a molar ratio of 74/13/13 was added dropwise thereto over a period of 2 hours, the resulting mixture was maintained at 60°C for 2 hours and cooled to room temperature to obtain a polyisocyanate curing agent solution (HE-11) with a nonvolatile concentration of 55%. The concentration of isocyanate groups in the curing agent solution (HE-11) was 1.73 mmol/g (3.14 mmol/g in terms of nonvolatile content).

### Example 12

221 parts of 3-aminopropyltriethoxysilane, 0.07 parts of methoquinone, and 7 parts of "Swasol 1000" (product name, produced by Maruzen Petrochemical Co., Ltd., a naphtha-based solvent) were placed in a flask. Air was introduced into the liquid and bubbled to stir the mixture. After 128 parts of i-butyl acrylate was added dropwise thereto over a period of 2 hours, the resulting mixture was maintained at 50°C for 1 hour and further aged at 50°C for 1 week to obtain 356 parts of a mixture containing 3-(N-(2-(i-butyloxycarbonyl) ethyl) amino) propyltrimethoxysilane (an N-modified alkoxysilane represented by formula (6) wherein R² is methyl, R³ is propylene, R⁶ is i-butyl, and n is 0), 3-aminopropyltrimethoxysilane, and 3-(N,N-di(2-(i-butyloxycarbonyl) ethyl) amino) propyltrimethoxysilane (a compound represented by formula (8), wherein R² is methyl, R³ is propylene, R⁶ is i-butyl, and n is 0) in a molar ratio of 80/10/10. The total amount of primary amino groups and secondary amino groups in 1 g of the mixture was 2.53 mmol. 298 parts of mineral spirits, 235 parts of "Swasol 1000" (product name, produced by Maruzen Petrochemical Co., Ltd., a naphtha-based solvent), and 500 parts of "Duranate TSA-100" were placed into another flask, and the resulting mixture was stirred at room temperature. After 145 parts of a mixture containing 3-(N-(2-(i-butyloxycarbonyl)ethyl)amino)propyltrimethoxysilane, 3-aminopropyltrimethoxysilane, and 3-(N,N-di(2-(i-butyloxycarbonyl)ethyl)amino)propyltrimethoxysilane was added dropwise thereto in a molar ratio of 80/10/10 over a period of 2 hours, the resulting mixture was maintained at 60°C for 2 hours and cooled to room temperature to obtain a polyisocyanate curing agent solution (HE-12) with a nonvolatile concentration of 55%. The concentration of isocyanate groups in the curing agent solution (HE-12) was 1.78 mmol/g (3.24 mmol/g in terms of nonvolatile content).

### Example 13

179 parts of 3-aminopropyltrimethoxysilane, 0.07 parts of methoquinone, and 60 parts of "Swasol 1000" (product name, produced by Maruzen Petrochemical Co., Ltd., a naphtha-based solvent) were placed in a flask. Air was introduced into the liquid and bubbled to stir the mixture. After 128 parts of t-butyl acrylate was added dropwise thereto over a period of 2 hours, the resulting mixture was maintained at 50°C for 1 hour and further aged at 50°C for 1 week to obtain 313 parts of a mixture containing 3-(N-(2-(t-butyloxycarbonyl) ethyl) amino) propyltrimethoxysilane (an N-modified alkoxysilane represented by formula (6) wherein R² is methyl, R³ is propylene, R⁶ is t-butyl, and n is 0), 3-aminopropyltrimethoxysilane, and 3-(N,N-di(2-(t-butyloxycarbonyl) ethyl) amino) propyltrimethoxysilane (a compound represented by formula (8) wherein R² is methyl, R³ is propylene, R⁶ is t-butyl, and n is 0) in a molar ratio of 78/11/11. The total amount of primary amino groups and secondary amino groups in 1 g of the mixture was 2.84 mmol.

348 parts of mineral spirits, 284 parts of "Swasol 1000" (product name, produced by Maruzen Petrochemical Co., Ltd., a naphtha-based solvent), and 500 parts of "Duranate TSA-100" were placed into another flask, and the resulting mixture was stirred at room temperature. After 285 parts of a mixture containing 3-(N-(2-(t-butyloxycarbonyl)ethyl)amino)propyltrimethoxysilane, 3-aminopropyltrimethoxysilane, and 3-(N,N-di(2-(t-butyloxycarbonyl)ethyl)amino)propyltrimethoxysilane were added dropwise thereto in a molar ratio of 78/11/11 over a period of 2 hours, the resulting mixture was maintained at 60°C for 2 hours and cooled to room temperature to obtain a polyisocyanate curing agent solution (HE-13) with a nonvolatile concentration of 55%. The concentration of isocyanate groups in the curing agent solution (HE-13) was 1.16 mmol/g (2.11 mmol/g in terms of nonvolatile content).

### Example 14

89.5 parts of 3-aminopropyltrimethoxysilane, 0.04 parts of methoquinone, and 4 parts of "Swasol 1000" (product name, produced by Maruzen Petrochemical Co., Ltd., a naphtha-based solvent) were placed in a flask. Air was introduced into the liquid and bubbled to stir the mixture. After 104 parts of isobornyl acrylate was added dropwise thereto over a period of 2 hours, the resulting mixture was maintained at 50°C for 1 hour and further aged at 50°C for 1 week to obtain 198 parts of a mixture containing 3-(N-(2-(isobornyloxycarbonyl)ethyl)amino)propyltrimethoxysilane (an N-modified alkoxysilane represented by formula (6) wherein R² is methyl, R³ is propylene, R⁶ is isobornyl, and n is 0), 3-aminopropyltrimethoxysilane, and 3-(N,N-di(2-(isobornyloxycarbonyl) ethyl) amino) propyltrimethoxysilane (a compound represented by formula (8) wherein R² is methyl, R³ is propylene, R⁶ is isobornyl, and n is 0) in a molar ratio of 74/13/13. The total amount of primary amino groups and secondary amino groups in 1 g of the mixture was 2.20 mmol.

273 parts of mineral spirits, 223 parts of "Swasol 1000" (product name, produced by Maruzen Petrochemical Co., Ltd., a naphtha-based solvent), and 500 parts of "Duranate TSA-100" were placed into another flask, and the resulting mixture was stirred at room temperature. After 111 parts of a mixture containing 3-(N-(2-(isobornyloxycarbonyl) ethyl) amino) propyltrimethoxysilane, 3-aminopropyltrimethoxysilane, and 3-(N,N-di(2-(isobornyloxycarbonyl) ethyl) amino) propyltrimethoxysilane in a molar ratio of 74/13/13 was added dropwise over a period of 2 hours, the resulting mixture was maintained at 60°C for 2 hours and cooled to room temperature to obtain a polyisocyanate curing agent solution (HE-14) with a nonvolatile concentration of 55%. The concentration of isocyanate groups in the curing agent solution (HE14) was 1.99 mmol/g (3.62 mmol/g in terms of nonvolatile content).

### Example 15

179 parts of 3-aminopropyltrimethoxysilane, 0.07 parts of methoquinone, and 6 parts of "Swasol 1000" (product name, produced by Maruzen Petrochemical Co., Ltd., a naphtha-based solvent) were placed in a flask. Air was introduced into the liquid and bubbled to stir the mixture. After 141 parts of i-butyl acrylate was added dropwise thereto over a period of 2 hours, the resulting mixture was maintained at 50°C for 1 hour and further aged at 50°C for 1 week to obtain 326 parts of a mixture containing 3-(N-(2-(i-butyloxycarbonyl) ethyl) amino) propyltrimethoxysilane (an N-modified alkoxysilane represented by formula (6) wherein R² is methyl, R³ is propylene, R⁶ is i-butyl, and n is 0), 3-aminopropyltrimethoxysilane, and 3-(N,N-di(2-(i-butyloxycarbonyl) ethyl) amino) propyltrimethoxysilane (a compound represented by formula (8) wherein R² is methyl, R³ is propylene, R⁶ is i-butyl, and n is 0) in a molar ratio of 77/6/17. The total amount of primary amino groups and secondary amino groups in 1 g of the mixture was 2.55 mmol.

308 parts of mineral spirits, 252 parts of "Swasol 1000" (product name, produced by Maruzen Petrochemical Co., Ltd., a naphtha-based solvent), and 500 parts of "Duranate TSA-100" were placed into another flask, and the resulting mixture was stirred at room temperature. After 192 parts of a mixture containing 3-(N-(2-(i-butyloxycarbonyl)ethyl)amino)propyltrimethoxysilane, 3-aminopropyltrimethoxysilane, and 3-(N,N-di(2-(i-butyloxycarbonyl) ethyl) amino) propyltrimethoxysilane in a molar ratio of 77/6/17 was added dropwise over a period of 2 hours, the resulting mixture was maintained at 60°C for 2 hours and cooled to room temperature to obtain a polyisocyanate curing agent solution (HE-15) with a nonvolatile concentration of 55%. The concentration of isocyanate groups in the curing agent solution (HE-15) was 1.57 mmol/g (2.85 mmol/g in terms of nonvolatile content).

### Example 16

110.5 parts of 3-aminopropyltriethoxysilane, 0.04 parts of methoquinone, and 4 parts of "Swasol 1000" (product name, produced by Maruzen Petrochemical Co., Ltd., a naphtha-based solvent) were placed in a flask. Air was introduced into the liquid and bubbled to stir the mixture. After 93.6 parts of isobornyl acrylate was added dropwise thereto over a period of 2 hours, the resulting mixture was maintained at 50°C for 1 hour and further aged at 50°C for 1 week to obtain 208 parts of a mixture containing 3-(N-(2-(isobornyloxycarbonyl)ethyl)amino)propyltrimethoxysilane (an N-modified alkoxysilane represented by formula (6) wherein R² is methyl, R³ is propylene, R⁶ is isobornyl, and n is 0), 3-aminopropyltrimethoxysilane, and 3-(N,N-di(2-(isobornyloxycarbonyl)ethyl)amino)propyltrimethoxysilane (an N-modified alkoxysilane compound represented by formula (8) wherein R² is methyl, R³ is propylene, R⁶ is isobornyl, and n is 0) in a molar ratio of 80/15/5. The total amount of primary amino groups and secondary amino groups in 1 g of the mixture was 2.28 mmol.

271 parts of mineral spirits, 222 parts of "Swasol 1000" (product name, produced by Maruzen Petrochemical Co., Ltd., a naphtha-based solvent), and 500 parts of "Duranate TSA-100" were placed into another flask, and the resulting mixture was stirred at room temperature. After 108 parts of a mixture containing 3-(N-(2-(isobornyloxycarbonyl) ethyl) amino) propyltrimethoxysilane, 3-aminopropyltrimethoxysilane, and 3-(N,N-di(2-(isobornyloxycarbonyl) ethyl) amino) propyltrimethoxysilane in a molar ratio of 80/15/15 was added dropwise thereto over a period of 2 hours, the resulting mixture was maintained at 60°C for 2 hours and cooled to room temperature to obtain a polyisocyanate curing agent solution (HE-16) with a nonvolatile concentration of 55%. The concentration of isocyanate groups in the curing agent solution (HE-16) was 2.01 mmol/g (3.65 mmol/g in terms of nonvolatile content).

### Comparative Example 5

179 parts of 3-aminopropyltrimethoxysilane, 0.07 parts of methoquinone, and 80 parts of "Swasol 1000" (product name, produced by Maruzen Petrochemical Co., Ltd., a naphtha-based solvent) were placed in a flask. Air was introduced into the liquid and bubbled to stir the mixture. After 128 parts of n-butyl acrylate was added dropwise thereto over a period of 2 hours, the resulting mixture was maintained at 50°C for 1 hour and further aged at 50°C for 1 week to obtain 313 parts of a mixture containing 3-(N-(2-(n-butyloxycarbonyl) ethyl) amino) propyltrimethoxysilane (an N-modified alkoxysilane compound represented by formula (6) wherein R² is methyl, R³ is propylene, R⁶ is n-butyl, and n is 0), 3-aminopropyltrimethoxysilane, and 3-(N,N-di(2-(n-butyloxycarbonyl) ethyl) amino) propyltrimethoxysilane (a compound represented by formula (8) wherein R² is methyl, R³ is propylene, R⁶ is n-butyl, and n is 0) in a molar ratio of 66/17/17. The total amount of primary amino groups and secondary amino groups in 1 g of the mixture was 2.65 mmol.

285 parts of mineral spirits, 233 parts of "Swasol 1000" (product name, produced by Maruzen Petrochemical Co., Ltd., a naphtha-based solvent), and 500 parts of "Duranate TSA-100" were placed into another flask, and the resulting mixture was stirred at room temperature. After 139 parts of a mixture containing 3-(N-(2-(n-butyloxycarbonyl)ethyl)amino)propyltrimethoxysilane, 3-aminopropyltrimethoxysilane, and 3-(N,N-di(2-(n-butyloxycarbonyl) ethyl) amino) propyltrimethoxysilane in a molar ratio of 66/17/17 was added over a period of 2 hours, the resulting mixture was maintained at 60°C for 2 hours and cooled to room temperature to obtain a polyisocyanate curing agent solution (HR-5) with a nonvolatile concentration of 55%. The concentration of isocyanate groups in the curing agent solution (HR-5) was 1.80 mmol/g (3.28 mmol/g in terms of nonvolatile content) .

### Comparative Example 6

179 parts of 3-aminopropyltrimethoxysilane, 0.07 parts of methoquinone, and 6 parts of "Swasol 1000" (product name, produced by Maruzen Petrochemical Co., Ltd., a naphtha-based solvent) were placed in a flask. Air was introduced into the liquid and bubbled to stir the mixture. After 100 parts of ethyl acrylate was added dropwise thereto over a period of 2 hours, the resulting mixture was maintained at 50°C for 1 hour and further aged at 50°C for 1 week to obtain 285 parts of a mixture containing 3-(N-(2-(ethyloxycarbonyl)ethyl)amino)propyltrimethoxysilane (an N-modified alkoxysilane represented by formula (6) wherein R² is methyl, R³ is propylene, R⁶ is ethyl, and n is 0), 3-aminopropyltrimethoxysilane, and 3-(N,N-di(2-(ethyloxycarbonyl)ethyl)amino)propyltrimethoxysilane (a compound represented by formula (8) wherein R² is methyl, R³ is propylene, R⁶ is ethyl, and n is 0) in a molar ratio of 66/17/17. The total amount of primary amino groups and secondary amino groups in 1 g of the mixture was 2.91 mmol.

297 parts of mineral spirits, 243 parts of "Swasol 1000" (product name, produced by Maruzen Petrochemical Co., Ltd., a naphtha-based solvent), and 500 parts of "Duranate TSA-100" were placed into another flask, and the resulting mixture was stirred at room temperature. After 169 parts of a mixture containing 3-(N-(2-(ethyloxycarbonyl)ethyl)amino)propyltrimethoxysilane, 3-aminopropyltrimethoxysilane, and 3-(N,N-di(2-(ethyloxycarbonyl)ethyl)amino)propyltrimethoxysilane in a molar ratio of 66/17/17 was added dropwise over a period of 2 hours, the resulting mixture was maintained at 60°C for 2 hours and cooled to room temperature to obtain a polyisocyanate curing agent solution (HR-6) with a nonvolatile concentration of 55%. The concentration of isocyanate groups contained in the curing agent solution (HR-6) was 1.62 mmol/g (2.95 mmol/g in terms of nonvolatile content).

### Comparative Example 7

225 parts of mineral spirits, 184 parts of "Swasol 1000" (product name, produced by Maruzen Petrochemical Co., Ltd., a naphtha-based solvent), and 500 parts of "Duranate TSA-100" were placed into a container, and the resulting mixture was stirred at room temperature to obtain a polyisocyanate curing agent solution that is not modified with aminoalkoxysilane or an unsaturated carboxylic acid dialkyl ester (HR-7) (nonvolatile concentration: 55%). The concentration of isocyanate groups in 1 g of the curing agent solution (HR-7) was 2.70 mmol/g (4.91 mmol/g in terms of nonvolatile content).

### Comparative Example 8

179 parts of 3-aminopropyltrimethoxysilane, 0.07 parts of methoquinone, and 4 parts of "Swasol 1000" (product name, produced by Maruzen Petrochemical Co., Ltd., a naphtha-based solvent) were placed in a flask and heated to 80°C. Air was introduced into the liquid and bubbled to stir the mixture, thus obtaining 183 parts of a mixture.

254 parts of mineral spirits, 208 parts of "Swasol 1000" (product name, produced by Maruzen Petrochemical Co., Ltd., a naphtha-based solvent), and 500 parts of "Duranate TSA-100" were placed into another flask, and the resulting mixture was stirred at room temperature. After 67 parts of the mixture containing 3-aminopropyltrimethoxysilane was added dropwise over a period of 2 hours, the resulting mixture was maintained at 60°C for 1 hour and cooled to room temperature in an attempt to obtain a polyisocyanate curing agent solution (HR-8) (nonvolatile concentration: 54%) modified with aminoalkoxysilane but unmodified with an unsaturated carboxylic acid dialkyl ester. However, the curing agent was precipitated and the liquid entered a non-uniform state, which was unusable as a curing agent solution. Therefore, further evaluation was discontinued.

**Table 2**

| Polyisocyanate curing agent solutions | | Examples | | | | | | | | | Comparative Examples | | | |
|---|---|---|---|---|---|---|---|---|---|---|---|---|---|---|
| | | 8 | 9 | 10 | 11 | 12 | 13 | 14 | 15 | 16 | 5 | 6 | 7 | 8 |
| | | HE-8 | HE-9 | HE-10 | HE-11 | HE-12 | HE-13 | HE-14 | HE-15 | HE-16 | HR-5 | HR-6 | HR-7 | HR-8 |
| Aminoalkoxysilane | 3-Aminopropyltrimethoxysilane | 179 | 179 | 89.5 | 89.5 | | 179 | 89.5 | 179 | | 179 | 179 | | 179 |
| | 3-Aminopropyltriethoxysilane | | | | | 221 | | | | 110.5 | | | | |
| Methoquinone | | 0.07 | 0.07 | 0.04 | 0.04 | 0.07 | 0.07 | 0.04 | 0.07 | 0.04 | 0.07 | 0.07 | | 0.07 |
| Unsaturated mono-carboxylic acid alkyl ester | Ethyl acrylate | | | | | | | | | | | 100 | | |
| | n-Butyl acrylate | | | | | | | | | | 128 | | | |
| | i-Butyl acrylate | 128 | | | | 128 | | | 141 | | | | | |
| | t-Butyl acrylate | | 128 | | | | 128 | | | | | | | |
| | 2-Ethylhexyl acrylate | | | 92 | | | | | | | | | | |
| | Isobornyl acrylate | | | | 104 | | | 104 | | 93.6 | | | | |
| Organic Solvent | Swasol 1000 | 6 | 6 | 4 | 4 | 7 | 6 | 4 | 6 | 4 | 6 | 6 | | 4 |
| Total | | 313 | 313 | 186 | 198 | 356 | 313 | 198 | 326 | 208 | 313 | 285 | | 183 |
| Blending molar ratio of primary amino group to unsaturated carbon-carbon bond | | 1/1 | 1/1 | 1/1 | 1/1 | 1/1 | 1/1 | 1/1 | 1/1.1 | 1/0.9 | 1/1 | 1/1 | - | 1/0 |
| Molar ratio of 3-(N-(2-(alkoxycarbonyl)ethyl)amino)propyltrialkoxysilane, 3-aminopropyltrialkoxysilane, and 3-(N,N-di(2-(alkoxycarbonyl)ethyl)amino)propyltrialkoxysilane in the mixture (Note 3) | | 74/13/ 13 | 78/11/ 11 | 66/17 /17 | 74/13/ 13 | 80/10/ 10 | 78/11/ 11 | 74/13/ 13 | 77/6/ 17 | 80/15/5 | 66/17/ 17 | 66/17/ 17 | - | 0/100/0 |
| Total amount of primary amino groups and secondary amino groups in 1 g of the mixture (mmol) | | 2.78 | 2.84 | 2.24 | 2.20 | 2.53 | 2.84 | 2.20 | 2.55 | 2.28 | 2.65 | 2.91 | - | 5.46 |
| Organic solvent | Mineral spirits | 282 | 281 | 296 | 297 | 288 | 348 | 273 | 308 | 271 | 285 | 297 | 225 | 254 |
| | Swasol 1000 | 231 | 230 | 242 | 243 | 235 | 284 | 223 | 252 | 222 | 233 | 243 | 184 | 208 |
| Polyisocyanate | Duranate TSA-100 | 500 | 500 | 500 | 500 | 500 | 500 | 500 | 500 | 500 | 500 | 500 | 500 | 500 |
| Mixture | | 132 | 130 | 164 | 167 | 145 | 285 | 111 | 192 | 108 | 139 | 169 | | 67 |
| Reaction molar ratio of primary amino groups and secondary amino groups to Isocyanate groups | | 15/10 0 | 15/100 | 15/100 | 15/100 | 15/100 | 33/100 | 10/100 | 20/100 | 10/100 | 15/100 | 20/100 | - | 15/100 |
| Amount of isocyanate groups in 1 g of curing agent solution (mmol) | | 1.82 | 1.83 | 1.73 | 1.73 | 1.78 | 1.16 | 1.99 | 1.57 | 2.01 | 1.80 | 1.62 | 2.70 | Evaluation discontinued |
| State of curing agent solution | 20°C, 3 months | A | A | A | A | A | A | A | A | A | A | A | A | Precipitation of syrup-like polymer C Evaluation discontinued |
| | 5°C, 2W | A | A | A | A | A | A | A | A | A | Cloudiness B Evaluation discontinued | Cloudiness B Evaluation discontinued | A | Precipitation of syrup-like polymer C Evaluation discontinued |

| | | | | | | | | | | | | | | |
|---|---|---|---|---|---|---|---|---|---|---|---|---|---|---|
| Note 3: Molar ratio of 3-(N-(2-(alkoxycarbonyl)ethyl)amino)propyltrialkoxysilane, 3-aminopropyltrialkoxysilane, and 3-(N,N-di(2-(alkoxycarbonyl)ethyl)amino)propyltrialkoxysilane in the mixture: calculated by conversion from the proton integral value obtained by H-NMR (proton nuclear magnetic resonance analysis). | | | | | | | | | | | | | | |

### Evaluation Item

### (*) State of Curing Agent Solution

After production, each curing agent solution was sealed in a 250 ml glass bottle and visually observed for its state after storage in a sealed state in a thermostatic chamber under an atmosphere of 20°C and a 60% humidity for 3 months and for its state after storage in a sealed state in a thermostatic chamber under an atmosphere of 5°C and a humidity of 60% for 2 weeks. In Table 2, rank A is judged as passed, and ranks B and C are judged as failed.
A: None of the two-phase separation, cloudiness, and precipitates of the curing agent solution was observed in the curing agent solution.
B: Either two-phase separation or cloudiness of the curing agent solution was observed.
C: A starch syrup-like polymer was precipitated from the curing agent solution.

### Production of Modified Polyisocyanates Using Saturated Carboxylic Acid Alkyl Ester

### Example 17

89 parts of methyl acetate, which is a linear saturated ester, and 179 parts of 3-aminopropyltrimethoxysilane were placed in a flask under a nitrogen atmosphere and stirred at room temperature. 0.58 parts of a 28% sodium methoxide solution in methanol was added as a catalyst, stirred, heated to 70°C, and aged for 1 day. The conversion of 3-aminopropyltrimethoxysilane was 97%, and methanol was produced as a by-product in an amount approximately equimolar to that of the reacted 3-aminopropyltrimethoxysilane. After 1.1 parts of bis(2-ethylhexyl)phosphoric acid was then added as an acidic compound, the resulting mixture was concentrated by removing methanol and the remaining methyl acetate under reduced pressure at 50°C to 70°C. As a result, 222 parts of a crude 3-acetamidopropyltrimethoxysilane (a compound represented by formula (7) wherein R² is methyl, R³ is propylene, R⁷ is methyl, and n is 0) containing a catalyst-derived residue was obtained as an N-acylated intermediate. 250 parts of mineral spirits, 204 parts of "Swasol 1000" (product name, produced by Maruzen Petrochemical Co., Ltd., a naphtha-based solvent), and 500 parts of "Duranate TSA-100" were placed into another flask under a nitrogen atmosphere, and the resulting mixture was stirred at room temperature. 55 parts of a crude 3-acetamidopropyltrimethoxysilane was added thereto, and the resulting mixture was heated at 110°C for 10 hours to adduct a secondary amide group to an isocyanate group, thus obtaining a polyisocyanate curing agent solution (HE-17) with a nonvolatile concentration of 55%. The concentration of isocyanate groups in the curing agent solution (HE-17) was 2.14 mmol/g (3.89 mmol/g in terms of nonvolatile content).

### Example 18

89 parts of methyl acetate, which is a linear saturated ester, and 179 parts of 3-aminopropyltrimethoxysilane were placed in a flask under a nitrogen atmosphere and stirred at room temperature. 0.58 parts of a 28% sodium methoxide solution in methanol was added as a catalyst, stirred, heated to 70°C, and aged for 1 day. The conversion of 3-aminopropyltrimethoxysilane was 97%, and methanol was produced as a by-product in an amount approximately equimolar to that of the reacted 3-aminopropyltrimethoxysilane. After 0.58 parts of p-toluenesulfonic acid was then added as an acidic compound, the resulting mixture was concentrated by removing methanol and the remaining methyl acetate under reduced pressure at 50°C to 70°C. As a result, 222 parts of a crude 3-acetamidopropyltrimethoxysilane (a compound represented by formula (7) wherein R² is methyl, R³ is propylene, R⁷ is methyl, and n is 0) containing a catalyst-derived residue was obtained as an N-acylated intermediate. 62 parts of butyl acetate and 500 parts of "Duranate TSA-100" were placed into another flask under a nitrogen atmosphere, and the resulting mixture was stirred at room temperature. 55 parts of a crude 3-acetamidopropyltrimethoxysilane was added thereto, and the mixture was heated at 110°C for 7 hours to adduct a secondary amide group to an isocyanate group, thus obtaining a polyisocyanate curing agent solution (HE-18) with a nonvolatile concentration of 90%. The concentration of isocyanate groups in the curing agent solution (HE-18) was 3.49 mmol/g (3.88 mmol/g in terms of nonvolatile content).

### Example 19

89 parts of methyl acetate, which is a linear saturated ester, and 179 parts of 3-aminopropyltrimethoxysilane were placed in a flask under a nitrogen atmosphere and stirred at room temperature. 0.58 parts of a 28% sodium methoxide solution in methanol was added thereto as a catalyst, and the resulting mixture was stirred, heated to 70°C, and aged for 1 day. The conversion of 3-aminopropyltrimethoxysilane was 97%, and methanol was produced as a by-product in an amount approximately equimolar to that of the reacted 3-aminopropyltrimethoxysilane. After 1.1 parts of bis(2-ethylhexyl)phosphoric acid was then added as an acidic compound, the resulting mixture was concentrated by removing methanol and the remaining methyl acetate under reduced pressure at 50°C to 70°C. As a result, 222 parts of a crude 3-acetamidopropyltrimethoxysilane (a compound represented by formula (7) wherein R² is methyl, R³ is propylene, R⁷ is methyl, and n is 0) containing a catalyst-derived residue was obtained as an N-acylated intermediate. 62 parts of butyl acetate and 500 parts of "Duranate TSA-100" were placed into another flask under a nitrogen atmosphere, and the resulting mixture was stirred at room temperature. 55 parts of a crude 3-acetamidopropyltrimethoxysilane was added thereto, and the resulting mixture was heated at 110°C for 7 hours to adduct a secondary amide group to an isocyanate group, thus obtaining a polyisocyanate curing agent solution (HE-19) with a nonvolatile concentration of 90%. The concentration of isocyanate groups in the curing agent solution (HE-19) was 3.49 mmol/g (3.88 mmol/g in terms of nonvolatile content).

### Example 20

89 parts of methyl acetate, which is a linear saturated ester, and 179 parts of 3-aminopropyltrimethoxysilane were placed in a flask under a nitrogen atmosphere and stirred at room temperature. 0.58 parts of a 28% sodium methoxide solution in methanol was added as a catalyst, stirred, heated to 70°C, and aged for 1 day. The conversion of 3-aminopropyltrimethoxysilane was 97%, and methanol was produced as a by-product in an amount approximately equimolar to that of the reacted 3-aminopropyltrimethoxysilane. After 1.03 parts of dodecylbenzenesulfonic acid was then added as an acidic compound, the resulting mixture was concentrated by removing methanol and the remaining methyl acetate under reduced pressure at 50°C to 70°C. As a result, 222 parts of a crude 3-acetamidopropyltrimethoxysilane (a compound represented by formula (7) wherein R² is methyl, R³ is propylene, R⁷ is methyl, and n is 0) containing a catalyst-derived residue was obtained as an N-acylated intermediate. 62 parts of butyl acetate and 500 parts of "Duranate TSA-100" were placed into another flask under a nitrogen atmosphere, and the resulting mixture was stirred at room temperature. 55 parts of a crude 3-acetamidopropyltrimethoxysilane was added thereto, and the mixture was heated at 110°C for 7 hours to adduct a secondary amide group to an isocyanate group, thus obtaining a polyisocyanate curing agent solution (HE-20) with a nonvolatile concentration of 90%. The concentration of isocyanate groups in the curing agent solution (HE-20) was 3.49 mmol/g (3.88 mmol/g in terms of nonvolatile content).

### Example 21

190 parts of methyl octanoate, which is a linear saturated ester, and 179 parts of 3-aminopropyltrimethoxysilane were placed in a flask under a nitrogen atmosphere and stirred at room temperature. 1.16 parts of a 28% sodium methoxide solution in methanol was added thereto as a catalyst, and the resulting mixture was stirred, heated to 70°C, and aged for 2 days. The conversion of 3-aminopropyltrimethoxysilane was 94%, and methanol was produced as a by-product in an amount approximately equimolar to that of the reacted 3-aminopropyltrimethoxysilane. After 2.2 parts of bis(2-ethylhexyl)phosphoric acid was then added as an acidic compound, the resulting mixture was concentrated by removing methanol under reduced pressure at 50°C to 70°C to obtain 331 parts of a crude 3-octanamidopropyltrimethoxysilane (a compound represented by formula (7) wherein R² is methyl, R³ is propylene, R⁷ is heptyl, and n is 0) containing a catalyst-derived residue as an N-acylated intermediate. 65 parts of butyl acetate and 500 parts of "Duranate TSA-100" were placed into another flask under a nitrogen atmosphere, and the resulting mixture was stirred at room temperature. 82 parts of a crude 3-octanamidopropyltrimethoxysilane was added thereto, and the resulting mixture was heated at 110°C for 12 hours to adduct a secondary amide group to an isocyanate group. After cooling, the resulting mixture was filtered through filter paper to obtain a polyisocyanate curing agent solution (HE-21) with a nonvolatile concentration of 90%. The concentration of isocyanate groups in the curing agent solution (HE-21) was 3.18 mmol/g (3.53 mmol/g in terms of nonvolatile content).

### Example 22

106 parts of methyl propionate, which is a linear saturated ester, and 179 parts of 3-aminopropyltrimethoxysilane were placed in a flask under a nitrogen atmosphere and stirred at room temperature. 0.58 parts of a 28% sodium methoxide solution in methanol was added thereto as a catalyst, and the resulting mixture was stirred, heated to 70°C, and aged for 2 days. The conversion of 3-aminopropyltrimethoxysilane was 97%, and methanol was produced as a by-product in an amount approximately equimolar to that of the reacted 3-aminopropyltrimethoxysilane. After 1.1 parts of bis(2-ethylhexyl)phosphoric acid was then added as an acidic compound, the resulting mixture was concentrated by removing methanol and the remaining methyl propionate under reduced pressure at 50°C to 80°C to thereby obtain 236 parts of a crude 3-propanamidopropyltrimethoxysilane (a compound represented by formula (7) wherein R² is methyl, R³ is propylene, R⁷ is ethyl, and n is 0) containing a catalyst-derived residue was obtained as an N-acylated intermediate. 60 parts of butyl acetate and 500 parts of "Duranate TSA-100" were placed into another flask under a nitrogen atmosphere, and the resulting mixture was stirred at room temperature. 41 parts of a crude 3-propanamidopropyltrimethoxysilane was added thereto, and the resulting mixture was heated at 110°C for 9 hours to adduct a secondary amide group to an isocyanate group, thus obtaining a polyisocyanate curing agent solution (HE-22) with a nonvolatile concentration of 90%. The concentration of isocyanate groups in the curing agent solution (HE-22) was 3.67 mmol/g (4.08 mmol/g in terms of nonvolatile content).

### Example 23

96 parts of methyl acetate, which is a linear saturated ester, and 179 parts of 3-aminopropyltrimethoxysilane were placed in a flask under a nitrogen atmosphere and stirred at room temperature. 0.58 parts of a 28% sodium methoxide solution in methanol was added thereto as a catalyst, and the resulting mixture was stirred, heated to 70°C, and aged for 1 day. The conversion of 3-aminopropyltrimethoxysilane was 98%, and methanol was produced as a by-product in an amount approximately equimolar to that of the reacted 3-aminopropyltrimethoxysilane. After 1.1 parts of bis(2-ethylhexyl)phosphoric acid was then added as an acidic compound, the resulting mixture was concentrated by removing methanol and the remaining methyl acetate under reduced pressure at 50°C to 70°C and further distilled under reduced pressure at a degree of vacuum of 4 mmHg to obtain 200 parts of a purified 3-acetamidopropyltrimethoxysilane (a compound represented by formula (7) wherein R² is methyl, R³ is propylene, R⁷ is methyl, and n is 0) as an N-acylated intermediate. 114 parts of propylene glycol monomethyl ether acetate and 500 parts of "Sumidur N-3300" (product name, produced by Sumitomo Covestro Urethane Co., Ltd., a hexamethylene diisocyanate-based isocyanurate polyisocyanate, isocyanate group content: 21.8 wt%) were placed into another flask under a nitrogen atmosphere and stirred at room temperature. 144 parts of a purified 3-acetamidopropyltrimethoxysilane was added thereto, and the resulting mixture was heated at 110°C for 9 hours to adduct a secondary amide group to an isocyanate group, thus obtaining a polyisocyanate curing agent solution (HE-23) with a nonvolatile concentration of 85%. The concentration of isocyanate groups in the curing agent solution (HE-23) was 2.50 mmol/g (2.94 mmol/g in terms of nonvolatile content).

### Example 24

206 parts of methyl 3,3,5-trimethylhexanoate having two hydrogen atoms at the α-position, which is a branched saturated ester, and 179 parts of 3-aminopropyltrimethoxysilane were placed in a flask under a nitrogen atmosphere and stirred at room temperature. 1.16 parts of a 28% sodium methoxide solution in methanol was added as a catalyst, stirred, heated to 70°C, and aged for 2 days. The conversion of 3-aminopropyltrimethoxysilane was 71%, and methanol was produced as a by-product in an amount approximately equimolar to that of the reacted 3-aminopropyltrimethoxysilane. After 2.2 parts of bis(2-ethylhexyl)phosphoric acid was then added as an acidic compound, the resulting mixture was concentrated by removing methanol and the remaining methyl acetate under reduced pressure at 50°C to 70°C and further distilled under reduced pressure at a degree of vacuum of 4 mmHg to obtain 170 parts of a purified 3-(3,3,5-trimethylhexanamido)propyltrimethoxysilane (a compound represented by formula (7) wherein R² is methyl, R³ is propylene, R⁷ is 2,2,4-trimethylpentyl, and n is 0) as an N-acylated intermediate. 64 parts of butyl acetate and 500 parts of "Duranate TSA-100" were placed into another flask under a nitrogen atmosphere, and the resulting mixture was stirred at room temperature. 79 parts of a purified 3-(3,3,5-trimethylhexanamido)propyltrimethoxysilane was added thereto, and the resulting mixture was heated at 110°C for 9 hours to adduct a secondary amide group to an isocyanate group, thus obtaining a polyisocyanate curing agent solution (HE-24) with a nonvolatile concentration of 90%. The concentration of isocyanate groups in the curing agent solution (HE-24) was 3.39 mmol/g (3.77 mmol/g in terms of nonvolatile content).

### Example 25

The same procedure as in Example 17 was repeated, except that bis(2-ethylhexyl)phosphoric acid was not added, to obtain 222 parts of a crude 3-acetamidopropyltrimethoxysilane (a compound represented by formula (7) wherein R² is methyl, R³ is propylene, R⁷ is methyl, and n is 0) as an N-acylated intermediate. 62 parts of propylene glycol monomethyl ether acetate and 500 parts of "Duranate TSA-100" were placed into another flask under a nitrogen atmosphere, and the resulting mixture was stirred at room temperature. 55 parts of a crude 3-acetamidopropyltrimethoxysilane was added thereto, and the mixture was heated at 110°C for 7 hours to adduct a secondary amide group to an isocyanate group, thus obtaining a polyisocyanate curing agent solution (HE-25) with a nonvolatile concentration of 90%. The concentration of isocyanate groups in the curing agent solution (HE-25) was 3.13 mmol/g (3.48 mmol/g in terms of nonvolatile content).

### Example 26

206 parts of methyl 3,3,5-trimethylhexanoate having two hydrogen atoms at the α-position, which is a branched saturated ester, and 179 parts of 3-aminopropyltrimethoxysilane were placed in a flask under a nitrogen atmosphere and stirred at room temperature. 1.16 parts of a 28% sodium methoxide solution in methanol was added as a catalyst, and the resulting mixture was stirred, heated to 70°C, and aged for 2 days. The conversion of 3-aminopropyltrimethoxysilane was 71%, and methanol was produced as a by-product in an amount approximately equimolar to that of the reacted 3-aminopropyltrimethoxysilane. After 2.2 parts of bis(2-ethylhexyl)phosphoric acid was then added as an acidic compound, the resulting mixture was concentrated by removing methanol and the remaining methyl acetate under reduced pressure at 50°C to 70°C to obtain 365 parts of a crude 3-(3,3,5-trimethylhexanamido)propyltrimethoxysilane containing a catalyst-derived residue (a compound represented by formula (7) wherein R² is methyl, R³ is propylene, R⁷ is 2,2,4-trimethylpentyl, and n is 0) as an N-acylated intermediate. Because this product was not purified by distillation, a large amount of 3-aminopropyltrimethoxysilane derived from the raw material remained, and the product was a mixture of 71 mol% of 3-(3,3,5-trimethylhexanamido)propyltrimethoxysilane and 29 mol% of 3-aminopropyltrimethoxysilane. 65 parts of propylene glycol monomethyl ether acetate and 500 parts of "Duranate TSA-100" were placed into another flask under a nitrogen atmosphere and stirred at room temperature. 90 parts of a crude 3-(3,3,5-trimethylhexanamido)propyltrimethoxysilane was added thereto, and the mixture was heated at 110°C for 7 hours to adduct a secondary amide group to an isocyanate group, thus obtaining a polyisocyanate curing agent solution (HE-26) with a nonvolatile concentration of 90%. The concentration of isocyanate groups in the curing agent solution (HE-26) was 3.25 mmol/g (3.61 mmol/g in terms of nonvolatile content).

### Comparative Example 9

56 parts of butyl acetate and 500 parts of "Duranate TSA-100" were placed into another flask under a nitrogen atmosphere to obtain a polyisocyanate curing agent solution (HR-9) with a nonvolatile concentration of 90%. The concentration of isocyanate groups in the curing agent solution (HR-9) was 4.46 mmol/g (4.96 mmol/g in terms of nonvolatile content).

### Comparative Example 10

248 parts of mineral spirits, 198 parts of "Swasol 1000" (product name, produced by Maruzen Petrochemical Co., Ltd., a naphtha-based solvent), and 500 parts of "Duranate TSA-100" were placed into another flask under a nitrogen atmosphere, and the resulting mixture was stirred at room temperature. When 44.3 parts of 3-aminopropyltrimethoxysilane was added dropwise thereto, a curing agent solution (HR-10) was obtained; however, since a starch syrup-like substance began to precipitate, the evaluation was discontinued.

**Table 3**

| Polyisocyanate curing agent solutions | | | Examples | | | | | | | | | | Comparative Examples | |
|---|---|---|---|---|---|---|---|---|---|---|---|---|---|---|
| | | | 17 | 18 | 19 | 20 | 21 | 22 | 23 | 24 | 25 | 26 | 9 | 10 |
| | | | HE-17 | HE-18 | HE-19 | HE-20 | HE-21 | HE-22 | HE-23 | HE-24 | HE-25 | HE-26 | HR-9 | HR-10 |
| Alkoxysilane having an amino group | 3-Aminopropyltrimethoxysilane | | 179 | 179 | 179 | 179 | 179 | 179 | 179 | 179 | 179 | 179 | | 44.3 |
| Saturated carboxylic acid alkyl esters | Esters of linear carboxylic acid with two or more hydrogen atoms at the α-position | Methyl acetate | 89 | 89 | 89 | 89 | | | 96 | | 89 | | | |
| | | Methyl propionate | | | | | | 106 | | | | | | |
| | | Methyl octanoate | | | | | 190 | | | | | | | |
| | Esters of branched carboxylic acid with only two hydrogen atoms at the α-position | Methyl 3,5,5-trimethylhexanoate | | | | | | | | 206 | | 206 | | |
| Catalyst | 28% sodium methoxide-methanol solution | | 0.58 | 0.58 | 0.58 | 0.58 | 1.16 | 0.58 | 0.58 | 1.16 | 0.58 | 1.16 | | |
| Acidic compounds | p-Toluenesulfonic acid | | | 0.57 | | | | | | | | | | |
| | Bis(2-ethylhexyl)phosphate | | 1.1 | | 1.1 | | 2.2 | 1.1 | 1.1 | 2.2 | | 2.2 | | |
| | Dodenylbenzenesulfonic acid | | | | | 1.03 | | | | | | | | |
| Evaluation items | Formation of N-acylated product (*) | | Good | Good | Good | Good | Good | Good | Good | Fair | Good | Fair | - | - |
| | Application of distillation appratus (*) | | No | No | No | No | No | No | Yes | Yes | No | No | - | - |
| | Ease of producing intermediate containing N-acylated product (*) | | AA | AA | AA | AA | AA | AA | A | A | AA | AA | - | - |
| Intermediate containing N-acylated product | Crude N-acylated product containing catalyst-derived residues, obtained only through the concentration step | | 222 | 222 | 222 | 222 | 331 | 236 | - | - | 222 | 365 | - | - |
| | Purified N-acylated product obtained through the concentration step and the distillation step. | | - | - | - | - | - | - | 200 | 170 | - | - | - | - |
| Molar ratio of N-acylated product to 3-aminopropyltrialkoxysilane in the crude N-acylated product or the purified N-acylated product | | | 97/3 | 97/3 | 97/3 | 97/3 | 94/6 | 97/3 | 100/0 | 100/0 | 97/3 | 71/29 | - | - |
| The total amount (mmol) of secondary amide groups and primary amino groups in 1 g of crude N-acylated product or | | | 4.50 | 4.50 | 4.50 | 4.50 | 3.02 | 4.24 | 4.52 | 3.13 | 4.50 | 2.74 | - | - |
| purified N-acylated product | | | | | | | | | | | | | | |
| Organic solvents | Mineral spirits | | 250 | | | | | | | | | | | 248 |
| | Swasol 1000 | | 204 | | | | | | | | | | | 198 |
| | Butyl Acetate | | | 62 | 62 | 62 | 65 | 60 | | 64 | | | 56 | |
| | Propylene glycol monomethyl ether acetate | | | | | | | | 114 | | 62 | 65 | | |
| Polyisocyanates | Duranate TSA-100 | | 500 | 500 | 500 | 500 | 500 | 500 | | 500 | 500 | 500 | 500 | 500 |
| | Sumidur N-3300 | | | | | | | | 500 | | | | | |
| Crude N-acylated product | | | 55 | 55 | 55 | 55 | 82 | 41 | | | 55 | 90 | | |
| Purified N-acylated product | | | | | | | | | 144 | 79 | | | | |
| Molar ratio of secondary amide group and primary amino group to isocyanate group | | | 10/100 | 10/100 | 10/100 | 10/100 | 10/100 | 7/100 | 25/100 | 10/100 | 10/100 | 10/100 | 0/100 | 10/100 |
| Molar ratio of silyl group to isocyanate group | | | 10/100 | 10/100 | 10/100 | 10/100 | 10/100 | 7/100 | 25/100 | 10/100 | 10/100 | 10/100 | 0/100 | 10/100 |
| Amount of isocyanate groups in 1 g of curing agent solution (mmol) | | | 2.14 | 3.49 | 3.49 | 3.49 | 3.18 | 3.67 | 2.50 | 3.39 | 3.13 | 3.25 | 4.46 | C Evaluation discontinued due to precipitation of starch syrup-like substance. |
| Residual NCO (%) in the curing agent solution after 3 months at 20°C | | | 98% | 98% | 98% | 98% | 97% | 98% | 99% | 98% | 94% | 97% | 100% | |
| Isocyanate group stability at 20° C (*) | | | Good | Good | Good | Good | Good | Good | Good | Good | Fair | Good | Good | |

### Evaluation Items

### (*) Formation of N-Acylated Product

The yield (%) of N-acylated products in Examples 17 to 26 was calculated and evaluated according to the following criteria. In the table, Good, Fair, and Poor have the following meanings. The higher the yield (%), the better.
Good: The yield was 80% or more.
Fair: The yield was 30% or more and less than 80%.
Poor: The yield was less than 30%.

### (*) Ease of Producing Intermediate Containing N-Acylated Product

The ease of producing the polyisocyanate curing agent solutions obtained in Examples 17 to 26 was evaluated according to the following criteria. AA and A were determined as passed. In the "Application of distillation apparatus" column, "Yes" means that a distillation apparatus was used, and "No" means that no distillation apparatus was used.
AA: The intermediate was producible without using a distillation apparatus.
A: The intermediate was producible by using a distillation apparatus.
B: The intermediate was difficult to produce even with the use of a distillation apparatus due to low yield of the N-acylated product.
(*) Isocyanate Group Stability at 20°C

The residual NCO (%) in the polyisocyanate curing agent solutions obtained in Examples 17 to 26 and Comparative Example 9 after storage at 20°C for 3 months was measured in the same manner as in Example 1, and evaluated according to the following criteria. The higher the residual NCO (%), the better.
Good: 95% or more.
Fair: 90% or more and less than 95%.
Poor: less than 90%.

### Production of Clear Coatings

### Examples 27 to 57 and Comparative Examples 11 to 18

The main agents were prepared according to the formulations shown in Tables 4, 5, and 6 below and mixed with polyisocyanate curing agent solutions (HE-1) to (HE-26), (HR-1) to (HR-3), (HR-5) to (HR-7), and (HR-9), which were allowed to stand for 3 days after production, to obtain clear coatings (U-1) to (U-41).

Similarly, old polyisocyanate curing agent solutions (HE-1) to (HE-7) and (HR-3), which were allowed to stand for 12 months after production, were mixed with the main agents shown in Table 4 to produce clear coatings (U'-1) to (U'-9) and (U'-12).

Further, old polyisocyanate curing agent solutions (HE-8) to (HE-16) and (HR-5) to (HR-7), which were allowed to stand for 3 months after production, were mixed with the main agents shown in Table 5 to produce clear coatings (U'-13) to (U'-26).

Similarly, polyisocyanate curing agent solutions (HE-8) to (HE-16) and (HR-7), which was stored in a sealed state under low temperature conditions at 5°C for 2 weeks after production, were mixed with the main agents shown in Table 5 to produce clear coatings (U"-13) to (U"-23) and (U"-26).

Similarly, old polyisocyanate curing agent solutions (HE-17) to (HE-26) and (HR-9), which were allowed to stand for 3 months after production, were mixed with the main agents shown in Table 6 to produce clear coatings (U'-27) to (U'-41).

Each numerical value shown in Tables 4, 5 and 6 does not indicate the mass of the nonvolatile content, but the total mass including the volatile content.

**Table 4: Each numerical value shown in the table indicates a mass including the volatile content.**

| Clear coatings | | | Examples | | | | | | | | | Comparative Examples | | |
|---|---|---|---|---|---|---|---|---|---|---|---|---|---|---|
| | | | 27 | 28 | 29 | 30 | 31 | 32 | 33 | 34 | 35 | 11 | 12 | 13 |
| Main agent components | Polyol | Polyol Solution 1 (Note 4) | 90 | | | 100 | | 90 | | | 90 | 90 | | 100 |
| | | Polyol Solution 2 (Note 5) | | 100 | 90 | | 100 | | 100 | | | | 90 | |
| | Aspartic acid ester 1 (Note 6) | | | | | | | | | 90 | 9 | | | |
| | Catalyst | NEOSTANN U-830 (Note 7) | 0.16 | 0.30 | 0.04 | 0.02 | 0.30 | 0.16 | 0.30 | | 0.02 | 0.16 | 0.30 | 0.02 |
| | Organic Solvents | Mineral spirits | 10 | 10 | 10 | 10 | 10 | 10 | 10 | | | 10 | 10 | 10 |
| | | Butyl Acetate | | | | | | | | 10 | 10 | | | |
| | | HE-1 | 37.3 | | | | | | | | | | | |
| | | HE-2 | | 21.6 | | | | | | | | | | |
| | | HE-3 | | | 11.9 | | | | | | | | | |
| Curing agent component | Polyisocyanate curing agent solution | HE-4 | | | | 22 | | | | 154 | 35.2 | | | |
| | | HE-5 | | | | | 21.8 | | | | | | | |
| | | HE-6 | | | | | | 37 | | | | | | |
| | | HE-7 | | | | | | | 20.8 | | | | | |
| | | HR-1 | | | | | | | | | | 36.6 | | |
| | | HR-2 | | | | | | | | | | | 19.4 | |
| | | HR-3 | | | | | | | | | | | | 17 |
| Equivalent ratio of NCO groups to active hydrogen groups | | | 1.2 | 1.2 | 1.2 | 1.2 | 1.2 | 1.2 | 1.2 | 1.0 | 1.2 | 1.2 | 1.2 | 1.2 |
| | Curing agent solution 3 days after production | Sample name | U-1 | U-2 | U-3 | U-4 | U-5 | U-6 | U-7 | U-8 | U-9 | U-10 | U-11 | U-12 |
| | | Curability | A | A | A | A | A | A | A | A | A | A | A | A |
| | | Adhesion (to iron surface) | A | A | A | A | A | A | A | A | A | A | A | D |
| | | Water-resistant adhesion (to iron surface) | A | A | A | A | A | A | A | A | A | A | A | D |
| | | Adhesion (to aluminum surface) | A | A | A | A | A | A | A | A | A | A | A | C |
| Performance evaluation | | Water-resistant adhesion (to aluminum surface) | A | A | A | A | A | A | A | A | A | A | A | A |
| | Curing agent solution 12 months after the production | Sample name | U'-1 | U'-2 | U'-3 | U'-4 | U'-5 | U'-6 | U'-7 | U'-8 | U'-9 | Separation of curing agent solution, Evaluation discontinued | Separation of curing agent solution, Evaluation discontinued | U'-12 |
| | | Curability | A | A | A | A | A | A | A | A | A | | | A |
| | | Adhesion (to iron surface) | A | A | A | A | A | A | A | A | A | | | D |
| | | Water-resistant adhesion (to iron surface) | A | A | A | A | A | A | A | A | A | | | D |
| | | Adhesion (to aluminum surface) | A | A | A | A | A | A | A | A | A | | | C |
| | | Water-resistant adhesion (to aluminum surface) | A | A | A | A | A | A | A | A | A | | | A |

**Table 5: Each numerical value shown in the table indicates a mass including the volatile content.**

| Clear coatings | | | Examples | | | | | | | | | | | Comparative Examples | | |
|---|---|---|---|---|---|---|---|---|---|---|---|---|---|---|---|---|
| | | | 36 | 37 | 38 | 39 | 40 | 41 | 42 | 43 | 44 | 45 | 46 | 14 | 15 | 16 |
| Main agent components | Polyol | Polyol solution 1 (Note 4) | 90 | | | 100 | | 90 | | 100 | 100 | | 90 | 90 | | 100 |
| | | Polyol solution 2 (Note 5) | | 100 | 90 | | 100 | | 100 | | | | | | 90 | |
| | Aspartic acid ester 1 (Note 6) | | | | | | | | | | | 90 | 9 | | | |
| | Catalyst | NEOSTANN U-830 (Note 7) | 0.03 | 0.06 | 0.06 | 0.03 | 0.06 | 0.16 | 0.04 | 0.05 | 0.02 | | 0.02 | 0.03 | 0.10 | 0.03 |
| | Organic solvent | Mineral spirits | 10 | 10 | 10 | 10 | 10 | 10 | 10 | 10 | 10 | | | | | |
| | | Butyl acetate | | | | | | | | | | 10 | 10 | 10 | 10 | 10 |
| | | HE-8 | 22.7 | | | | | | | | | | | | | |
| | | HE-9 | | 12.9 | | | | | | | | | | | | |
| | | HE-10 | | | 12.2 | | | | | | | | | | | |
| | | HE-11 | | | | 26.6 | | | | | | | | | | |
| Curing agent component | Polyisocyanate curing agent solution | HE-12 | | | | | 13.2 | | | | | | | | | |
| | | HE-13 | | | | | | 35.7 | | | | | | | | |
| | | HE-14 | | | | | | | 11.8 | | | 161 | 36.9 | | | |
| | | HE-15 | | | | | | | | 29.3 | | | | | | |
| | | HE-16 | | | | | | | | | 22.9 | | | | | |
| | | HR-5 | | | | | | | | | | | | 23 | | |
| | | HR-6 | | | | | | | | | | | | | 13.1 | |
| | | HR-7 | | | | | | | | | | | | | | 17 |
| Equivalent ratio of NCO groups to active hydrogen groups | | | 1.2 | 1.2 | 1.2 | 1.2 | 1.2 | 1.2 | 1.2 | 1.2 | 1.2 | 1.0 | 1.2 | 1.2 | 1.2 | 1.2 |
| Performanc e evaluation | Curing agent solution allowed to stand at room temperature for 3 days after production | Sample name | U-13 | U-14 | U-15 | U-16 | U-17 | U-18 | U-19 | U-20 | U-21 | U-22 | U-23 | U-24 | U-25 | U-26 |
| | | Curability | A | A | A | A | A | A | A | A | A | A | A | A | A | A |
| | | Adhesion (to iron surface) | A | A | A | A | A | A | A | A | A | A | A | A | A | D |
| | | Water-resistant adhesion (to iron surface) | A | A | A | A | A | A | A | A | A | A | A | A | A | D |
| | | Adhesion (to aluminum surface) | A | A | A | A | A | A | A | A | A | A | A | A | A | C |
| | | Water-resistant adhesion (to aluminum surface) | A | A | A | A | A | A | A | A | A | A | A | A | A | A |
| | Curing agent solution allowed to stand at room temperature for 3 months after production | Sample name | U'-13 | U'-14 | U'-15 | U'-16 | U'-17 | U'-18 | U'-19 | U'-20 | U'-21 | U'-22 | U'-23 | U'-24 | U'-25 | U'-26 |
| | | Curability | A | A | A | A | A | A | A | A | A | A | A | A | A | A |
| | | Adhesion (to iron surface) | A | A | A | A | A | A | A | A | A | A | A | A | A | D |
| | | Water-resistant adhesion (to iron surface) | A | A | A | A | A | A | A | A | A | A | A | A | A | D |
| | | Adhesion (to aluminum surface) | A | A | A | A | A | A | A | A | A | A | A | A | A | C |
| | | Water-resistant adhesion (to aluminum surface) | A | A | A | A | A | A | A | A | A | A | A | A | A | A |
| | Curing agent solution allowed to stand at 5°C for 2 weeks after production | Sample name | U"-13 | U"-14 | U"-15 | U"-16 | U"-17 | U"-18 | U"-19 | U"-20 | U"-21 | U"-22 | U"-23 | Evaluation discontinued due to cloudiness of the curing agent | Evaluation discontinued due to cloudiness of the curing agent | U"26 |
| | | Curability | A | A | A | A | A | A | A | A | A | A | A | | | A |
| | | Adhesion (to iron surface) | A | A | A | A | A | A | A | A | A | A | A | | | D |
| | | Water-resistant adhesion (to iron surface) | A | A | A | A | A | A | A | A | A | A | A | | | D |
| | | Adhesion (to aluminum surface) | A | A | A | A | A | A | A | A | A | A | A | | | C |
| | | Water-resistant adhesion (to aluminum surface) | A | A | A | A | A | A | A | A | A | A | A | | | A |

**Table 6: Each numerical value shown in the table indicates a mass including the volatile content.**

| Clear coatings | | | Examples | | | | | | | | | | | | | Comparative Examples | |
|---|---|---|---|---|---|---|---|---|---|---|---|---|---|---|---|---|---|
| | | | 47 | 48 | 49 | 50 | 51 | 52 | 53 | 54 | 55 | 56 | 57 | 58 | 59 | 17 | 18 |
| Main agent components | Polyol | Polyol Solution 1 (Note 4) | 90 | | | | | | | | | | 90 | | | 90 | |
| | | Polyol Solution 2 (Note 5) | | 100 | | | | | | | | | | | | | |
| | Aspartic acid ester 1 (Note 6) | | | | 90 | 90 | | | 90 | | | | 9 | | 90 | | |
| | Aspartic acid ester 2 (Note 8) | | | | | | 90 | 90 | | 90 | 90 | 90 | | 90 | | | 90 |
| | Catalyst | NEOSTANN U-830 (Note 7) | 0.03 | 0.06 | | | | | | | | | 0.02 | | | 0.03 | |
| | Organic solvents | Mineral spirits | 10 | 10 | | | | | | | | | | | | | |
| | | Butyl acetate | | | 10 | 10 | 10 | 10 | 10 | 10 | 10 | 10 | 10 | 10 | 10 | 10 | 10 |
| | | HE-17 | 19.3 | 11 | | | | | | | | | | | | | |
| | | HE-18 | | | 101 | | | | | | | | | | | | |
| | | HE-19 | | | | 101 | 104 | | | | | | | | | | |
| | | HE-20 | | | | | | 104 | | | | | | | | | |
| Curing agent component | Polyisocyanate curing agent solution | HE-21 | | | | | | | 116 | | | | | | | | |
| | | HE-22 | | | | | | | | 98.5 | | | 24.6 | | | | |
| | | HE-23 | | | | | | | | | 158 | | | | | | |
| | | HE-24 | | | | | | | | | | 102 | | | | | |
| | | HE-25 | | | | | | | | | | | | 126 | | | |
| | | HE-26 | | | | | | | | | | | | | 118 | | |
| | | HR-9 | | | | | | | | | | | | | | 9.3 | 81 |
| Equivalent ratio of NCO groups to active hydrogen groups | | | 1.20 | 1.20 | 1.10 | 1.10 | 1.10 | 1.10 | 1.15 | 1.10 | 1.20 | 1.05 | 1.20 | 1.20 | 1.20 | 1.20 | 1.10 |
| | Curing agent solution allowed to stand at room temperature for 3 days after production | Sample name | U-27 | U-28 | U-29 | U-30 | U-31 | U-32 | U-33 | U-34 | U-35 | U-36 | U-37 | U-38 | U-39 | U-40 | U-41 |
| | | Curability | A | A | A | A | A | A | A | A | A | A | A | A | A | A | A |
| | | Adhesion (to iron surface) | A | A | A | A | A | A | A | A | A | A | A | A | A | D | A |
| | | Water-resistant adhesion (to iron surface) | A | A | A | A | A | A | A | A | A | A | A | A | A | D | C |
| | | Adhesion (to aluminum surface) | A | A | A | A | A | A | A | A | A | A | A | A | A | C | C |
| Performance evaluation | | Water-resistant adhesion (to aluminum surface) | A | A | A | A | A | A | A | A | A | A | A | A | A | A | C |
| | Curing agent solution allowed to stand at room temperature for 3 months after the production | Sample name | U'-27 | U'-28 | U'-29 | U'-30 | U'-31 | U'-32 | U'-33 | U'-34 | U'-35 | U'-36 | U'-37 | U'-38 | U'-39 | U'-40 | U'-41 |
| | | Curability | A | A | A | A | A | A | A | A | A | A | A | A | A | A | A |
| | | Adhesion (to iron surface) | A | A | A | A | A | A | A | A | A | A | A | A | A | D | A |
| | | Water-resistant adhesion (to iron surface) | A | A | A | A | A | A | A | A | A | A | A | A | A | D | C |
| | | Adhesion (to aluminum surface) | A | A | A | A | A | A | A | A | A | A | A | A | A | C | C |
| | | Water-resistant adhesion (to aluminum surface) | A | A | A | A | A | A | A | A | A | A | A | A | A | A | C |

| | | | | | | | | | | | | | | | | | |
|---|---|---|---|---|---|---|---|---|---|---|---|---|---|---|---|---|---|
| Note 4: Polyol solution 1: a copolymer solution containing styrene, i-butyl methacrylate, 2-ethylhexyl acrylate, and hydroxyethyl methacrylate at a ratio of 30/30/30/10, weight average molecular weight: 20,000, hydroxyl value per nonvolatile content: 43 mgKOH/g, nonvolatile concentration: 50%, solvent: a mixture of mineral spirits and "Swasol 1000" at a mass ratio of 1/1 Note 5: Polyol solution 2: a copolymer solution containing styrene, i-butyl methacrylate, 2-ethylhexyl acrylate, hydroxyethyl methacrylate, and acrylic acid at a ratio of 30/35/29/5/1, weight average molecular weight: 20,000, hydroxyl value per nonvolatile content: 22 mgKOH/g, nonvolatile concentration: 50%, solvent: a mixture of mineral spirits and "Swasol 1000" at a mass ratio of 1/1 Note 6: Aspartic acid ester 1: Desmophen NH 1523 LF, produced by Covestro (tetraethyl N,N'-(methylenebis(2-methyl-di-4,1-cyclohexanediyl))-bisaspartate, content: >99%, amine value: 200 mgKOH/g) Note 7: NEOSTANN U-830: trade name, produced by Nitto Kasei Co., Ltd., a dioctyl tin compound Note 8: Aspartic acid ester 2: Desmophen NH 1423 LF, produced by Covestro (tetraethyl N,N'-(methylenebis(di-4,1-cyclohexanediyl))-bisaspartate, content: >99%, amine value: 205 mgKOH/g) | | | | | | | | | | | | | | | | | |

### Performance Evaluation

The clear coatings obtained in the above Examples and Comparative Examples were subjected to the following performance evaluation tests. In these tests, each coating was applied immediately after mixing a main agent and a curing agent.

### (*) Curability

Each clear coating was applied to a glass plate by spreading with a 200 µm applicator, and dried in a chamber at a room temperature of 23°C and a humidity of 50% for 7 days. The obtained coating film was peeled off from the glass plate, wrapped in a 200-mesh stainless steel wire mesh, and immersed in a mixed solution of acetone/methanol (mass ratio = 1/1) for 24 hours. The wire mesh with which the coating film was wrapped was then removed and dried at 100°C for 1 hour. The insoluble content (%) was measured from the mass of the coating film remaining on the wire mesh. Ranks A and rank B were determined as passed, and ranks C and D were determined as failed.
A: The insoluble content was 85% or more.
B: The insoluble content was 70% or more and less than 85%.
C: The insoluble content was 55% or more and less than 70%.
D: The insoluble content was less than 55%.
(*) Adhesion

As substrates, two types of metal plates (ferrous metal: a degreased SPCC-SD (cold-rolled steel plate with a dull finish) metal plate, and non-ferrous metal: a metal plate made by sanding a 5052P aluminum plate with 240 grit sandpaper) (3.2 mm × 70 mm × 150 mm) were prepared. Each clear coating was applied to metal plates by spreading with a 200 µm applicator, and then dried in a chamber at a room temperature of 23°C and a humidity of 50% for 7 days to obtain individual test coated plates.

A cutter was used to cut a grid of 10 squares × 10 squares, a total of 100 squares, with a width of 2 mm, from the coating film, and a peel test was performed 3 times. Specifically, in the peel test, adhesive tape was attached to the squares and then peeled off, and the number of squares that did not peel off was counted. Ranks A and B were determined as passed, and ranks B and C were determined as failed.
A: 100 squares remained.
B: 75 squares or more and 99 squares or less.
C: 51 squares or more and 74 squares or less.
D: 50 squares or less.
(*) Anti-water Adhesion

Two types of metal plates, iron and aluminum, were prepared in the same manner as the metal plates used in the above adhesion test. Each clear coating was applied to both types of the metal plates by spreading with a 200 µm applicator and then dried in a chamber at a room temperature of 23°C and a humidity of 50% for 7 days to obtain individual test coated plates.

Each test coated plate was immersed in 40°C warm water for 3 days, immersed in 20°C water for 1 hour, and then removed. The water on the coating surface of the test plate was wiped off, and the coating film was immediately cut using a cutter into a grid of 10 × 10 squares, for a total of 100 squares, with widths of 2 mm. A peel test was then performed 3 times. Specifically, in the peel test, adhesive tape was attached to the squares and then peeled off, and the number of squares that did not peel off was counted. Ranks A and B were determined as passed, and ranks B and C were determined as failed.
A: 100 squares remained.
B: 75 squares or more and 99 squares or less.
C: 51 squares or more and 74 squares or less.
D: 50 squares or less.

### Production of Single-coat Coatings

### Examples 60 to 92 and Comparative Examples 19 to 26

The main agents were prepared according to the formulations shown in Tables 7, 8, and 9 below, and polyisocyanate curing agent solutions (HE-1) to (HE-26), (HR-1) to (HR-3), (HR-5) to (HR-7), and (HR-9), which were allowed to stand for 3 days, were mixed to obtain single-coat coatings (U-42) to (U-82), respectively.

Similarly, old polyisocyanate curing agent solutions (HE-1) to (HE-7) and (HR-3), which were allowed to stand for 12 months after production, were mixed with the main agents shown in Table 7 to produce single-coat coatings (U'-42) to (U'-50) and (U'-53).

Further, old polyisocyanate curing agent solutions (HE-8) to (HE-16) and (HR-5) to (HR-7), which were allowed to stand for 3 months after production, were mixed with the main agents shown in Table 8 to produce single-coat coatings (U'-54) to (U'-67).

Similarly, polyisocyanate curing agent solutions (HE-8) to (HE-16) and (HR-7) stored in a sealed state under low temperature conditions at 5°C for 2 weeks after preparation were mixed with the main agents shown in Table 8 to produce single-coat coatings (U"-54) to (U"-64) and (U"-67).

Similarly, old polyisocyanate curing agent solutions (HE-17) to (HE-26) and (HR-9), which were allowed to stand for 3 months after production, were mixed with the main agents shown in Table 9 to produce single-coat coatings (U'-68) to (U'-82).

Each numerical value in Tables 7, 8 and 9 does not indicate the mass of the nonvolatile content, but the total mass including the volatile content.

**Table 7 Each numerical value shown in the table indicates a mass including the volatile content.**

| Single-coat coatings | | | Examples | | | | | | | | | Comparative Examples | | |
|---|---|---|---|---|---|---|---|---|---|---|---|---|---|---|
| | | | 60 | 61 | 62 | 63 | 64 | 65 | 66 | 67 | 68 | 19 | 20 | 21 |
| Main agent components | Polyol | Polyol solution 1 (Note 4) | 90 | | | 100 | | 90 | | | 90 | 90 | | 100 |
| | | Polyol solution 2 (Note 5) | | 100 | 90 | | 100 | | 100 | | | | 90 | |
| | Aspartic acid ester 1 (Note 6) | | | | | | | | | 90 | 9 | | | |
| | Pigment content | Anti-rust pigment composition (Note 9) | 5 | 5 | 5 | 5 | 5 | 5 | 5 | 5 | 5 | 5 | 5 | 5 |
| | | Titanium white | 45 | 45 | 45 | 45 | 45 | 45 | 45 | 55 | 55 | 45 | 45 | 45 |
| | Catalyst | NEOSTANN U-830 (Note 7) | 0.16 | 0.30 | 0.04 | 0.02 | 0.30 | 0.16 | 0.30 | | 0.02 | 0.16 | 0.30 | 0.02 |
| | Organic solvents | Mineral spirits | 10 | 10 | 10 | 10 | 10 | 10 | 10 | | | 10 | 10 | 10 |
| | | Butyl acetate | | | | | | | | 20 | 10 | | | |
| Curing agent component | Polyisocyanate curing agent solution | HE-1 | 37.3 | | | | | | | | | | | |
| | | HE-2 | | 21.6 | | | | | | | | | | |
| | | HE-3 | | | 11.9 | | | | | | | | | |
| | | HE-4 | | | | 22 | | | | 154 | 35.2 | | | |
| | | HE-5 | | | | | 21.8 | | | | | | | |
| | | HE-6 | | | | | | 37 | | | | | | |
| | | HE-7 | | | | | | | 20.8 | | | | | |
| | | HR-1 | | | | | | | | | | 36.6 | | |
| | | HR-2 | | | | | | | | | | | 19.4 | |
| | | HR-3 | | | | | | | | | | | | 17 |
| Equivalent ratio of NCO groups to active hydrogen groups | | | 1.2 | 1.2 | 1.2 | 1.2 | 1.2 | 1.2 | 1.2 | 1.0 | 1.2 | 1.2 | 1.2 | 1.2 |
| Performance evaluation | Curing agent solution allowed to stand for 3 days after production | Sample name | U-42 | U-43 | U-44 | U-45 | U-46 | U-47 | U-48 | U-49 | U-50 | U-51 | U-52 | U-53 |
| | | Curability | B | B | B | B | B | B | B | B | B | B | B | B |
| | | Corrosion resistance | A | A | A | A | A | A | A | A | A | C | B | D |
| | | Weather resistance | A | A | A | A | A | A | A | A | A | B | B | B |
| | Curing agent solution allowed to stand for 12 months after production | Sample name | U'-42 | U'-43 | U'-44 | U'-45 | U'-46 | U'-47 | U'-48 | U'-49 | U'-50 | Separation of curing agent solution, Evaluation discontinued | Separation of curing agent solution, Evaluation discontinued | U'-53 |
| | | Curability | B | B | B | B | B | B | B | B | B | | | B |
| | | Corrosion resistance | A | A | A | A | A | A | A | A | A | | | D |
| | | Weather resistance | A | A | A | A | A | A | A | A | A | | | B |

**Table 8 Each numerical value shown in the table indicates a mass including the volatile content.**

| Single-coat coatings | | | Examples | | | | | | | | | | | Comparative Examples | | |
|---|---|---|---|---|---|---|---|---|---|---|---|---|---|---|---|---|
| | | | 69 | 70 | 71 | 72 | 73 | 74 | 75 | 76 | 77 | 78 | 79 | 22 | 23 | 24 |
| Main agent components | Polyol | Polyol solution 1 (Note 4) | 90 | | | 100 | | 90 | | 100 | 100 | | 90 | 90 | | 100 |
| | | Polyol solution 2 (Note 5) | | 100 | 90 | | 100 | | 100 | | | | | | 90 | |
| | Aspartic acid ester 1 (Note 6) | | | | | | | | | | | 90 | 9 | | | |
| | Pigment content | Anti-rust pigment composition (Note 9) | 5 | 5 | 5 | 5 | 5 | 5 | 5 | 5 | 5 | 5 | 5 | 5 | 5 | 5 |
| | | Titanium white | 45 | 45 | 45 | 45 | 45 | 45 | 45 | 45 | 45 | 55 | 55 | 45 | 45 | 45 |
| | Catalyst | NEOSTANN U-830 (Note 7) | 0.03 | 0.06 | 0.06 | 0.03 | 0.06 | 0.16 | 0.04 | 0.05 | 0.02 | | 0.02 | 0.03 | 0.10 | 0.03 |
| | Organic solvents | Mineral spirits | 10 | 10 | 10 | 10 | 10 | 10 | 10 | 10 | 10 | | | 10 | 10 | 10 |
| | | Butyl acetate | | | | | | | | | | 20 | 10 | | | |
| | Polyisocyanate curing agent solution | HE-8 | 22.7 | | | | | | | | | | | | | |
| | | HE-9 | | 12.9 | | | | | | | | | | | | |
| | | HE-10 | | | 12.2 | | | | | | | | | | | |
| | | HE-11 | | | | 26.6 | | | | | | | | | | |
| | | HE-12 | | | | | 13.2 | | | | | | | | | |
| Curing agent component | | HE-13 | | | | | | 35.7 | | | | | | | | |
| | | HE-14 | | | | | | | 11.8 | | | 161 | 36.9 | | | |
| | | HE-15 | | | | | | | | 29.3 | | | | | | |
| | | HE-16 | | | | | | | | | 22.9 | | | | | |
| | | HR-5 | | | | | | | | | | | | 23 | | |
| | | HR-6 | | | | | | | | | | | | | 13.1 | |
| | | HR-7 | | | | | | | | | | | | | | 17 |
| Equivalent ratio of NCO groups to active hydrogen groups | | | 1.2 | 1.2 | 1.2 | 1.2 | 1.2 | 1.2 | 1.2 | 1.2 | 1.2 | 1.0 | 1.2 | 1.2 | 1.2 | 1.2 |
| Performance evaluation | Curing agent solution allowed to stand at room | Sample name | U-54 | U-55 | U-56 | U-57 | U-58 | U-59 | U-60 | U-61 | U-62 | U-63 | U-64 | U-65 | U-66 | U-67 |
| | | Curability | B | B | B | B | B | B | B | B | B | B | B | B | B | B |
| | temperature for 3 days after production | Corrosion resistance | A | A | A | A | A | A | A | A | A | A | A | B | B | D |
| | | Weather resistance | A | A | A | A | A | A | A | A | A | A | A | B | B | B |
| | Curing agent solution allowed to stand at room temperature for 3 months after production | Sample name | U'-54 | U'-55 | U'-56 | U'-57 | U'-58 | U'-59 | U'-60 | U'-61 | U'-62 | U'-63 | U'-64 | U'-65 | U'-66 | U'-67 |
| | | Curing agent | B | B | B | B | B | B | B | B | B | B | B | B | B | B |
| | | Corrosion resistance | A | A | A | A | A | A | A | A | A | A | A | B | B | D |
| | | Weather resistance | A | A | A | A | A | A | A | A | A | A | A | B | B | B |
| | Curing agent solution allowed to stand at 5°C for 2 weeks after production | Sample name | U"-54 | U"-55 | U"-56 | U"-57 | U"-58 | U"-59 | U"-60 | U"-61 | U"-62 | U"-63 | U"-64 | Evaluation discontinued due to the cloudiness of the curing agent | Evaluation discontinued due to the cloudiness of the curing agent | U"-67 |
| | | Curability | B | B | B | B | B | B | B | B | B | B | B | | | B |
| | | Corrosion resistance | A | A | A | A | A | A | A | A | A | A | A | | | D |
| | | Weather resistance | A | A | A | A | A | A | A | A | A | A | A | | | B |

**Table 9 Each numerical value shown in the table indicates a mass including the volatile content.**

| Single-coat coatings | | | Examples | | | | | | | | | | | | | Comparative Examples | |
|---|---|---|---|---|---|---|---|---|---|---|---|---|---|---|---|---|---|
| | | | 80 | 81 | 82 | 83 | 84 | 85 | 86 | 87 | 88 | 89 | 90 | 91 | 92 | 25 | 26 |
| Main agent components | Polyol | Polyol solution 1 (Note 4) | 90 | | | | | | | | | | 90 | | | 90 | |
| | | Polyol solution 2 (Note 5) | | 100 | | | | | | | | | | | | | |
| | Aspartic acid ester 1 (Note 6) | | | | 90 | 90 | | | 90 | | | | 9 | | 90 | | |
| | Aspartic acid ester 2 (note 8) | | | | | | 90 | 90 | | 90 | 90 | 90 | | 90 | | | 90 |
| | Pigment content | Anti-rust pigment composition (Note 9) | 5 | 5 | 5 | 5 | 5 | 5 | 5 | 5 | 5 | 5 | 5 | 5 | 5 | 5 | 5 |
| | | Titanium White | 45 | 45 | 55 | 55 | 55 | 55 | 55 | 55 | 55 | 55 | 55 | 55 | 55 | 45 | 45 |
| | Catalyst | NEOSTANN U-830 (Note 7) | 0.03 | 0.06 | | | | | | | | | 0.02 | | | 0.03 | |
| | Organic solvent | Mineral spirits | 10 | 10 | | | | | | | | | | | | | |
| | | Butyl acetate | | | 20 | 20 | 20 | 20 | 20 | 20 | 20 | 20 | 10 | 10 | 10 | 10 | 20 |
| Curing agent component | | HE-17 | 19.3 | 11 | | | | | | | | | | | | | |
| | | HE-18 | | | 101 | | | | | | | | | | | | |
| | | HE-19 | | | | 101 | 104 | | | | | | | | | | |
| | | HE-20 | | | | | | 104 | | | | | | | | | |
| | Polyisocyanate curing agent solution | HE-21 | | | | | | | 116 | | | | | | | | |
| | | HE-22 | | | | | | | | 98.5 | | | 24.6 | | | | |
| | | HE-23 | | | | | | | | | 158 | | | | | | |
| | | HE-24 | | | | | | | | | | 102 | | | | | |
| | | HE-25 | | | | | | | | | | | | 126 | | | |
| | | HE-26 | | | | | | | | | | | | | 118 | | |
| | | HR-9 | | | | | | | | | | | | | | 9.3 | 81 |
| Equivalent ratio of NCO groups to active hydrogen groups | | | 1.20 | 1.20 | 1.1 | 1.10 | 1.10 | 1.1.0 | 1.05 | 1.15 | 1.10 | 1.20 | 1.20 | 1.20 | 1.20 | 1.20 | 1.10 |
| Performance evaluation | Curing agent solution allowed | Sample name | U-68 | U-69 | U-70 | U-71 | U-72 | U-73 | U-74 | U-75 | U-76 | U-77 | U-78 | U-79 | U-80 | U-81 | U-82 |
| | to stand at room temperature for 3 days after production | Curability | B | B | B | B | B | B | B | B | B | B | B | B | B | B | B |
| | | Corrosion resistance | A | A | A | A | A | A | A | A | A | A | A | B | B | D | C |
| | | Weather resistance | A | A | A | A | A | A | A | A | A | A | A | A | B | B | B |
| | Curing agent solution allowed to stand at room temperature for 3 months after production | Sample name | U'-68 | U'-69 | U'-70 | U'-71 | U'-72 | U'-73 | U'-74 | U'-75 | U'-76 | U'-77 | U'-78 | U'-79 | U'-80 | U'-81 | U'-82 |
| | | Curability | B | B | B | B | B | B | B | B | B | B | B | B | B | B | B |
| | | Corrosion resistance | A | A | A | A | A | A | A | A | A | A | A | B | B | D | C |
| | | Weather resistance | A | A | A | A | A | A | A | A | A | A | A | A | B | B | B |

| | | | | | | | | | | | | | | | | | |
|---|---|---|---|---|---|---|---|---|---|---|---|---|---|---|---|---|---|
| Note 9: Anti-rust pigment composition: magnesium phosphate/"Silysia 710" (trade name, produced by silica, Fuji Silysia Chemical Co., Ltd., silica)/calcium silicate = 50/30/20 a mixed and modified product. | | | | | | | | | | | | | | | | | |

### Performance Evaluation

### (*) Curability:

Curability was tested in the same manner as the curing test using the clear coatings and evaluated according to the following criteria.

### (*) Corrosion Resistance:

Single-coat coatings were prepared by mixing a main agent and a curing agent. Each single-coat coating was applied to a zinc phosphate-treated SPCC steel plate (size 3.2 mm x 70 mm x 150 mm) within 30 minutes from the preparation by using a blush in a coating amount of 100 g/m². After the coated plate was allowed to age at 20°C for 7 days, a cut of 8 cm in length was made with a cutter down to the base material to prepare a test coated plate. Each test coated plate thus obtained was tested in a 5% salt spray tester at a temperature of 35°C for 240 hours, and then the appearance of the test plates was observed and evaluated on a four-point scale.
A: The maximum width of rust that progressed from the cut part (on one side) was less than 15 mm; no abnormalities in the general part.
B: The maximum width of rust that progressed from the cut part (on one side) was 15 mm or more and less than 20 mm; no abnormalities in the general part.
C: The maximum width of the rust that progressed from the cut part (on one side) was less than 20 mm; however, blistering and rusting occurred in the general part.
D: The maximum width of rust that progressed from the cut part (on one side) exceeded 20 mm, and blistering and rusting occurred in the general part.

### (*) Weather Resistance

Single-coat coatings were prepared by mixing a main agent and a curing agent. Each single-coat coating was applied to a zinc phosphate-treated SPCC steel plate within 30 minutes from the preparation by using a blush in a coating amount of 100 g/m². The coated plate was allowed to age at 20°C for 7 days to obtain a test coated plate.

After each test coated plate thus obtained was exposed to light for 300 hours in accordance with the accelerated weather resistance test of JIS K 5600-7-7 (xenon lamp method), the test coating plate was evaluated according to the following criteria.
A: As compared to the initial, no change in luster was observed.
B: A change in luster was observed, but only to a moderate level.
C: A clear change in luster was observed as compared to the initial.
D: A significant change in luster was observed as compared to the initial.

## Claims

1. A modified polyisocyanate for use with an active-hydrogen-containing compound as a curing agent for coatings,
the modified polyisocyanate being a reaction product formed from components comprising, as starting materials, a primary amino group-containing alkoxysilane (a1), an unsaturated carboxylic acid alkyl ester (a2) or a saturated carboxylic acid alkyl ester (a3), and a polyisocyanate (a4),
wherein the unsaturated carboxylic acid alkyl ester (a2) is at least one member selected from the group consisting of a branched alkyl ester of an unsaturated dicarboxylic acid (a2-1), and
a branched alkyl ester or alkyl ester with a cyclic structure, each optionally containing a heteroatom, of an unsaturated monocarboxylic acid (a2-2).

2. The modified polyisocyanate according to claim 1,
wherein the primary amino group-containing alkoxysilane (a1) is a compound represented by the following formula (1): 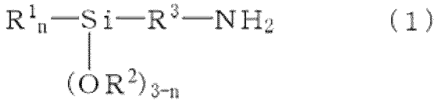 wherein in formula (1),
R¹ and R² are the same or different, and each represents a C₁-C₁₈ optionally substituted linear or branched alkyl group, cycloalkyl group, alkenyl group, cycloalkenyl group, alkynyl group,
cycloalkynyl group, aryl group, or heteroaryl group, R³ is a C₁-C₈ linear or branched alkylene group, and n is an integer of 0 to 2.

3. The modified polyisocyanate according to claim 1, wherein the branched alkyl ester of an unsaturated dicarboxylic acid (a2-1) is a compound represented by the following formula (2):
R⁴O-C(=O)-HC=CH-C(=O)-OR⁵ (2)
wherein in formula (2),
R⁴ and R⁵ are the same or different, and each represents a C₁-C₈ branched alkyl group.

4. The modified polyisocyanate according to claim 1, wherein the branched alkyl ester or alkyl ester with a cyclic structure, each optionally containing a heteroatom, of an unsaturated monocarboxylic acid (a2-2) is a compound represented by the following formula (3):
H₂C=CH-C(=O)-OR⁶ (3)
wherein in formula (3),
R⁶ is a C₃-C₁₈ branched alkyl group or alkyl group with a cyclic structure, or a C₁-C₁₈ group obtained by incorporating a heteroatom into the molecule of an alkyl group or arylalkyl group with a branched or cyclic structure.

5. The modified polyisocyanate according to claim 1, wherein the saturated carboxylic acid alkyl ester (a3) is a compound represented by the following formula (4):
R⁷-C(=O)-OR⁸ (4)
wherein in formula (4),
R⁷ and R⁸ are the same or different, and each represents a C₁-C₁₈ alkyl group having no unsaturated group, or a C₁-C₁₈ group that is obtained by incorporating a heteroatom into the molecule of an alkyl group and that has no unsaturated group.

6. The modified polyisocyanate according to claim 1, having a structure in which a secondary amino group of an N-modified alkoxysilane obtained by adducting a primary amino group of the alkoxysilane (a1) to an unsaturated carbon-carbon bond of the unsaturated carboxylic acid alkyl ester (a2) is adducted to at least one isocyanate group of the polyisocyanate (a4).

7. The modified polyisocyanate according to claim 1, having a structure in which a secondary amide group of an N-modified alkoxysilane obtained by reacting a primary amino group of the alkoxysilane (a1) with an ester group of the saturated carboxylic acid alkyl ester (a3) is adducted to at least one isocyanate group of the polyisocyanate (a4).

8. The modified polyisocyanate according to claim 6,
wherein the unsaturated carboxylic acid alkyl ester (a2) is the branched alkyl ester of an unsaturated dicarboxylic acid (a2-1), and the N-modified alkoxysilane is a compound represented by the following formula (5): 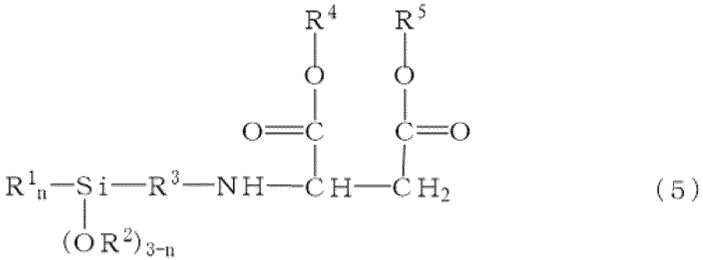
wherein in formula (5),
R¹ and R² are the same or different, and each represents a C₁-C₁₈ optionally substituted linear or branched alkyl group, cycloalkyl group, alkenyl group, cycloalkenyl group, alkynyl group,
cycloalkynyl group, aryl group, or heteroaryl group, R³ is a C₁-C₈ linear or branched alkylene group, R⁴ and R⁵ are the same or different, and each represents a C₁-C₈ branched alkyl group, and n is an integer of 0 to 2.

9. The modified polyisocyanate according to claim 7,
wherein the reaction ratio of the N-modified alkoxysilane having a secondary amino group to the polyisocyanate (a4) is such that the amount of the secondary amino group is 40 mol or less relative to 100 mol of the isocyanate groups.

10. The modified polyisocyanate according to claim 6,
wherein the unsaturated carboxylic acid alkyl ester (a2) is the branched alkyl ester or alkyl ester with a cyclic structure, each optionally containing a heteroatom, of an unsaturated monocarboxylic acid (a2-2), and the N-modified alkoxysilane is a compound represented by the following formula (6): 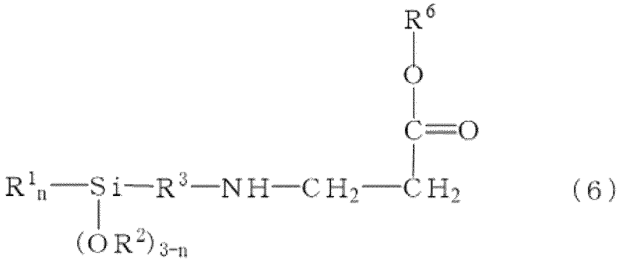
wherein in formula (6),
R¹ and R² are the same or different, and each represents a C₁-C₁₈ optionally substituted linear or branched alkyl group, cycloalkyl group, alkenyl group, cycloalkenyl group, alkynyl group,
cycloalkynyl group, aryl group, or heteroaryl group, R³ is a C₁-C₈ linear or branched alkylene group, R⁶ is a C₁-C₁₈ alkyl group with a branched or cyclic structure, or a C₁-C₁₈ group obtained by incorporating a heteroatom into the molecule of an alkyl group or arylalkyl group with a branched or cyclic structure, and n is an integer of 0 to 2.

11. The modified polyisocyanate according to claim 8,
wherein the reaction ratio of a mixture containing the N-modified alkoxysilane having a secondary amino group to the polyisocyanate (a4) is such that the total mole number of the primary amino group and the secondary amino group is 40 mol or less relative to 100 mol of the isocyanate groups.

12. The modified polyisocyanate according to claim 7,
wherein the N-modified alkoxysilane obtained by reacting the alkoxysilane (a1) with the saturated carboxylic acid alkyl ester (a3) is an N-acylated product having a secondary amide group represented by the following formula (7): 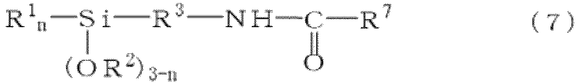
wherein in formula (7),
R¹ and R² are the same or different, and each represents a C₁-C₁₈ optionally substituted linear or branched alkyl group, cycloalkyl group, alkenyl group, cycloalkenyl group, alkynyl group,
cycloalkynyl group, aryl group, or heteroaryl group, R³ is a C₁-C₈ linear or branched alkylene group, n is an integer of 0 to 2, and R⁷ is a C₁-C₁₈ alkyl group having no unsaturated group, or a C₁-C₁₈ group that is obtained by incorporating a heteroatom into the molecule of an alkyl group or arylalkyl group and that has no unsaturated group.

13. The modified polyisocyanate according to claim 1, which is produced by
step (1) of reacting the primary amino group-containing alkoxysilane (a1) with the saturated carboxylic acid alkyl ester (a3) in the presence of a basic catalyst;
step (2) of adding an acidic compound;
step (3) of removing part or all of an alcohol formed as a by-product to prepare an intermediate containing an N-acylated product represented by the following formula (7); and
step (4) of reacting the intermediate with the polyisocyanate (a4); 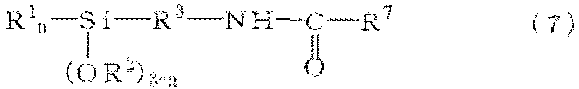 wherein in formula (7),
R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group, R³ is a C₁-C₈ linear or branched alkylene group, n is an integer of 0 to 2, and R⁷ is a C₁-C₁₈ alkyl group having no unsaturated group, or a C₁-C₁₈ group that is obtained by incorporating a heteroatom into the molecule of an alkyl group and that has no unsaturated group.

14. The modified polyisocyanate according to claim 12, wherein the reaction ratio of the N-acylated product to the polyisocyanate (a4) is such that the total mole number of the secondary amide group and the primary amino group is 40 mol or less relative to 100 mol of the isocyanate groups.

15. A method for producing the modified polyisocyanate of claim 1, comprising:
step (1) of reacting a primary amino group-containing alkoxysilane (a1) with a saturated carboxylic acid alkyl ester (a3) in the presence of a basic catalyst;
step (2) of adding an acidic compound;
step (3) of removing part or all of an alcohol formed as a by-product to prepare an intermediate containing an N-acylated product represented by the following formula (7); and
step (4) of reacting the intermediate with a polyisocyanate (a4); 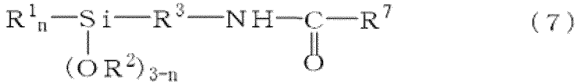 wherein in formula (7),
R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group, R³ is a C₁-C₈ linear or branched alkylene group, n is an integer of 0 to 2, and R⁷ is a C₁-C₁₈ alkyl group having no unsaturated group, or a C₁-C₁₈ group that is obtained by incorporating a heteroatom into the molecule of an alkyl group and that has no unsaturated group.

16. The modified polyisocyanate according to claim 6,
wherein the unsaturated carboxylic acid alkyl ester (a2) is the branched alkyl ester or alkyl ester with a cyclic structure, each optionally containing a heteroatom, of an unsaturated monocarboxylic acid (a2-2), and the reaction of the N-modified alkoxysilane having a secondary amino group with the polyisocyanate (a4) is carried out in the presence of the primary amino group-containing alkoxysilane (a1) and a tertiary amino group-containing compound represented by the following formula (8), which is a by-product: 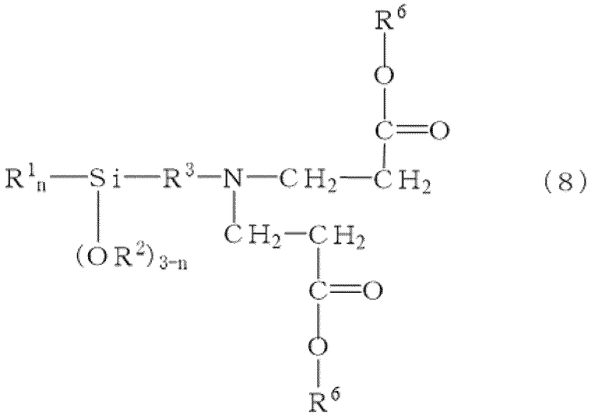 wherein in formula (8),
R¹ and R² are the same or different, and each represents a C₁-C₁₈ optionally substituted linear or branched alkyl group, cycloalkyl group, alkenyl group, cycloalkenyl group, alkynyl group, cycloalkynyl group, aryl group, or heteroaryl group, R³ is a C₁-C₈ linear or branched alkylene group, R⁶ is a C₁-C₁₈ alkyl group with a branched or cyclic structure, or a C₁-C₁₈ group obtained by incorporating a heteroatom into the molecule of an alkyl group or arylalkyl group with a branched or cyclic structure, and n is an integer of 0 to 2.

17. The modified polyisocyanate according to claim 1,
wherein the saturated carboxylic acid alkyl ester (a3) is an alkyl ester of a linear carboxylic acid having a structure in which two or more hydrogen atoms are present at the α-position, or an alkyl ester of a branched carboxylic acid having a structure in which two hydrogen atoms are present at the α-position.

18. The method for producing the modified polyisocyanate according to claim 15, wherein the saturated carboxylic acid alkyl ester (a3) is an alkyl ester of a linear carboxylic acid having two or more hydrogen atoms at the α-position.

19. A coating comprising an active-hydrogen-containing compound and the modified polyisocyanate of any one of claims 1 to 17.

20. The coating according to claim 19, wherein the active-hydrogen-containing compound comprises an acrylic polyol and/or a bisaspartic acid ester derivative.

21. The coating according to claim 19, further comprising at least one member selected from the group consisting of a rust inhibitor, a catalyst, a color pigment, and an extender pigment.

22. The coating according to claim 19, which is a single-coat paint.

23. A protective coating film obtained by curing the coating of claim 19.

24. A coated metal material, comprising the protective coating film of claim 23 on a metal substrate.
